# EUROPEAN PATENT APPLICATION

(11) **EP 4 797 755 A1**
(43) Date of publication of application: **26.08.2026**
(21) Application number: 24884660.2
(22) Date of filing: 28.10.2024
(51) Int. Cl.: H04W 12/06, H04W 12/03, H04W 12/106, H04W 12/60, H04W 52/02

(54) **COMMUNICATION METHOD AND COMMUNICATION APPARATUS**

(30) Priority: 30.10.2023 CN 202311431049
(71) Applicant: Huawei Technologies Co., Ltd., Shenzhen, Guangdong 518129 (CN)
(72) Inventor: GUO, Longhua, Shenzhen, Guangdong 518129 (CN); WU, Rong, Shenzhen, Guangdong 518129 (CN)
(74) Representative: Pfenning, Meinig & Partner mbB
(86) International application number: PCT/CN2024/127782
(87) International publication number: WO 2025/092657

(57) **Abstract**

This application provides a communication method and a communication apparatus. The method includes: A terminal device sends a registration request message to request registration with a network. If authentication between the terminal device and the network succeeds, the terminal device and a network element activate a security context to protect secure communication between them. When an operation requester requests to perform a first operation on the terminal device, the first operation is performed by skipping a NAS SMC procedure or by transferring an operation instruction type during the execution of the NAS SMC procedure. This approach streamlines the entire service procedure, reduces processing complexity, and decreases processing delay while ensuring secure communication.

## Description

This application claims priority to Chinese Patent Application No. 202311431049.8, filed with the China National Intellectual Property Administration on October 30, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In ambient internet of things, a terminal device (for example, a tag) is not equipped with or reliant on a power supply device such as battery. Instead, it obtains energy from the environment using sources such as solar power, radio frequency waves, wind, hydro, or tidal energy. The terminal device supports data sensing, transmission, and distributed computing.

For example, when a server performs an operation (for example, an inventory operation, a read operation, a write operation, or a deactivation operation) on a tag, instructions may be sent through a core network. Currently, a complex interaction procedure is required to establish secure communication between the tag and a core network element, resulting in high power consumption. Therefore, how to reduce the power consumption is a key challenge that needs to be addressed.

### SUMMARY

This application provides a communication method and a communication apparatus to reduce power consumption and simply processing complexity.

According to a first aspect, a communication method is provided. The method may be performed by a terminal device, for example, a mobile phone, a car, an uncrewed aerial vehicle, or a wearable device, or may be a chip or a circuit of the terminal device. In addition, the terminal device may also be referred to as a user equipment. Therefore, the method may be performed by the user equipment, or a chip or a circuit in the user equipment. This is not specifically limited in this application.

The method includes: The terminal device sends a registration request message, where the registration request message is used to request registration with a network, and the registration request message includes an identifier of the terminal device. The terminal device activates a security context when authentication of the network by the terminal device succeeds, where the security context is used to protect secure communication between the terminal device and a network element. The terminal device performs integrity verification on a first message from the network element based on the security context, where the first message is used to request to perform a first operation on the terminal device. The terminal device performs the first operation when the integrity verification succeeds.

Optionally, the method further includes: The terminal device receives the first message from the network element. Timing at which the terminal device receives the first message is not specifically limited in this application. For example, the terminal device may receive the first message after activating the security context, or may receive the first message before activating the security context.

Optionally, the registration request message further includes a security capability of the terminal device. Optionally, the security capability of the terminal device may alternatively be obtained from an operation requester or a unified data management network element. In this obtaining manner, the security capability of the terminal device is transferred through a security-protected interface. This can reduce air interface overheads between the terminal device and the network element, and avoid an interaction failure that may be caused by malicious tampering of an attacker when the terminal device reports the security capability of the terminal device through an air interface, ensuring network communication security. In this application, the security capability of the terminal device is used to determine a security algorithm in the security context.

Optionally, before the terminal device activates the security context, the method further includes: The terminal device determines whether to generate the security context. For example, the terminal device determines, based on an operation instruction type of a first operation instruction, whether to generate the security context; or the terminal device determines, based on a type of the terminal device, whether to generate the security context.

Optionally, before the terminal device activates the security context, the method further includes: The terminal device determines whether to activate the security context. For example, the terminal device determines, based on the operation instruction type of the first operation instruction, whether to activate the security context.

For example, the operation instruction type may indicate one or more of an inventory operation, a read operation, a write operation, a deactivation operation, or another operation. Optionally, the operation instruction type may be carried in the first message. Alternatively, the operation instruction type may not be carried in the first message, and in this case, the operation instruction type and the first message may be sent simultaneously or separately. This is not limited in this application.

Optionally, the first message may indicate the first operation. In this case, the first message may not carry the operation instruction type of the first operation. For example, the first message may be a read operation request message, and is used to read data from a storage area of the terminal device or data collected by the terminal device. In this case, the read operation request message may not carry the operation instruction type of a read operation.

According to the foregoing solution, logic of determining whether to generate the security context and whether to activate the security context is added. This prevents unnecessary generation and/or activation of a security context, thereby reducing computational and storage overhead of the terminal device, avoiding occupation of its limited storage resource, and lowering its power consumption. It should be understood that generation of the security context is correlated with activation of the security context, so that one of generation of the security context and activation of the security context may be selected for determining. For example, when it is determined to generate the security context, activation of the security context also needs to be performed. For example, if it is determined to activate the security context, it indicates that the security context needs to be generated before the security context is activated. Therefore, determining for generation of the security context may be equivalent to determining for activation of the security context. In other words, in this application, determining whether to generate the security context and determining whether to activate the security context may be mutually replaced, or both exist.

It should be noted that timing at which the terminal device activates the security context is not specifically limited in this application. For example, the terminal device immediately generates and activates the security context when authentication of the network succeeds; the terminal device first generates the security context when authentication of the network succeeds, and then activates the security context after receiving the first message; or the terminal device does not generate the security context when authentication of the network succeeds, and generates and activates the security context after receiving the first message.

According to the solution provided in this application, after the terminal device successfully authenticates the network and activates the security context, it may perform, based on the security context, integrity verification on the first message from a network side. This integrity verification ensures the first message, which is used to instruct the terminal device to perform the first operation, is not maliciously tampered with, and the first operation is executed only after the first message is securely protected. On one hand, this solution ensures secure communication between the terminal device and the network element. On the other hand, by decoupling a NAS SMC procedure from activation of the security context, meaning that the NAS SMC procedure is no longer required after authentication of the network by the terminal device, a quantity of information exchanges between the terminal device and the network element is reduced. Compared with the conventional technology in which the terminal device and a core network element sequentially perform an authentication procedure, trigger the NAS SMC procedure, and then execute a service procedure, this implementation allows the first operation to be performed while the network communication security is ensured. It simplifies the entire service procedure, reduces processing complexity, and lowers processing delay.

With reference to the first aspect, in some implementations of the first aspect, that the terminal device activates the security context includes: The terminal device skips the NAS SMC procedure based on a capability of the terminal device and/or the type of the terminal device, and activates the security context. In other words, the terminal device determines, based on the capability of the terminal device and/or the type of the terminal device, to activate the security context when authentication of the network by the terminal device succeeds.

For example, the type of the terminal device may be a tag type, for example, an active tag, a passive tag, or a semi-passive tag. When the type of the terminal device is a passive tag, the terminal device skips the NAS SMC procedure, and activates the security context. This is because a terminal device of a passive tag type has weak storage and compute capabilities and low costs, and may support one integrity security protection algorithm and/or one confidentiality security protection algorithm. Therefore, the terminal device and the network element can uniquely determine the security algorithm used to activate the security context, without negotiating the security algorithm by using the NAS SMC procedure. In other words, the NAS SMC procedure may be skipped, and a context corresponding to integrity security protection and/or a context corresponding to confidentiality security protection may be activated based on the confidentiality protection algorithm and/or the integrity protection algorithm that are/is supported by the terminal device of the passive tag type.

For example, the capability of the terminal device indicates a confidentiality protection algorithm and/or an integrity protection algorithm that are/is supported by the terminal device. When the capability of the terminal device indicates that the terminal device supports one confidentiality protection algorithm and/or one integrity protection algorithm, the terminal device and the network element can uniquely determine the security algorithm used to activate the security context, without negotiating the security algorithm by using the NAS SMC procedure. In this case, the terminal device skips the NAS SMC procedure, and activates the security context.

According to the foregoing solution, the terminal device may choose, based on the capability of the terminal device and/or the type of the terminal device, to skip the NAS SMC procedure, and activate the security context when authentication succeeds. In this implementation, the NAS SMC procedure is omitted while the network communication security is ensured, simplifying the entire service procedure, reducing the processing complexity, and reducing the processing delay.

With reference to the first aspect, in some implementations of the first aspect, that the terminal device activates the security context includes: The terminal device activates the security context in response to an EAP-success message and/or an authentication request message received by the terminal device in an authentication procedure.

For example, the EAP-success message indicates that authentication of the terminal device by the network side succeeds. In other words, if a message received by the terminal device after sending the registration request message is the EAP-success message, it indicates that authentication of the terminal device by the network succeeds. In this case, in response to the EAP-success message, the security context is activated when it is determined that authentication of the network by the terminal device succeeds.

For example, the authentication request message includes an authentication vector of the network side, and the authentication vector is used by the terminal device to perform authentication on the network. In other words, after sending the registration request message, the terminal device receives the authentication request message, performs authentication on the network based on the authentication vector carried in the authentication request message, and activates the security context when authentication of the network by the terminal device succeeds.

According to the foregoing solution, after receiving the EAP-success message and/or the authentication request message, the terminal device activates the security context when determining that authentication of the terminal device by the network succeeds and/or authentication of the network by the terminal device succeeds, ensuring secure information exchange between the terminal device and the network.

With reference to the first aspect, in some implementations of the first aspect, that the terminal device activates the security context includes: The terminal device activates the security context based on a locally configured security algorithm, where the security algorithm includes one integrity security algorithm and/or one confidentiality security algorithm. In other words, the terminal device can uniquely determine, based on the confidentiality protection algorithm and/or the integrity security algorithm that are/is locally configured by the terminal device, the security algorithm used to activate the security context, without negotiating the security algorithm by using the NAS SMC procedure, and then activate the security context when determining that authentication of the network by the terminal device succeeds.

For example, if the security algorithm locally configured by the terminal device includes one confidentiality protection algorithm (for example, a ZUC confidentiality security protection algorithm) and/or one integrity protection algorithm (for example, a SNOW integrity security protection algorithm), the terminal device may activate the security context based on the ZUC confidentiality security protection algorithm and/or the SNOW integrity security protection algorithm.

According to the foregoing solution, because the locally configured security algorithm includes one confidentiality protection algorithm and/or one integrity protection algorithm, the terminal device can uniquely determine the security algorithm used to activate the security context, without negotiating the security algorithm by using the NAS SMC procedure. This reduces an interaction procedure between the terminal device and the network element, reduces the processing complexity, and reduces the processing delay.

With reference to the first aspect, in some implementations of the first aspect, that the terminal device activates the security context includes: The terminal device activates the security context based on a received registration accept message or the first message, where the registration accept message is used to accept a registration request of the terminal device.

Optionally, the registration accept message may be the first message. In this case, the registration accept message may carry the operation instruction type indicating the terminal device to perform the first operation.

For example, if the message received by the terminal device after sending the registration request message is the registration accept message, it indicates that the network accepts the registration request of the terminal device. In this case, in response to the registration accept message, the security context is activated when authentication of the network by the terminal device succeeds.

For example, the terminal device activates the security context based on a security algorithm indicated by a security algorithm identifier carried in the registration accept message, where the security algorithm includes an integrity security algorithm and/or a confidentiality security algorithm. For example, if the registration accept message carries one confidentiality protection algorithm identifier (for example, the confidentiality security protection algorithm identifier indicates the ZUC confidentiality security protection algorithm) and/or one integrity protection algorithm identifier (for example, the integrity security protection algorithm identifier indicates the SNOW integrity security protection algorithm), it indicates that the terminal device and the network element can uniquely determine the security algorithm used to activate the security context, without negotiating the security algorithm by using the NAS SMC procedure. Therefore, the terminal device may activate the security context based on the ZUC confidentiality security protection algorithm and/or the SNOW integrity security protection algorithm when authentication of the network by the terminal device succeeds.

According to the foregoing solution, because the registration accept message carries one confidentiality protection algorithm identifier and/or one integrity protection algorithm identifier, the terminal device can uniquely determine the security algorithm used to activate the security context, without negotiating the security algorithm by using the NAS SMC procedure. This reduces the interaction procedure between the terminal device and the network element, reduces the processing complexity, and reduces the processing delay.

With reference to the first aspect, in some implementations of the first aspect, that the terminal device activates the security context includes: The terminal device activates the security context based on the operation instruction type of the first operation.

For example, when the operation instruction type indicates a read operation, a write operation, or a deactivation operation, the terminal device determines to activate the security context.

Optionally, when the operation instruction type indicates an inventory operation, the terminal device determines not to activate the security context.

According to the foregoing solution, whether to activate the security context is determined based on whether the first operation indicated by the operation instruction type is a read operation, a write operation, or a deactivation operation. This prevents unnecessary generation and/or activation of a security context for an inventory operation, thereby reducing the computational and storage overhead of the terminal device, avoiding occupation of its storage resource, and lowering its power consumption.

With reference to the first aspect, in some implementations of the first aspect, the method further includes: The terminal device determines, based on the operation instruction type of the first operation, whether to perform decryption on the first message.

For example, when the operation instruction type indicates an inventory operation, a read operation, or a deactivation operation, the terminal device determines not to perform decryption on the first message.

For example, when the operation instruction type indicates a write operation, the terminal device determines to perform decryption on a first data ciphertext carried in the first message, where the first data ciphertext is obtained by encrypting first data, and the first data is data to be written into the storage area of the terminal device.

According to the foregoing solution, the operation instruction type is correlated with whether to perform decryption on the first message, enabling the terminal device to determine whether to perform decryption on the first message based on the operation instruction type. This prevents the terminal device from performing unnecessary decryption calculation or an unnecessary decryption operation when it is determined that the operation is an inventory operation, a read operation, or a deactivation operation, thereby reducing computational overhead and power consumption of the terminal device.

With reference to the first aspect, in some implementations of the first aspect, the method further includes: The terminal device determines, based on the operation instruction type of the first operation, whether to perform security protection on a second message, where the security protection includes integrity security protection and/or confidentiality security protection, and the second message indicates whether the first operation is successfully performed. The terminal device sends the second message to the network element.

With reference to the first aspect, in some implementations of the first aspect, that the terminal device determines, based on the operation instruction type of the first operation, whether to perform security protection on the second message includes: When the operation instruction type indicates an inventory operation, the terminal device determines not to perform integrity security protection on the second message; or when the operation instruction type indicates a read operation, a write operation, or a deactivation operation, the terminal device determines to perform integrity security protection on the second message.

With reference to the first aspect, in some implementations of the first aspect, that the terminal device determines, based on the operation instruction type of the first operation, whether to perform security protection on the second message includes: When the operation instruction type indicates an inventory operation, a write operation, or a deactivation operation, the terminal device determines not to perform confidentiality security protection on the second message. This is because when the first operation is an inventory operation, a write operation, or a deactivation operation, correspondingly, the second message sent by the terminal device to the network element may be considered as a response message for the first message, and indicates whether the terminal device performs the first operation or whether the first operation is successfully performed. In this case, the second message may not carry a parameter that requires confidentiality security protection, and confidentiality security protection does not need to be performed on the second message. Optionally, in this case, the second message may not be sent.

For example, when the operation instruction type indicates a read operation, the terminal device determines to perform confidentiality security protection on second data to obtain a second data ciphertext, where the second data is data read from the storage area of the terminal device or data collected by the terminal device, and the second data ciphertext is carried in the second message.

Optionally, when the first message is the registration accept message, the second message may be a registration complete message. For example, the registration accept message may carry information used to update a terminal device parameter, where the terminal device parameter may be slice information or closed access group information. Further, after updating the terminal device parameter, the terminal device may send the registration complete message to the network element.

It should be understood that to ensure the network communication security, the terminal device performs integrity protection on the second message.

According to the foregoing solution, the operation instruction type is correlated with whether to perform confidentiality protection on the second message, enabling the terminal device to determine whether to perform confidentiality protection on the second message based on the operation instruction type. This prevents the terminal device from performing unnecessary confidentiality security protection when it is determined that the operation is an inventory operation, a write operation, or a deactivation operation, thereby reducing computational overhead and power consumption of the terminal device.

With reference to the first aspect, in some implementations of the first aspect, the method further includes: The terminal device determines, based on the type of the terminal device, whether to delete the security context, specifically including one or more of the following: When the type of the terminal device is an active tag or a semi-passive tag, the terminal device determines not to delete the security context; and when the type of the terminal device is a passive tag, the terminal device determines to delete the security context.

According to the foregoing solution, logic of determining whether to delete the security context is added. This prevents the security context from being retained (not deleted) when the type of the terminal device is a passive tag, thereby reducing computational and storage overhead of the terminal device, avoiding occupation of its limited storage resource, and lowering its power consumption.

According to a second aspect, a communication method is provided. The method may be performed by a network element, or may be performed by a chip or a circuit used in the network element. This is not limited in this application. For ease of description, the following uses an example in which the method is performed by the network element for description. It should be understood that when a TMF is independently disposed, the method may be performed by the TMF and another network element (for example, an AMF) in cooperation. This is not limited in this application.

The method includes: receiving a registration request message from a terminal device, where the registration request message is used to request registration with a network, and the registration request message includes an identifier of the terminal device; activating a security context when authentication of the terminal device succeeds, where the security context is used to protect secure communication between the terminal device and the network element; performing integrity security protection on a first message based on the security context, where the first message is used to request to perform a first operation on the terminal device; and sending the first message to the terminal device.

Optionally, before activating the security context, the method further includes: determining whether to generate the security context. For example, it is determined, based on an operation instruction type of a first operation instruction, whether to generate the security context; or it is determined, based on a type of the terminal device, whether to generate the security context.

Optionally, before activating the security context, the method further includes: determining whether to activate the security context. For example, it is determined, based on the operation instruction type of the first operation instruction, whether to activate the security context.

According to the foregoing solution, logic of determining whether to generate the security context and whether to activate the security context is added. This prevents unnecessary generation and/or activation of the security context, thereby reducing computational and storage overhead, avoiding occupation of a storage resource, and lowering power consumption.

It should be noted that timing of activating the security context is not specifically limited in this application. For example, the security context is immediately generated and activated when authentication of the terminal device succeeds; the security context is first generated when authentication of the terminal device succeeds, and then the security context is activated after a service request message from an operation requester is received; or the security context is not generated when authentication of the terminal device succeeds, and the security context is generated and activated after the service request message second message is received.

According to the solution provided in this application, the security context is activated when authentication of the terminal device by the network succeeds, so that it can be determined that integrity security protection is performed on the to-be-sent first message. On one hand, this solution ensures secure communication between the terminal device and the network element. On the other hand, by decoupling a NAS SMC procedure from activation of the security context, meaning that the NAS SMC procedure is no longer required after authentication of the terminal device by the network succeeds, a quantity of information exchanges between the terminal device and the network element is reduced. This simplifies the entire service procedure, reduces processing complexity, and lowers processing delay.

With reference to the second aspect, in some implementations of the second aspect, a security capability of the terminal device is used to determine a security algorithm in the security context. The method further includes: obtaining the security capability of the terminal device from the operation requester; obtaining the security capability of the terminal device from the terminal device; or obtaining the security capability of the terminal device from a unified data management network element.

It should be understood that the security capability of the terminal device obtained from the operation requester or the unified data management network element is transferred through a security-protected interface. This can reduce air interface overheads between the terminal device and the network element, and avoid an interaction failure that may be caused by malicious tampering of an attacker when the terminal device reports the security capability of the terminal device through an air interface, ensuring network communication security.

With reference to the second aspect, in some implementations of the second aspect, activating the security context includes: skipping the NAS SMC procedure based on a capability of the terminal device and/or the type of the terminal device, and activating the security context.

With reference to the second aspect, in some implementations of the second aspect, skipping the NAS SMC procedure based on the type of the terminal device, and activating the security context includes: skipping the NAS SMC procedure when the type of the terminal device is a passive tag, and activating the security context.

With reference to the second aspect, in some implementations of the second aspect, skipping the NAS SMC procedure based on the capability of the terminal device, and activating the security context includes: skipping the NAS SMC procedure when the capability of the terminal device indicates that the terminal device supports one confidentiality protection algorithm and/or one integrity protection algorithm, and activating the security context.

With reference to the second aspect, in some implementations of the second aspect, activating the security context includes: activating the security context based on a locally configured security algorithm, where the security algorithm includes one integrity security algorithm and/or one confidentiality security algorithm.

With reference to the second aspect, in some implementations of the second aspect, activating the security context includes: activating the security context based on the operation instruction type of the first operation.

With reference to the second aspect, in some implementations of the second aspect, activating the security context based on the operation instruction type of the first operation includes one or more of the following: activating the security context when the operation instruction type indicates a read operation; activating the security context when the operation instruction type indicates a write operation; and activating the security context when the operation instruction type indicates a deactivation operation.

With reference to the second aspect, in some implementations of the second aspect, the method further includes: determining, based on the operation instruction type of the first operation, whether to perform confidentiality security protection on the first message.

With reference to the second aspect, in some implementations of the second aspect, determining, based on the operation instruction type of the first operation, whether to perform confidentiality security protection on the first message includes one or more of the following: when the operation instruction type indicates an inventory operation, determining not to perform confidentiality security protection on the first message; when the operation instruction type indicates a read operation, determining not to perform confidentiality security protection on the first message; when the operation instruction type indicates a deactivation operation, determining not to perform confidentiality security protection on the first message; and when the operation instruction type indicates a write operation, determining to perform confidentiality security protection on first data to obtain a first data ciphertext, where the first data is data to be written into a storage area of the terminal device, and the first message includes the first data ciphertext.

With reference to the second aspect, in some implementations of the second aspect, the method further includes: receiving a second message from the terminal device, where the second message indicates whether the first operation is successfully performed; and determining, based on the operation instruction type of the first operation, whether to perform de-security protection (integrity verification and/or decryption) on the second message.

With reference to the second aspect, in some implementations of the second aspect, determining, based on the operation instruction type of the first operation, whether to perform integrity verification on the second message includes one or more of the following: when the operation instruction type indicates a read operation, a write operation, or a deactivation operation, determining to perform integrity verification on the second message; and when the operation instruction type indicates an inventory operation, determining not to perform integrity verification on the second message.

With reference to the second aspect, in some implementations of the second aspect, determining, based on the operation instruction type of the first operation, whether to perform decryption on the second message includes one or more of the following: when the operation instruction type indicates a read operation, determining to perform decryption on a second data ciphertext carried in the second message, to obtain second data, where the second data is data read from the storage area of the terminal device or data collected by the terminal device; when the operation instruction type indicates a write operation, determining not to perform decryption on the second message; when the operation instruction type indicates a deactivation operation, determining not to perform decryption on the second message; and when the operation instruction type indicates an inventory operation, determining not to perform decryption on the second message.

With reference to the second aspect, in some implementations of the second aspect, the method further includes: determining, based on the type of the terminal device, whether to delete the security context, specifically including one or more of the following: when the type of the terminal device is an active tag or a semi-passive tag, determining not to delete the security context; and when the type of the terminal device is a passive tag, determining to delete the security context.

According to the foregoing solution, by using determining logic of determining for deletion of the security context, the computational and storage overheads of the network element can be reduced, the power consumption of the network element can be reduced, and it can be ensured that a network side can provide services for more terminal devices, avoiding network congestion and the like.

With reference to the second aspect, in some implementations of the second aspect, the method further includes: receiving the service request message from the operation requester, where the service request message is used to request to perform the first operation on the terminal device; and sending a first service response message to the operation requester based on the operation instruction type of the first operation, including one or more of the following: When the operation instruction type indicates an inventory operation, the first service response message indicates that the first operation is successfully performed, and the first service response message includes the identifier of the terminal device; when the operation instruction type indicates a read operation, and integrity verification and/or decryption of the second message succeed/succeeds, the first service response message indicates that the first operation is successfully performed, and the first service response message includes the identifier of the terminal device and the second data, where the second data is obtained by performing decryption on the second data ciphertext, and the second data is the data read from the storage area of the terminal device or collected by the terminal device; when the operation instruction type indicates a write operation, and integrity verification of the second message succeeds, the first service response message indicates that the first operation is successfully performed, and the first service response message includes the identifier of the terminal device; and when the operation instruction type indicates a deactivation operation, and integrity verification of the second message succeeds, the first service response message indicates that the first operation is successfully performed, and the first service response message includes the identifier of the terminal device.

With reference to the second aspect, in some implementations of the second aspect, the method further includes: receiving the service request message from the operation requester, where the service request message is used to request to perform the first operation on the terminal device; and sending a second service response message to the operation requester based on the operation instruction type of the first operation, including one or more of the following: When the operation instruction type indicates a read operation, and integrity verification of the second message fails and/or decryption of the second message fails, the second service response message indicates that the first operation fails to be performed; when the operation instruction type indicates a write operation, and integrity verification of the second message fails, the second service response message indicates that the first operation fails to be performed; and when the operation instruction type indicates a deactivation operation, and integrity verification of the second message fails, the second service response message indicates that the first operation fails to be performed.

With reference to the second aspect, in some implementations of the second aspect, the method further includes: receiving the service request message from the operation requester, where the service request message is used to request to perform the first operation on the terminal device; and when authentication of the terminal device fails, sending a third service response message to the operation requester, where the third service response message indicates that the first operation fails to be performed.

For beneficial effects of the second aspect and some implementations of the second aspect, correspondingly refer to the related descriptions in the first aspect. Details are not described herein again.

According to a third aspect, a communication method is provided. The method may be performed by an operation requester (for example, an AF), or may be performed by a chip or a circuit used in the operation requester. This is not limited in this application. For ease of description, the following uses an example in which the method is performed by the operation requester for description.

The method includes: The operation requester sends a service request message to a network element, where the service request message is used to request to perform a first operation on a terminal device, and the service request message includes a security capability of the terminal device. The operation requester receives a service response message from the network element, where the service response message indicates whether the first operation is successfully performed.

Optionally, the service request message further includes an operation instruction type, and the operation instruction type indicates the first operation.

Optionally, the service request message may indicate the first operation. In this case, the service request message may not carry the operation instruction type of the first operation. For example, the service request message may be a read operation request message, and is used to read data from a storage area of the terminal device or data collected by the terminal device. In this case, the read operation request message may not carry an operation instruction type of a read operation.

For example, the service request message further includes one or more of an identifier of the terminal device, the operation instruction type, and first data. The operation instruction type indicates the first operation. The security capability of the terminal device indicates one or more integrity security protection algorithms and/or confidentiality security protection algorithms supported by the terminal device. The first data is data to be written into the storage area of the terminal device.

According to the foregoing solution, the operation requester sends the service request message to the network element, to request to perform the first operation on the terminal device, to obtain a service such as read, write, inventory, or deactivation. It should be understood that the security capability of the terminal device obtained by the network element from the operation requester is transferred through a security-protected interface. This can reduce air interface overheads between the terminal device and the network element, and avoid an interaction failure that may be caused by malicious tampering of an attacker when the terminal device reports the security capability of the terminal device through an air interface, including ensuring network communication security.

With reference to the third aspect, in some implementations of the third aspect, when the operation instruction type indicates an inventory operation, the service response message includes the identifier of the terminal device. Alternatively, when the operation instruction type indicates a read operation, the service response message includes the identifier of the terminal device and second data, where the second data is the data read from the storage area of the terminal device or collected by the terminal device. Alternatively, when the operation instruction type indicates a write operation, the service response message includes the identifier of the terminal device. Alternatively, when the operation instruction type indicates a deactivation operation, the service response message includes the identifier of the terminal device.

With reference to the third aspect, in some implementations of the third aspect, when authentication of the terminal device by the network element fails, the service response message indicates that the first operation fails to be performed.

With reference to the third aspect, in some implementations of the third aspect, the service response message includes a failure cause value, and the failure cause value indicates that authentication of the terminal device fails.

For beneficial effects of the third aspect and some implementations of the third aspect, correspondingly refer to the related descriptions in the first aspect. Details are not described herein again.

According to a fourth aspect, a communication method is provided. The method may be performed by a terminal device, for example, a mobile phone, a car, an uncrewed aerial vehicle, or a wearable device, or may be a chip or a circuit of the terminal device. In addition, the terminal device may also be referred to as a user equipment. Therefore, the method may be performed by the user equipment, or a chip or a circuit in the user equipment. This is not specifically limited in this application.

The method includes: The terminal device sends a registration request message, where the registration request message is used to request registration with a network, and the registration request message includes an identifier of the terminal device. The terminal device receives a first message from a network element, where the first message is used to request to perform a first operation on the terminal device. The terminal device determines, based on an operation instruction type of the first operation, whether to activate a security context, where the security context is used to protect secure communication between the terminal device and the network element.

With reference to the fourth aspect, in some implementations of the fourth aspect, that the terminal device determines, based on the operation instruction type of the first operation, whether to activate the security context includes one or more of the following: When the operation instruction type indicates an inventory operation, the terminal device determines not to activate the security context; when the operation instruction type indicates a read operation, the terminal device determines to activate the security context; when the operation instruction type indicates a write operation, the terminal device determines to activate the security context; and when the operation instruction type indicates a deactivation operation, the terminal device determines to activate the security context.

It should be noted that activating the security context in this application may alternatively be generating the security context.

For example, the operation instruction type may indicate one or more of an inventory operation, a read operation, a write operation, a deactivation operation, or another operation. Optionally, the operation instruction type may be carried in the first message. Alternatively, the operation instruction type may not be carried in the first message, and in this case, the operation instruction type and the first message may be sent simultaneously or separately. This is not limited in this application.

For example, the first message may indicate the first operation. In this case, the first message may not carry the operation instruction type of the first operation. For example, the first message may be a read operation request message, and is used to read data from a storage area of the terminal device or data collected by the terminal device. In this case, the read operation request message may not carry the operation instruction type of a read operation.

With reference to the fourth aspect, in some implementations of the fourth aspect, when determining to activate the security context, the terminal device performs integrity verification and/or decryption on the first message based on the security context. When integrity verification and/or decryption succeed/succeeds, the terminal device performs the first operation based on the operation instruction type.

With reference to the fourth aspect, in some implementations of the fourth aspect, when determining not to activate the security context, the terminal device performs no integrity verification and/or no decryption on the first message. The terminal device performs the first operation based on the operation instruction type, or the terminal device discards the first message, that is, the terminal device may not perform the first operation.

It should be understood that when the terminal device determines to activate the security context, the terminal device may perform integrity verification and/or decryption on the received first message based on the activated security context; or when the terminal device determines not to activate the security context, the terminal device does not need to perform integrity verification and decryption on the first message.

With reference to the fourth aspect, in some implementations of the fourth aspect, after activating the security context, the terminal device determines whether to perform integrity verification and/or decryption on the first message.

With reference to the fourth aspect, in some implementations of the fourth aspect, that the terminal device determines whether to perform integrity verification and/or decryption on the first message includes: The terminal device determines, based on the operation instruction type of the first operation, whether to perform integrity verification and/or decryption on the first message.

With reference to the fourth aspect, in some implementations of the fourth aspect, that the terminal device determines, based on the operation instruction type, whether to perform integrity verification on the first message includes one or more of the following: When the operation instruction type is an inventory operation, the terminal device determines not to perform integrity verification on the first message; when the operation instruction type is a read operation, the terminal device determines to perform integrity verification on the first message; when the operation instruction type is a write operation, the terminal device determines to perform integrity verification on the first message; and when the operation instruction type is a deactivation operation, the terminal device determines to perform integrity verification on the first message.

With reference to the fourth aspect, in some implementations of the fourth aspect, that the terminal device determines, based on the operation instruction type, whether to perform decryption on the first message includes one or more of the following: When the operation instruction type is an inventory operation, the terminal device determines not to perform decryption on the first message; when the operation instruction type is a read operation, the terminal device determines not to perform decryption on the first message; when the operation instruction type is a write operation, the terminal device determines to perform decryption on a first data ciphertext carried in the first message, to obtain first data, where the first data is data to be written into the storage area of the terminal device; and when the operation instruction type is a deactivation operation, the terminal device determines not to perform decryption on the first message.

With reference to the fourth aspect, in some implementations of the fourth aspect, that the terminal device determines, based on the operation instruction type of the first operation, whether to activate the security context includes: The terminal device determines, based on the operation instruction type, to activate a security context corresponding to integrity security protection and/or a security context corresponding to confidentiality security protection.

For example, when the operation instruction type indicates an inventory operation, the terminal device determines not to activate the security context corresponding to integrity security protection and the security context corresponding to confidentiality security protection, that is, the terminal device does not need to generate the security context. When the operation instruction type indicates a read operation or a deactivation operation, the terminal device determines to activate the security context corresponding to integrity security protection. When the operation instruction type indicates a write operation, the terminal device determines to activate the security context corresponding to integrity security protection and the security context corresponding to confidentiality security protection.

With reference to the fourth aspect, in some implementations of the fourth aspect, the terminal device sends a second message to the network element, where the second message indicates whether the first operation is successfully performed. When the operation instruction type is a read operation, the second message includes a second data ciphertext, the second data ciphertext is obtained by encrypting second data, and the second data is data read from the storage area of the terminal device or collected by the terminal device.

Optionally, when the operation instruction type is an inventory operation, the terminal device may not send the second message. In this case, a core network sends the identifier of the terminal device to an operation requester, where the identifier of the terminal device may be obtained from the registration request message.

With reference to the fourth aspect, in some implementations of the fourth aspect, before the terminal device sends the second message to the network element, the method further includes: The terminal device determines, based on the operation instruction type, whether to perform security protection on the second message, where the security protection includes confidentiality security protection and/or integrity security protection.

With reference to the fourth aspect, in some implementations of the fourth aspect, that the terminal device determines, based on the operation instruction type, whether to perform security protection on the second message includes one or more of the following: When the operation instruction type is an inventory operation, the terminal device determines not to perform integrity security protection on the second message; when the operation instruction type is a read operation, the terminal device determines to perform integrity security protection on the second message; when the operation instruction type is a write operation, the terminal device determines to perform integrity security protection on the second message; and when the operation instruction type is a deactivation operation, the terminal device determines to perform integrity security protection on the second message.

With reference to the fourth aspect, in some implementations of the fourth aspect, that the terminal device determines, based on the operation instruction type, whether to perform security protection on the second message includes one or more of the following: When the operation instruction type is an inventory operation, the terminal device determines not to perform confidentiality security protection on the second data; when the operation instruction type is a read operation, the terminal device determines to perform confidentiality security protection on the second message; when the operation instruction type is a write operation, the terminal device determines not to perform confidentiality security protection on the second message; and when the operation instruction type is a deactivation operation, the terminal device determines not to perform confidentiality security protection on the second message.

With reference to the fourth aspect, in some implementations of the fourth aspect, the method further includes: determining, based on a type of the terminal device, whether to delete the security context, specifically including one or more of the following: when the type of the terminal device is an active tag or a semi-passive tag, determining not to delete the security context; and when the type of the terminal device is a passive tag, determining to delete the security context.

For example, the first message may be a registration accept message, and the second message may be a registration complete message. Alternatively, the first message may be a NAS SMC message, and the second message may be a NAS SMP message.

For beneficial effects of the fourth aspect and some implementations of the fourth aspect, correspondingly refer to the related descriptions in the first aspect. Details are not described herein again.

According to a fifth aspect, a communication method is provided. The method may be performed by a network element, or may be performed by a chip or a circuit used in the network element. This is not limited in this application. For ease of description, the following uses an example in which the method is performed by the network element for description. It should be understood that when a TMF is independently disposed, the method may be performed by the TMF and another network element (for example, an AMF) in cooperation. This is not limited in this application.

The method includes: receiving a registration request message from a terminal device, where the registration request message is used to request registration with a network, and the registration request message includes an identifier of the terminal device; determining, based on an operation instruction type of a first operation, whether to activate a security context, where the security context is used to protect secure communication between the terminal device and the network element; and when it is determined to activate the security context, performing security protection on a to-be-sent first message based on the security context, where the first message is used to request to perform the first operation on the terminal device; and sending the first message to the terminal device; or when it is determined not to activate the security context, sending the first message to the terminal device.

Optionally, the first message includes the operation instruction type, and the operation instruction type indicates the first operation.

With reference to the fifth aspect, in some implementations of the fifth aspect, determining, based on the operation instruction type of the first operation, whether to activate the security context includes one or more of the following: when the operation instruction type indicates an inventory operation, determining not to activate the security context; when the operation instruction type indicates a read operation, determining to activate the security context; when the operation instruction type indicates a write operation, determining to activate the security context; and when the operation instruction type indicates a deactivation operation, determining to activate the security context.

With reference to the fifth aspect, in some implementations of the fifth aspect, a service request message from an operation requester is received, where the service request message is used to request to perform the first operation on the terminal device. A service response message is sent to the operation requester, where the service response message indicates whether the first operation is successfully performed.

Optionally, the service request message includes the operation instruction type, and the operation instruction type indicates the first operation.

With reference to the fifth aspect, in some implementations of the fifth aspect, after the security context is activated, it is determined whether to perform security protection on the first message.

With reference to the fifth aspect, in some implementations of the fifth aspect, determining, based on the operation instruction type of the first operation, whether to activate the security context includes: determining, based on the operation instruction type, to activate a security context corresponding to integrity security protection and/or a security context corresponding to confidentiality security protection.

For example, when the operation instruction type indicates an inventory operation, it is determined not to activate the security context corresponding to integrity security protection and the security context corresponding to confidentiality security protection, that is, the security context does not need to be generated. When the operation instruction type indicates a read operation or a deactivation operation, it is determined to activate the security context corresponding to integrity security protection. When the operation instruction type indicates a write operation, it is determined to activate the security context corresponding to integrity security protection and the security context corresponding to confidentiality security protection.

With reference to the fifth aspect, in some implementations of the fifth aspect, a security capability of the terminal device is used to determine a security algorithm in the security context. The method further includes: obtaining the security capability of the terminal device from the operation requester; obtaining the security capability of the terminal device from the terminal device; or obtaining the security capability of the terminal device from a unified data management network element.

With reference to the fifth aspect, in some implementations of the fifth aspect, determining whether to perform security protection on the first message includes: The terminal device determines, based on the operation instruction type of the first operation, whether to perform security protection on the first message.

With reference to the fifth aspect, in some implementations of the fifth aspect, determining, based on the operation instruction type, whether to perform security protection on the first message includes one or more of the following: when the operation instruction type is an inventory operation, determining not to perform integrity security protection on the first message; when the operation instruction type is a read operation, determining to perform integrity security protection on the first message; when the operation instruction type is a write operation, determining to perform integrity security protection on the first message; and when the operation instruction type is a deactivation operation, determining to perform integrity security protection on the first message.

With reference to the fifth aspect, in some implementations of the fifth aspect, determining, based on the operation instruction type, whether to perform security protection on the first message includes one or more of the following: when the operation instruction type is an inventory operation, determining not to perform confidentiality security protection on the first message; when the operation instruction type is a read operation, determining not to perform confidentiality security protection on the first message; when the operation instruction type is a write operation, determining to perform confidentiality security protection on first data to obtain a first data ciphertext, where the first data ciphertext is carried in the first message, and the first data is data to be written into a storage area of the terminal device; and when the operation instruction type is a deactivation operation, determining not to perform confidentiality security protection on the first message.

With reference to the fifth aspect, in some implementations of the fifth aspect, before sending the first message to the terminal device, the method further includes: determining, based on a type of the terminal device, whether to send the first message to the terminal device; and when the type of the terminal device is a tag type, determining to send the first message to the terminal device.

With reference to the fifth aspect, in some implementations of the fifth aspect, before sending the first message to the terminal device, the method further includes: determining, based on a service type corresponding to the first operation, whether to send the first message to the terminal device; and when the service type corresponding to the first operation is a tag service, determining to send the first message to the terminal device.

With reference to the fifth aspect, in some implementations of the fifth aspect, before sending the service response message to the operation requester, the method further includes: receiving a second message from the terminal device, where the second message indicates whether the first operation is successfully performed. When the operation instruction type is a read operation, the second message includes a second data ciphertext, the second data ciphertext is obtained by encrypting second data, and the second data is data read from the storage area of the terminal device or collected by the terminal device.

With reference to the fifth aspect, in some implementations of the fifth aspect, it is determined, based on the operation instruction type, whether to perform integrity verification and/or decryption on the second message.

With reference to the fifth aspect, in some implementations of the fifth aspect, determining, based on the operation instruction type, whether to perform integrity verification and/or decryption on the second message specifically includes one or more of the following: when the operation instruction type is an inventory operation, determining not to perform integrity verification on the second message; when the operation instruction type is a read operation, determining to perform integrity verification on the second message; when the operation instruction type is a write operation, determining to perform integrity verification on the second message; and when the operation instruction type is a deactivation operation, determining to perform integrity verification on the second message.

With reference to the fifth aspect, in some implementations of the fifth aspect, determining, based on the operation instruction type, whether to perform integrity verification and/or decryption on the second message specifically includes one or more of the following: when the operation instruction type is a read operation, determining to perform decryption on the second data ciphertext to obtain the second data; and when the operation instruction type is an inventory operation, a write operation, or a deactivation operation, determining not to perform decryption on the second message.

With reference to the fifth aspect, in some implementations of the fifth aspect, it is determined, based on the type of the terminal device, whether to delete the security context, specifically including one or more of the following: when the type of the terminal device is an active tag or a semi-passive tag, determining not to delete the security context; and when the type of the terminal device is a passive tag, determining to delete the security context.

With reference to the fifth aspect, in some implementations of the fifth aspect, sending the service response message to the operation requester includes: sending the service response message to the operation requester based on the operation instruction type, specifically including one or more of the following: When the operation instruction type indicates an inventory operation, and integrity verification of the second message succeeds, the service response message indicates that the first operation is successfully performed, and the service response message includes the identifier of the terminal device; when the operation instruction type indicates a read operation, and integrity verification of the second message succeeds, the service response message indicates that the first operation is successfully performed, and the service response message includes the identifier of the terminal device and the second data, where the second data is obtained by performing decryption on the second data ciphertext, and the second data is the data read from the storage area of the terminal device or collected by the terminal device; when the operation instruction type indicates a write operation, and integrity verification of the second message succeeds, the service response message indicates that the first operation is successfully performed, and the service response message includes the identifier of the terminal device; and when the operation instruction type indicates a deactivation operation, and integrity verification of the second message succeeds, the service response message indicates that the first operation is successfully performed, and the service response message includes the identifier of the terminal device.

With reference to the fifth aspect, in some implementations of the fifth aspect, sending the service response message to the operation requester specifically includes: sending the service response message to the operation requester based on the operation instruction type, specifically including one or more of the following: when the operation instruction type indicates a read operation, and integrity verification of the second message fails and/or decryption of the second message fails, the service response message indicates that the first operation fails to be performed; when the operation instruction type indicates a write operation, and integrity verification of the second message fails, the service response message indicates that the first operation fails to be performed; when the operation instruction type indicates a deactivation operation, and integrity verification of the second message fails, the service response message indicates that the first operation fails to be performed; and when the operation instruction type indicates an inventory operation, and integrity verification of the second message fails, the service response message indicates that the first operation fails to be performed.

With reference to the fifth aspect, in some implementations of the fifth aspect, when authentication of the terminal device fails, the service response message indicates that the first operation fails to be performed. Optionally, the service response message carries a failure cause value indicating that authentication of the terminal device fails.

For example, the first message may be a registration accept message, and the second message may be a registration complete message. Alternatively, the first message may be a NAS SMC message, and the second message may be a NAS SMP message.

For beneficial effects of the fifth aspect and some implementations of the fifth aspect, correspondingly refer to the related descriptions in the second aspect. Details are not described herein again.

According to a sixth aspect, a communication method is provided. The method may be performed by a terminal device, or may be performed by a chip or a circuit used in the terminal device. This is not limited in this application. For ease of description, the following uses an example in which the method is performed by the terminal device for description.

The method includes: The terminal device sends a registration request message, where the registration request message is used to request registration with a network, and the registration request message includes an identifier of the terminal device. The terminal device receives a first message from a network element, where the first message indicates to perform a first operation on the terminal device, and the first message is a NAS SMC message. The terminal device activates a security context based on the NAS SMC message, where the security context is used to protect secure communication between the terminal device and the network element. The terminal device performs integrity verification and/or decryption on the first message from the network element based on the security context. The terminal device performs the first operation after the integrity verification and/or the decryption.

Optionally, the method further includes: performing an authentication procedure between the terminal device and the network. For example, when authentication of the terminal device by the network succeeds, the first message is sent to the terminal device, and correspondingly, the terminal device receives the first message from a network device.

According to the solution provided in this application, the NAS SMC message indicates to perform the first operation on the terminal device, that is, a NAS SMC procedure is used for service execution. This reduces a quantity of information exchanges between the terminal device and the network element. Compared with the conventional technology in which the terminal device and the network element sequentially perform the authentication procedure, trigger the NAS SMC procedure, and then execute a service procedure, this implementation allows the first operation to be performed while network communication security is ensured. It simplifies the entire service procedure, reduces processing complexity, and lowers processing delay.

With reference to the sixth aspect, in some implementations of the sixth aspect, that the terminal device activates the security context based on the NAS SMC message includes: The terminal device activates the security context based on an operation instruction type of the first operation.

With reference to the sixth aspect, in some implementations of the sixth aspect, before the terminal device activates the security context based on the operation instruction type of the first operation, the method further includes: The terminal device determines, based on the operation instruction type of the first operation, whether to activate the security context.

It should be understood that generation of the security context is correlated with activation of the security context, so that one of generation of the security context and activation of the security context may be selected for determining. For example, when it is determined to generate the security context, activation of the security context also needs to be performed. For example, if it is determined to activate the security context, it indicates that the security context needs to be generated before the security context is activated. Therefore, determining for generation of the security context may be equivalent to determining for activation of the security context. In other words, in this application, determining whether to generate the security context and determining whether to activate the security context may be mutually replaced, or both exist.

According to the foregoing solution, logic of determining whether to activate the security context is added. This prevents unnecessary generation and/or activation of the security context, thereby reducing computational and storage overhead of the terminal device, avoiding occupation of its limited storage resource, and lowering its power consumption.

With reference to the sixth aspect, in some implementations of the sixth aspect, that the terminal device determines, based on the operation instruction type of the first operation, whether to activate the security context includes: When the operation instruction type indicates an inventory operation, the terminal device determines not to activate the security context; when the operation instruction type indicates a read operation, the terminal device determines to activate the security context; when the operation instruction type indicates a write operation, the terminal device determines to activate the security context; or when the operation instruction type indicates a deactivation operation, the terminal device determines to activate the security context.

According to the foregoing solution, whether to activate the security context is determined based on whether the first operation indicated by the operation instruction type is a read operation, a write operation, or a deactivation operation. This prevents unnecessary generation and/or activation of the security context for an inventory operation, thereby reducing computational and storage overhead of the terminal device, avoiding occupation of its storage resource, and lowering its power consumption.

With reference to the sixth aspect, in some implementations of the sixth aspect, that the terminal device activates the security context based on the operation instruction type of the first operation includes: When the operation instruction type indicates an inventory operation, a read operation, or a deactivation operation, the terminal device activates a security context corresponding to integrity security protection; or when the operation instruction type indicates a write operation, the terminal device activates the security context corresponding to integrity security protection and a security context corresponding to confidentiality security protection.

With reference to the sixth aspect, in some implementations of the sixth aspect, the method further includes: The terminal device activates the security context based on a type of the terminal device.

With reference to the sixth aspect, in some implementations of the sixth aspect, before the terminal device activates the security context based on the type of the terminal device, the method further includes: The terminal device determines, based on the type of the terminal device, whether to activate the security context.

With reference to the sixth aspect, in some implementations of the sixth aspect, that the terminal device determines, based on the type of the terminal device, whether to activate the security context includes: When the type of the terminal device is an active tag or a semi-passive tag, the terminal device determines to activate the security context; or when the type of the terminal device is a passive tag, the terminal device activates the security context based on the operation instruction type of the first operation.

With reference to the sixth aspect, in some implementations of the sixth aspect, that the terminal device activates the security context based on the type of the terminal device includes: When the type of the terminal device is an active tag or a semi-passive tag, the terminal device activates the security context corresponding to integrity security protection and the security context corresponding to confidentiality security protection; when the type of the terminal device is a passive tag, and the operation instruction type of the first operation indicates an inventory operation, a read operation, or a deactivation operation, the terminal device activates the security context corresponding to integrity security protection; or when the type of the terminal device is a passive tag, and the operation instruction type of the first operation indicates a write operation, the terminal device activates the security context corresponding to integrity security protection and the security context corresponding to confidentiality security protection.

With reference to the sixth aspect, in some implementations of the sixth aspect, before the terminal device performs integrity verification and/or decryption on the first message from the network element based on the security context, the method further includes: The terminal device determines, based on the operation instruction type of the first operation, whether to perform integrity verification and/or decryption on the first message.

With reference to the sixth aspect, in some implementations of the sixth aspect, that the terminal device determines, based on the operation instruction type of the first operation, whether to perform integrity verification on the first message includes one or more of the following: When the operation instruction type indicates an inventory operation, the terminal device determines not to perform integrity verification on the first message; when the operation instruction type indicates a read operation, the terminal device determines to perform integrity verification on the first message; when the operation instruction type indicates a deactivation operation, the terminal device determines to perform integrity verification on the first message; and when the operation instruction type indicates a write operation, the terminal device determines to perform integrity verification on the first message.

According to the foregoing solution, the operation instruction type is correlated with whether to perform integrity verification on the first message, enabling the terminal device to determine whether to perform integrity verification on the first message based on the operation instruction type. This prevents the terminal device from performing an unnecessary integrity verification operation when it is determined that the operation is an inventory operation, thereby reducing computational overhead and power consumption of the terminal device.

With reference to the sixth aspect, in some implementations of the sixth aspect, that the terminal device determines, based on the operation instruction type of the first operation, whether to perform decryption on the first message includes one or more of the following: When the operation instruction type indicates an inventory operation, the terminal device determines not to perform decryption on the first message; when the operation instruction type indicates a read operation, the terminal device determines not to perform decryption on the first message; when the operation instruction type indicates a deactivation operation, the terminal device determines not to perform decryption on the first message; and when the operation instruction type indicates a write operation, the terminal device determines to perform decryption on a first data ciphertext carried in the first message, to obtain first data, where the first data is data to be written into a storage area of the terminal device.

According to the foregoing solution, the operation instruction type is correlated with whether to perform decryption on the first message, enabling the terminal device to determine whether to perform decryption on the first message based on the operation instruction type. This prevents the terminal device from performing unnecessary decryption calculation or an unnecessary decryption operation when it is determined that the operation is an inventory operation, a read operation, or a deactivation operation, thereby reducing computational overhead and power consumption of the terminal device.

With reference to the sixth aspect, in some implementations of the sixth aspect, the method further includes: The terminal device determines, based on the operation instruction type of the first operation, whether to perform security protection on a second message, where the security protection includes integrity security protection and/or confidentiality security protection, the second message indicates whether the first operation is successfully performed, and the second message is a NAS SMP message. The terminal device sends the second message to the network element.

With reference to the sixth aspect, in some implementations of the sixth aspect, that the terminal device determines, based on the operation instruction type, whether to perform security protection on the second message includes one or more of the following: When the operation instruction type indicates an inventory operation, the terminal device determines not to perform integrity security protection on the second message; when the operation instruction type indicates a read operation, the terminal device determines to perform integrity security protection on second data; when the operation instruction type indicates a write operation, the terminal device determines to perform integrity security protection on the second message; and when the operation instruction type indicates a deactivation operation, the terminal device determines to perform integrity security protection on the second message.

According to the foregoing solution, the operation instruction type is correlated with whether to perform integrity security protection on the second message, enabling the terminal device to determine whether to perform integrity security protection on the second message based on the operation instruction type. This prevents the terminal device from performing unnecessary integrity security protection when it is determined that the operation is an inventory operation, thereby reducing computational overhead and power consumption of the terminal device.

With reference to the sixth aspect, in some implementations of the sixth aspect, that the terminal device determines, based on the operation instruction type, whether to perform security protection on the second message includes one or more of the following: When the operation instruction type indicates an inventory operation, the terminal device determines not to perform confidentiality security protection on the second message; when the operation instruction type indicates a read operation, the terminal device determines to perform confidentiality security protection on second data to obtain a second data ciphertext, where the second data is data in the storage area of the terminal device or data collected by the terminal device, and the second data ciphertext is carried in the second message; when the operation instruction type indicates a write operation, the terminal device determines not to perform confidentiality security protection on the second message; and when the operation instruction type indicates a deactivation operation, the terminal device determines not to perform confidentiality security protection on the second message.

According to the foregoing solution, the operation instruction type is correlated with whether to perform confidentiality protection on the second message, enabling the terminal device to determine whether to perform confidentiality protection on the second message based on the operation instruction type. This prevents the terminal device from performing unnecessary confidentiality security protection when it is determined that the operation is an inventory operation, a write operation, or a deactivation operation, thereby reducing computational overhead and power consumption of the terminal device.

With reference to the sixth aspect, in some implementations of the sixth aspect, the method further includes: The terminal device determines, based on the type of the terminal device, whether to delete the security context, specifically including one or more of the following: When the type of the terminal device is an active tag or a semi-passive tag, the terminal device determines not to delete the security context; and when the type of the terminal device is a passive tag, the terminal device determines to delete the security context.

According to the foregoing solution, logic of determining whether to delete the security context is added. This prevents the security context from being retained (not deleted) when the type of the terminal device is a passive tag, thereby reducing computational and storage overhead of the terminal device, avoiding occupation of its limited storage resource, and lowering its power consumption.

According to a seventh aspect, a communication method is provided. The method may be performed by a network element, or may be performed by a chip or a circuit used in the network element. This is not limited in this application. For ease of description, the following uses an example in which the method is performed by the network element for description. It should be understood that when a TMF is independently disposed, the method may be performed by the TMF and another network element (for example, an AMF) in cooperation. This is not limited in this application.

The method includes: receiving a registration request message from a terminal device, where the registration request message is used to request registration with a network, and the registration request message includes an identifier of the terminal device; activating a security context, where the security context is used to protect secure communication between the terminal device and the network element; performing security protection on a first message based on the security context, where the security protection includes integrity security protection and/or confidentiality security protection, the first message indicates to perform a first operation on the terminal device, and the first message is a NAS SMC message; and sending the first message on which security protection is performed to the terminal device.

Optionally, the method further includes: performing an authentication procedure between the terminal device and the network. For example, when authentication of the terminal device by the network succeeds, the security context is activated, and the first message on which security protection is performed is sent to the terminal device. In other words, the NAS SMC message is a message on which security protection is performed.

According to the solution provided in this application, the NAS SMC message indicates to perform the first operation on the terminal device, that is, a NAS SMC procedure is used for service execution. This reduces a quantity of information exchanges between the terminal device and the network element. Compared with the conventional technology in which the terminal device and a core network element sequentially perform an authentication procedure, trigger the NAS SMC procedure, and then execute a service procedure, this implementation allows the first operation to be performed while the network communication security is ensured. It simplifies the entire service procedure, reduces processing complexity, and lowers processing delay.

With reference to the seventh aspect, in some implementations of the seventh aspect, a security capability of the terminal device is used to determine a security algorithm in the security context. The method further includes: obtaining the security capability of the terminal device from an operation requester; obtaining the security capability of the terminal device from the terminal device; or obtaining the security capability of the terminal device from a unified data management network element.

With reference to the seventh aspect, in some implementations of the seventh aspect, activating the security context includes: activating the security context based on an operation instruction type of the first operation and/or a type of the terminal device.

With reference to the seventh aspect, in some implementations of the seventh aspect, before activating the security context based on the operation instruction type of the first operation and/or the type of the terminal device, the method further includes: determining, based on the operation instruction type of the first operation and/or the type of the terminal device, whether to activate the security context.

With reference to the seventh aspect, in some implementations of the seventh aspect, determining, based on the operation instruction type of the first operation, whether to activate the security context includes one or more of the following: when the operation instruction type indicates an inventory operation, determining not to activate the security context; when the operation instruction type indicates a read operation, determining to activate the security context; when the operation instruction type indicates a write operation, determining to activate the security context; and when the operation instruction type indicates a deactivation operation, determining to activate the security context.

With reference to the seventh aspect, in some implementations of the seventh aspect, determining, based on the type of the terminal device, whether to activate the security context includes one or more of the following: when the type of the terminal device is an active tag or a semi-passive tag, determining to activate the security context; and when the type of the terminal device is a passive tag, activating the security context based on the operation instruction type of the first operation.

With reference to the seventh aspect, in some implementations of the seventh aspect, activating the security context based on the operation instruction type of the first operation and/or the type of the terminal device includes: activating, based on the operation instruction type of the first operation and/or the type of the terminal device, a security context corresponding to integrity security protection and/or a security context corresponding to confidentiality security protection.

With reference to the seventh aspect, in some implementations of the seventh aspect, activating, based on the operation instruction type of the first operation, the security context corresponding to integrity security protection and/or the security context corresponding to confidentiality security protection includes: When the operation instruction type indicates an inventory operation, a read operation, or a deactivation operation, the terminal device activates the security context corresponding to integrity security protection; or when the operation instruction type indicates a write operation, the terminal device activates the security context corresponding to integrity security protection and the security context corresponding to confidentiality security protection.

With reference to the seventh aspect, in some implementations of the seventh aspect, activating, based on the type of the terminal device, the security context corresponding to integrity security protection and/or the security context corresponding to confidentiality security protection includes: when the type of the terminal device is an active tag or a semi-passive tag, activating the security context corresponding to integrity security protection and the security context corresponding to confidentiality security protection; when the type of the terminal device is a passive tag, and the operation instruction type indicates an inventory operation, a read operation, or a deactivation operation, activating the security context corresponding to integrity security protection; or when the type of the terminal device is a passive tag, and the operation instruction type indicates a write operation, activating the security context corresponding to integrity security protection and the security context corresponding to confidentiality security protection.

With reference to the seventh aspect, in some implementations of the seventh aspect, before performing security protection on the first message based on the security context, the method further includes: determining, based on the operation instruction type of the first operation, whether to perform security protection on the first message.

With reference to the seventh aspect, in some implementations of the seventh aspect, determining, based on the operation instruction type of the first operation, whether to perform security protection on the first message includes one or more of the following: when the operation instruction type indicates an inventory operation, determining not to perform integrity security protection on the first message; when the operation instruction type indicates a read operation, determining to perform integrity security protection on the first message; when the operation instruction type indicates a deactivation operation, determining to perform integrity security protection on the first message; and when the operation instruction type indicates a write operation, determining to perform integrity security protection on the first message.

With reference to the seventh aspect, in some implementations of the seventh aspect, determining, based on the operation instruction type of the first operation, whether to perform security protection on the first message includes one or more of the following: when the operation instruction type indicates an inventory operation, determining not to perform confidentiality security protection on the first message; when the operation instruction type indicates a read operation, determining not to perform confidentiality security protection on the first message; when the operation instruction type indicates a deactivation operation, determining not to perform confidentiality security protection on the first message; and when the operation instruction type indicates a write operation, determining to perform confidentiality security protection on first data to obtain a first data ciphertext, where the first data is data to be written into a storage area of the terminal device, and the first data ciphertext is carried in the first message.

With reference to the seventh aspect, in some implementations of the seventh aspect, the method further includes: receiving a second message from the terminal device, where the second message indicates whether the first operation is successfully performed, and the second message is a NAS SMP message.

With reference to the seventh aspect, in some implementations of the seventh aspect, the method further includes: determining, based on the operation instruction type of the first operation, whether to perform integrity verification and/or decryption on the second message.

With reference to the seventh aspect, in some implementations of the seventh aspect, determining, based on the operation instruction type of the first operation, whether to perform integrity verification on the second message includes one or more of the following: when the operation instruction type indicates an inventory operation, determining not to perform integrity verification on the second message; when the operation instruction type indicates a read operation, determining to perform integrity verification on the second message; when the operation instruction type indicates a deactivation operation, determining to perform integrity verification on the second message; and when the operation instruction type indicates a write operation, determining to perform integrity verification on the second message.

With reference to the seventh aspect, in some implementations of the seventh aspect, determining, based on the operation instruction type of the first operation, whether to perform decryption on the second message includes one or more of the following: when the operation instruction type indicates a read operation, determining to perform decryption on a second data ciphertext carried in the second message, to obtain second data, where the second data is data in the storage area of the terminal device or data collected by the terminal device; when the operation instruction type indicates a write operation, determining not to perform decryption on the second message; when the operation instruction type indicates a deactivation operation, determining not to perform decryption on the second message; and when the operation instruction type indicates an inventory operation, determining not to perform decryption on the second message.

With reference to the seventh aspect, in some implementations of the seventh aspect, the method further includes: determining, based on the type of the terminal device, whether to delete the security context, specifically including one or more of the following: when the type of the terminal device is an active tag or a semi-passive tag, determining not to delete the security context; and when the type of the terminal device is a passive tag, determining to delete the security context.

With reference to the seventh aspect, in some implementations of the seventh aspect, the method further includes: receiving a service request message from the operation requester, where the service request message is used to request to perform the first operation on the terminal device; and sending a service response message to the operation requester based on the operation instruction type of the first operation, including one or more of the following: When the operation instruction type indicates an inventory operation, the service response message includes the identifier of the terminal device; when the operation instruction type indicates a read operation, the service response message includes the identifier of the terminal device and the second data, where the second data is data read from the storage area of the terminal device or collected by the terminal device; when the operation instruction type indicates a write operation, the service response message includes the identifier of the terminal device; and when the operation instruction type indicates a deactivation operation, the service response message indicates that the first operation is successfully performed, and the service response message includes the identifier of the terminal device.

With reference to the seventh aspect, in some implementations of the seventh aspect, the method further includes: receiving a service request message from the operation requester, where the service request message is used to request to perform the first operation on the terminal device; and sending a first service response message to the operation requester based on the operation instruction type of the first operation, including one or more of the following: When the operation instruction type indicates an inventory operation, the first service response message indicates that the first operation is successfully performed, and the first service response message includes the identifier of the terminal device; when the operation instruction type indicates a read operation, and integrity verification and/or decryption of the second message succeed/succeeds, the first service response message indicates that the first operation is successfully performed, and the first service response message includes the identifier of the terminal device and the second data, where the second data is obtained by performing decryption on the second data ciphertext, and the second data is data read from the storage area of the terminal device or collected by the terminal device; when the operation instruction type indicates a write operation, and integrity verification of the second message succeeds, the first service response message indicates that the first operation is successfully performed, and the first service response message includes the identifier of the terminal device; and when the operation instruction type indicates a deactivation operation, and integrity verification of the second message succeeds, the first service response message indicates that the first operation is successfully performed, and the first service response message includes the identifier of the terminal device.

With reference to the seventh aspect, in some implementations of the seventh aspect, the method further includes: receiving a service request message from the operation requester, where the service request message is used to request to perform the first operation on the terminal device; and sending a second service response message to the operation requester based on the operation instruction type of the first operation, including one or more of the following: When the operation instruction type indicates a read operation, and integrity verification of the second message fails and/or decryption of the second message fails, the second service response message indicates that the first operation fails to be performed; when the operation instruction type indicates a write operation, and integrity verification of the second message fails, the second service response message indicates that the first operation fails to be performed; and when the operation instruction type indicates a deactivation operation, and integrity verification of the second message fails, the second service response message indicates that the first operation fails to be performed.

With reference to the seventh aspect, in some implementations of the seventh aspect, the method further includes: receiving a service request message from the operation requester, where the service request message is used to request to perform the first operation on the terminal device; and when authentication of the terminal device fails, sending a third service response message to the operation requester, where the third service response message indicates that the first operation fails to be performed. Optionally, the third service response message carries a failure cause value indicating that authentication of the terminal device fails.

For beneficial effects of the seventh aspect and some implementations of the seventh aspect, correspondingly refer to the related descriptions in the sixth aspect. Details are not described herein again.

According to an eighth aspect, a communication apparatus is provided. The apparatus includes: a transceiver unit, configured to send a registration request message, where the registration request message is used to request registration with a network, and the registration request message includes an identifier of a terminal device; and a processing unit, configured to activate a security context when authentication of the network by the terminal device succeeds, where the security context is used to protect secure communication between the terminal device and a network element. The processing unit is further configured to perform integrity verification on a first message from the network element based on the security context, where the first message is used to request to perform a first operation on the terminal device. The processing unit is further configured to perform the first operation when the integrity verification succeeds.

The transceiver unit may perform receiving and sending in the first aspect, and the processing unit may perform processing other than receiving and sending in the first aspect.

According to a ninth aspect, a communication apparatus is provided. The apparatus includes: a transceiver unit, configured to receive a registration request message from a terminal device, where the registration request message is used to request registration with a network, and the registration request message includes an identifier of the terminal device; and a processing unit, configured to activate a security context when authentication of the terminal device succeeds, where the security context is used to protect secure communication between the terminal device and a network element. The processing unit is further configured to perform integrity security protection on a first message based on the security context, where the first message is used to request to perform a first operation on the terminal device. The transceiver unit is further configured to send the first message to the terminal device.

The transceiver unit may perform receiving and sending in the second aspect, and the processing unit may perform processing other than receiving and sending in the second aspect.

According to a tenth aspect, a communication apparatus is provided. The apparatus includes: a transceiver unit, configured to send a service request message to a network element, where the service request message is used to request to perform a first operation on a terminal device, and the service request message includes a security capability of the terminal device. The transceiver unit is further configured to receive a service response message from the network element, where the service response message indicates whether the first operation is successfully performed.

The transceiver unit may perform receiving and sending in the third aspect, and the processing unit may perform processing other than receiving and sending in the third aspect.

According to an eleventh aspect, a communication apparatus is provided. The apparatus includes: a transceiver unit, configured to send a registration request message to a network element, where the registration request message is used to request registration with a network, and the registration request message includes an identifier of a terminal device; and the transceiver unit is further configured to receive a first message from the network element, where the first message is used to request to perform a first operation on the terminal device; and a processing unit, configured to determine, based on an operation instruction type of the first operation, whether to activate a security context, where the security context is used to protect secure communication between the terminal device and the network element.

The transceiver unit may perform receiving and sending in the fourth aspect, and the processing unit may perform processing other than receiving and sending in the fourth aspect.

According to a twelfth aspect, a communication apparatus is provided. The apparatus includes: a transceiver unit, configured to receive a registration request message from a terminal device, where the registration request message is used to request registration with a network, and the registration request message includes an identifier of the terminal device; and a processing unit, configured to determine, based on an operation instruction type of a first operation, whether to activate a security context, where the security context is used to protect secure communication between the terminal device and a network element. The processing unit is further configured to: when it is determined to activate the security context, perform security protection on a to-be-sent first message based on the security context, where the first message is used to request to perform the first operation on the terminal device; and the transceiver unit is further configured to send the first message to the terminal device. Alternatively, when it is determined not to activate the security context, the transceiver unit is further configured to send the first message to the terminal device.

The transceiver unit may perform receiving and sending in the fifth aspect, and the processing unit may perform processing other than receiving and sending in the fifth aspect.

According to a thirteenth aspect, a communication apparatus is provided. The apparatus includes: a transceiver unit, configured to send a registration request message to a network element, where the registration request message is used to request registration with a network, and the registration request message includes an identifier of a terminal device; and the transceiver unit is further configured to receive a first message from the network element, where the first message indicates to perform a first operation on the terminal device, and the first message is a NAS SMC message; and a processing unit, configured to activate a security context based on the NAS SMC message, where the security context is used to protect secure communication between the terminal device and the network element. The processing unit is further configured to perform integrity verification and/or decryption on the first message from the network element based on the security context. The processing unit is further configured to perform, by the terminal device, the first operation after the integrity verification and/or the decryption.

The transceiver unit may perform receiving and sending in the sixth aspect, and the processing unit may perform processing other than receiving and sending in the sixth aspect.

According to a fourteenth aspect, a communication apparatus is provided. The apparatus includes: a transceiver unit, configured to receive a registration request message from a terminal device, where the registration request message is used to request registration with a network, and the registration request message includes an identifier of the terminal device; and a processing unit, configured to activate a security context, where the security context is used to protect secure communication between the terminal device and a network element. The processing unit is further configured to perform security protection on a first message based on the security context, where the security protection includes integrity security protection and/or confidentiality security protection, the first message indicates to perform a first operation on the terminal device, and the first message is a NAS SMC message. The transceiver unit is further configured to send the first message on which security protection is performed to the terminal device.

The transceiver unit may perform receiving and sending in the sixth aspect, and the processing unit may perform processing other than receiving and sending in the sixth aspect.

According to a fifteenth aspect, a communication apparatus is provided, and includes a processor. The processor is coupled to a memory. The memory is configured to store a computer program. The processor is configured to invoke the computer program from the memory and run the computer program, so that the communication apparatus performs the method in any one of the first aspect to the third aspect and the possible implementations of the first aspect to the third aspect, or the communication apparatus performs the method in any one of the third aspect to the fifth aspect and the possible implementations of the third aspect to the fifth aspect.

Optionally, there is one or more processors, and there is one or more memories.

Optionally, the memory may be integrated with the processor, or the memory and the processor are separately disposed.

Optionally, the communication apparatus further includes a transceiver.

According to a sixteenth aspect, a communication system is provided, and includes a terminal device, a network element, and/or an operation requester. The terminal device is configured to perform the method in any one of the first aspect and the possible implementations of the first aspect, any one of the fourth aspect and the possible implementations of the fourth aspect, or any one of the sixth aspect and the possible implementations of the sixth aspect. The network element is configured to perform the method in any one of the second aspect and the possible implementations of the second aspect, any one of the fifth aspect and the possible implementations of the fifth aspect, or any one of the seventh aspect and the possible implementations of the seventh aspect. The operation requester is configured to perform the method in any one of the third aspect and the possible implementations of the third aspect.

According to a seventeenth aspect, a computer-readable storage medium is provided. The computer-readable storage medium stores a computer program or code. When the computer program or code is run on a computer, the computer is enabled to perform the method in any one of the first aspect to the third aspect and the possible implementations of the first aspect to the third aspect, or the computer is enabled to perform the method in any one of the fourth aspect to the sixth aspect and the possible implementations of the fourth aspect to the sixth aspect.

According to an eighteenth aspect, a chip is provided, and includes at least one processor. The at least one processor is coupled to a memory. The memory is configured to store a computer program. The processor is configured to invoke the computer program from the memory and run the computer program, so that a terminal device on which the chip system is mounted performs the method in any one of the first aspect and the possible implementations of the first aspect, any one of the fourth aspect and the possible implementations of the fourth aspect, or any one of the sixth aspect and the possible implementations of the sixth aspect; a core network element on which the chip system is mounted performs the method in any one of the second aspect and the possible implementations of the second aspect, any one of the fifth aspect and the possible implementations of the fifth aspect, or any one of the seventh aspect and the possible implementations of the seventh aspect; or an operation requester on which the chip system is mounted performs the method in any one of the third aspect and the possible implementation of the third aspect.

The chip may include an input circuit or interface configured to send information or data and an output circuit or interface configured to receive information or data.

According to a nineteenth aspect, a computer program product is provided. The computer program product includes computer program code. When the computer program code is run, the method in any one of the first aspect to the fifth aspect and the possible implementation of the first aspect to the fifth aspect are performed.

### BRIEF DESCRIPTION OF DRAWINGS

FIG. 1 is a diagram of a structure of a network architecture 100 applicable to an embodiment of this application;
FIG. 2 is a diagram of a structure of a network architecture 200 applicable to an embodiment of this application;
FIG. 3 is a schematic flowchart of a service triggering and execution method 300;
FIG. 4 is a schematic flowchart of a communication method 400 according to an embodiment of this application;
FIG. 5A and FIG. 5B are schematic flowcharts of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a diagram of a structure of a communication apparatus 1000 according to an embodiment of this application;
FIG. 9 is a diagram of a structure of a communication apparatus 2000 according to an embodiment of this application; and
FIG. 10 is a diagram of a structure of a chip system 3000 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network compliant with a requirement of the 3rd generation partnership project (3rd generation partnership project, 3GPP) standard, which is referred to as a 3GPP network for short. The 3GPP network usually includes but is not limited to a 5th generation (5th generation, 5G) mobile communication network, a 4th generation (4th generation, 4G) mobile communication network, and another future communication system like a (6th generation, 6G) network.

For ease of description, the PLMN or the 5G network is used as an example for description in embodiments of this application.

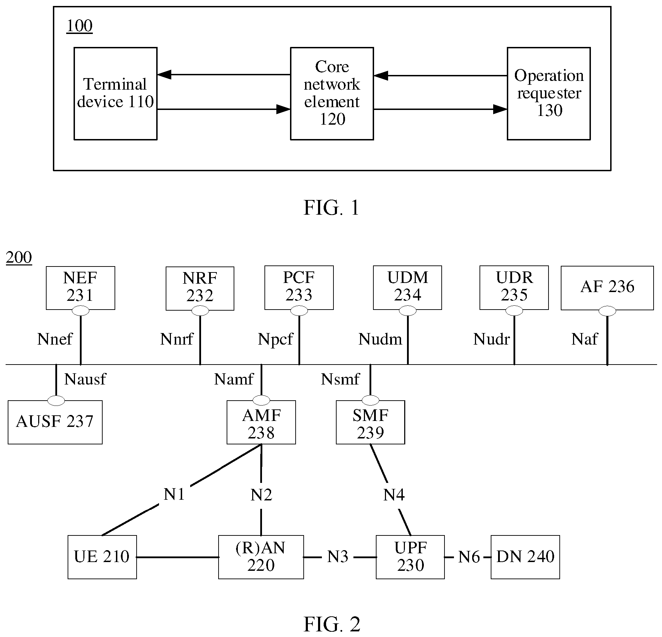

FIG. 1 is a diagram of a structure of a network architecture 100 applicable to an embodiment of this application. As shown in FIG. 1, the network architecture is an ambient internet of things (Ambient IoT, A-IoT) architecture, where an A-IoT may also be referred to as a passive internet of things (Passive IoT, P-IoT). The network architecture includes a terminal device 110, a core network element 120, and an operation requester 130. Optionally, the network architecture further includes a reader (reader).

The following briefly describes each network node included in the ambient internet of things architecture 200.

### 1. Terminal device 110

The terminal device 110 is not equipped with or reliant on a power supply device such as a battery, and may obtain energy from an environment in manners such as radio, solar energy, a radio frequency, light energy, wind energy, water energy, thermal energy, kinetic energy, or tidal energy, to support data sensing, transmission, and distributed computing. An energy obtaining manner of the terminal device 110 is not limited in this application.

For example, the terminal device 110 may be in a tag form, or may be in another terminal form. A form and a name of the terminal device are not limited in this application. For details, refer to related descriptions of a terminal device part in FIG. 2 below. For ease of description, an example in which the terminal device 110 is tag (tag) is used for description in embodiments of this application. It should be understood that the tag includes a passive tag (passive tag), a semi-passive tag (semi-passive tag), and an active tag (active tag). The passive tag may be referred to as a type-A device characterized by having no energy storage and being incapable of independently generating a signal. The semi-passive tag may be referred to as a type-B device characterized by having specific energy storage for reflecting a signal and being incapable of independently generating a signal. The active tag may be referred to as a type-C device characterized by having energy storage and being capable of independently generating a signal, for example, including an active radio frequency component for transmission.

### 2. Core network element 120

The core network element 120 may be a core network element in the 5G network. For details, refer to related descriptions of a core network part in FIG. 2 below. For example, the core network element may be an access and mobility management function (access and mobility management function, AMF), and is responsible for access control and mobility management for access of the terminal device 110 to an operator network, for example, including functions such as mobility status management, allocation of a temporary user identity, and user authentication and authorization.

### 3. Operation requester 130

The operation requester 130 may be understood as a device that sends an operation instruction type, and includes but is not limited to a server (server), a passive internet of things server P-IoT server, an application function (application function, AF), a network function (network function, NF), or another device that sends the operation instruction type. For example, the operation requester 130 may correspond to a specific type of user. This type of user may include an enterprise, a tenant, a third party, or a company. This is not limited in this application. That the operation requester 130 corresponds to the specific type of user may be understood as that the operation requester 130 belongs to this type of user and is managed by this type of user.

When performing an operation on the terminal device 110, the operation requester 130 may send an operation instruction type via the core network element 120. The operation instruction type includes but is not limited to an inventory operation, a read operation, a write operation, a deactivation operation, and the like. Optionally, the core network element 120 may send the operation instruction type to the terminal device via the reader (reader).

In an example, the operation requester 130 may send the operation instruction type to the terminal device 110 through a control plane channel. For example, the operation requester 130 sends the operation instruction type to the core network element 120, and then the core network element 120 sends the operation instruction type to the terminal device 110. In this case, the server may be the NF, the AF, an application server (application server, AS), or a passive internet of things application function (P-IoT AF). A control plane device may be an AMF, a NEF, an SMF, a PCF, UDM, or a network slice or standalone non-public network (standalone non-public network, SNPN) authentication and authorization function (Network Slice-specific and SNPN Authentication and Authorization Function, NSSAAF).

### 4. Reader (reader)

The reader may interact with the terminal device 110 by using a radio frequency signal or a radio signal. In an example, when the terminal device 110 enters an effective identification range of the reader, the terminal device 110 receives a radio frequency signal sent by the reader, and sends, by using energy obtained through an induced current, information (corresponding to the passive tag) stored in a chip. In another example, the terminal device 110 stores a part of electric energy in manners such as solar energy, and may actively send a signal of a specific frequency (corresponding to the semi-passive or active tag); and after receiving and decoding the signal, the reader sends data to a central information system for processing.

For example, the reader may be an access network device, for example, a base station, a pole station, a micro base station, a macro base station, or an integrated access and backhaul (integrated access and backhaul, IAB) node. A form and a name of the reader are not limited in this application. Optionally, the reader may alternatively be a terminal device, for example, a mobile phone, an IoT device, or a handheld reader/writer. In this case, the operation requester 130 may send an instruction to the reader via a user plane device and an access network device (for example, a RAN), to request to perform one or more of an inventory operation (or referred to as an inventorying operation), a read operation, a write operation, and a deactivation operation. For ease of description, an example in which the reader is a base station (for example, a gNB) is used for description in embodiments of this application. In this case, the reader has a function of performing at least one of the following operations on the terminal device 110: an inventory operation (or referred to as an inventorying operation), a read operation, a write operation, a deactivation operation (or referred to as a deactivation operation), and the like.

The following briefly describes the foregoing operations.
(1) An inventory operation means verifying a status of an existing terminal device, and may also be understood as obtaining identification information of the terminal device. An identifier of the terminal device may be allocated by an enterprise, or may be allocated by an operator. For example, the identifier of the terminal device may be a globally unique code (for example, an electronic product code (Electronic Product Code, EPC)), or may be a temporary identifier. In an inventory procedure, the operation requester 130 may send an inventory instruction, where the inventory instruction may include at least one of an identifier range of the terminal device, a reader identifier, and location information. After receiving the inventory instruction, the reader or the core network element 120 performs inventory on the terminal device 110 according to the inventory instruction, and sends the identification information of the terminal device to the operation requester 130. Alternatively, the operation requester 130 transparently transmits the inventory instruction to the terminal device 110 via the reader or the core network element 120, and the terminal device 110 learns, based on content of the instruction, that an inventory operation is indicated, and sends the identification information of the terminal device 110 to the operation requester 130 via the reader or the core network element 120; or the terminal device 110 sends the identification information of the terminal device 110 to the core network element 120 via the reader, and the core network element 120 forwards the identification information of the terminal device 110 to the operation requester 130.
(2) A read operation means reading data from the terminal device 110. The terminal device 110 may have a storage function, and a storage area of the terminal device 110 may store data. If the operation requester 130 sends a read instruction, the reader or the core network element 120 performs a read operation on the terminal device 110 according to the read instruction, to read data from the storage area of the terminal device 110, and sends the data to the operation requester 130.
(3) A write operation means writing data into the terminal device 110. The operation requester 130 sends a write instruction, where the write instruction includes data #1. In this case, the reader or the core network element 120 performs a write operation on the terminal device 110 according to the write instruction, to write the data #1 into the storage area of the terminal device 110.
(4) A deactivation operation means invalidating or deactivating the terminal device 110. The operation requester 130 may send a deactivation instruction, where the deactivation instruction includes the identifier of the terminal device 110 (that is, an identifier of a terminal device 110 expected to be deactivated or invalidated). In this case, the reader or the core network element 120 performs a deactivation operation on the terminal device 110 according to the deactivation instruction. After the operation is completed, the terminal device 110 is invalidated or deactivated, which means that inventory or another operation can no longer be performed on the terminal device 110. In other words, after the terminal device 110 is invalidated or deactivated, the reader cannot obtain information about the invalidated terminal device 110, and cannot perform message exchange with the invalidated terminal device 110.

It should be understood that the network architecture 100 shown in FIG. 1 is merely an example provided for ease of understanding, and a network architecture applicable to embodiments of this application is not limited thereto. Any network architecture that can implement functions of the foregoing network elements is applicable to embodiments of this application.

FIG. 2 is a diagram of a structure of a network architecture 200 according to an embodiment of this application. A 5G network architecture based on a service-based architecture SBA in a non-roaming scenario defined in a 3GPP standardization process is used as an example for description. As shown in FIG. 2, the network architecture includes three parts: a terminal device part, a data network (data network, DN) part, and an operator network PLMN part. The following briefly describes a function of a network element of each part.
(1) The terminal device part may include a UE 210, and the UE 210 may also be referred to as a user equipment (user equipment, UE). The UE 210 in this application is a device having a wireless transceiver function, and may communicate with one or more core network (core network, CN) devices via an access network device (which may also be referred to as an access device) in a radio access network (radio access network, RAN) 220. The UE 210 may also be referred to as an access terminal, a terminal, a subscriber unit, a subscriber station, a mobile station, a remote station, a remote terminal, a mobile device, a user terminal, a user agent, a user apparatus, or the like. The UE 210 may be deployed on the land, including an indoor, outdoor, handheld, or in-vehicle device; may be deployed on the water (for example, on a ship); or may be deployed in the air (for example, on a plane, a balloon, or a satellite). The UE 210 may be a cellular phone, a cordless phone, a session initiation protocol (session initiation protocol, SIP) phone, a smartphone, a mobile phone (mobile phone), a wireless local loop (wireless local loop, WLL) station, a personal digital assistant (personal digital assistant, PDA), or the like. Alternatively, the UE 210 may be a handheld device with a wireless communication function, a computing device or another device connected to a wireless modem, an in-vehicle device, a wearable device, an uncrewed aerial vehicle (unmanned aerial vehicle/uncrewed aerial vehicle, UAV) device, a terminal in an internet of things and an internet of vehicles, a terminal in any form in a 5G network and a future network, a relay user equipment, a terminal in a future evolved 6G network, or the like. The relay user equipment may be, for example, a 5G residential gateway (residential gateway, RG). For example, the UE 210 may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in transportation safety, a wireless terminal in a smart city, or a wireless terminal in a smart home. Alternatively, the UE 210 may be a terminal device such as a logical entity, a smart device (for example, a mobile phone), or a smart terminal, a communication device such as a server, a gateway, a base station, or a controller, or an IoT device such as an internet of things device (for example, a tag, refer to 110 shown in FIG. 1), a sensor, an electric meter, or a water meter. A type or the like of the terminal device is not limited in embodiments of this application. For ease of description, in this application, an example in which the UE or the tag represents the terminal device is used for description below.
(2) The data network part may include a data network DN 240, which may also be referred to as a packet data network (packet data network, PDN), and is usually a network located outside an operator network, for example, a third-party network. In some implementations, the DN may alternatively be deployed by an operator, that is, the DN is a part of the PLMN. Whether the DN belongs to the PLMN is not limited in this application. The DN 240 may be deployed with a plurality of services, and may provide the UE 210 with services such as a data service and/or a voice service.
(3) The operator network PLMN part may include but is not limited to the (radio) access network ((radio) access network, (R)AN) 120 and a core network (core network, CN) part. The UE 210 may establish a connection to the operator network through an interface (for example, N1) provided by the operator network, and use the services such as the data service and/or the voice service provided by the operator network. The UE 210 may further access the DN 240 through the operator network, and use an operator service deployed on the DN 240 and/or a service provided by a third party.

The (R)AN 220, which may be considered as a sub-network of the operator network, is an implementation system between a service node in the operator network and the UE 210. To access the operator network, the UE 210 first passes through the (R)AN 220, and then may be connected to the service node in the operator network through the (R)AN 220. An access network device (RAN device) in embodiments of this application is a device that provides a wireless communication function for the UE 210, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission point (transmitting and receiving point, TRP), a transmitting point (transmitting point, TP), a pico base station device (pico), a mobile switching center, a network device in a future network, or the like. In systems using different radio access technologies, devices with functions of the access network device may have different names. For ease of description, in all embodiments of this application, apparatuses that provide the wireless communication function for the UE 210 are collectively referred to as an access network device, or referred to as a RAN or an AN for short. It should be understood that a specific type of the access network device is not limited in this specification.

The CN part may include but is not limited to the following network functions (network functions, NFs): a user plane function (user plane function, UPF) 230, a network exposure function (network exposure function, NEF) 231, a network function repository function (network function repository function, NRF) 232, a policy control function (policy control function, PCF) 233, a unified data management (unified data management, UDM) function 234, a unified data repository (unified data repository, UDR) function 235, an application function (application function, AF) 236, an authentication server function (authentication server function, AUSF) 237, an access and mobility management function (access and mobility management function, AMF) 238, and a session management function (session management function, SMF) 239.

The following further briefly describes the NF functions included in the CN.
1. The UPF 230 is a gateway provided by the operator, is a gateway for communication between the operator network and the DN 240, and is mainly responsible for data packet routing and transmission, data packet detection, service usage reporting, quality of service (quality of service, QoS) processing, lawful interception, uplink data packet detection, downlink data packet storage, and the like. The UPF 230 may also be referred to as a user plane device, and may receive user data from the DN 240 and transmit the user data to the UE 210 through the (R)AN 220. The UPF 230 may also receive user data from the UE 210 through the (R)AN 220 and forward the user data to the DN 240. A transmission resource and a scheduling function of the UPF 230 that provide a service for the UE 210 are managed and controlled by the SMF 239.
2. The NEF 231 is a control plane function provided by the operator, mainly enables the third party to use a service provided by a network, supports the network in exposing a capability, an event, and data analysis of the network, provides security configuration information for the PLMN from an external application, provides conversion of information exchanged inside and outside the PLMN, and the like. The NEF 231 may also be referred to as a network exposure device, and may provide an Nnef service.
3. The NRF 232 is a control plane function provided by the operator, and may be used to maintain real-time information of a network function and a service in a network. For example, the NRF supports network service discovery, maintains services supported by NF configuration data (an NF profile) of NF instances, supports service discovery of a communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 233 is a control plane function provided by the operator, and supports a unified policy framework to govern network behavior and provide subscription information related to a policy rule and a policy decision for another control function.
5. The UDM 234 is a control plane function provided by the operator, and is responsible for storing information such as a subscriber permanent identifier (subscriber permanent identifier, SUPI) of a subscriber in the operator network, a public subscription identifier (generic public subscription identifier, GPSI) of the subscriber, and a credential (credential). The information may be used for authentication and authorization during access of the UE 210 to the operator network. The SUPI is first encrypted in a transmission process, and the encrypted SUPI is referred to as a subscription concealed identifier (subscription concealed identifier, SUCI). The UDM 234 may also be referred to as a unified data management device, a unified data management network element, a data management device, a unified data management entity, or the like.
6. The UDR 235 is a control plane function provided by the operator, provides a function of storing and obtaining subscription data for the UDM, provides storage and obtaining of policy data for the PCF, stores and obtains NF group ID (group ID) information of a user, and the like. The UDR 235 may also be referred to as a user database device, a user database entity, a user database network element, or the like. A user database mainly includes the following functions: a function of accessing types of data such as subscription data, policy data, and application data.
7. The AF 236 is a control plane function provided by the operator, and mainly interacts with another NF in the PLMN to provide a corresponding service, for example, provide visited network selection information for a roaming UE, guide routing of a data flow, and access the NEF 231. The AF may be deployed inside the PLMN by the operator or outside the operator network.
8. The AUSF 237 is a control plane function provided by the operator, and is usually used for primary authentication, that is, authentication between the UE 210 (a subscriber) and the operator network. After receiving an authentication request initiated by the subscriber, the AUSF 237 may perform authentication and/or authorization on the subscriber by using authentication information and/or authorization information stored in the UDM 234, or generate authentication and/or authorization information of the subscriber through the UDM 234. The AUSF 237 may feed back the authentication information and/or the authorization information to the subscriber.
9. The AMF 238 is a control plane network function provided by the operator network, and is responsible for access control and mobility management during access of the UE 210 to the operator network, for example, including functions such as mobility status management, allocation of a temporary user identity, and user authentication and authorization. For example, the AMF 238 may also be referred to as an access and mobility management device, an access and mobility management function entity, an access and mobility management function network element, a mobility management device, a mobility management network element, a mobility management entity, or the like, and may provide an Namf service.
10. The SMF 239 is a control plane network function provided by the operator network, and is responsible for managing a protocol data unit PDU session of the UE 210. The terminal device and the DN 240 transmit a PDU to each other by using the PDU session. The SMF 239 is responsible for establishment, maintenance, deletion, and the like of the PDU session. The SMF 239 includes session-related functions such as session management (for example, session establishment, modification, and release, including tunnel maintenance between the user plane function UPF 230 and the (R)AN 220), selection and control of the UPF 230, service and session continuity (service and session continuity, SSC) mode selection, and roaming. The SMF 239 may also be referred to as a session management device, and may provide an Nsmf service.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

It should be understood that the foregoing names are defined only for ease of distinguishing between different functions, and should not constitute any limitation on this application. This application does not exclude a possibility that other names are used in the 5G network and another future network. For example, in the 6G network, a part or all of the foregoing network elements may still use terms in 5G, or may use other names.

In FIG. 2, Nnef, Nnrf, Npcf, Nudm, Nudr, Naf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that a name of an interface between the network functions in FIG. 2 is merely an example. During specific implementation, the name of the interface in the system architecture may alternatively be another name. This is not limited in this application. In addition, names of messages (or signaling) transmitted between the foregoing network elements are merely examples, and do not constitute any limitation on functions of the messages.

For ease of description, in embodiments of this application, a network function (for example, the NEF 231, ..., and the SMF 239) is collectively/briefly referred to as an NF. In other words, the NF described below in embodiments of this application may alternatively be any network function. In addition, FIG. 2 schematically describes merely a part of network functions, and the NF described below is not limited to the network functions shown in FIG. 2.

It should be understood that the foregoing network architecture 200 applied to embodiments of this application is merely a network architecture described from a perspective of the service-based architecture, and a network architecture applicable to embodiments of this application is not limited thereto. Any network architecture that can implement functions of the foregoing network elements is applicable to embodiments of this application. It should be understood that the AMF, the SMF, the UPF, the NEF, the AUSF, the NRF, the PCF, and the UDM shown in FIG. 2 may be understood as network elements configured to implement different functions in a core network, for example, may be combined as required to form a network slice. These core network elements may be independent devices, or may be integrated into a same device to implement different functions. Specific forms of the foregoing network elements are not limited in this application.

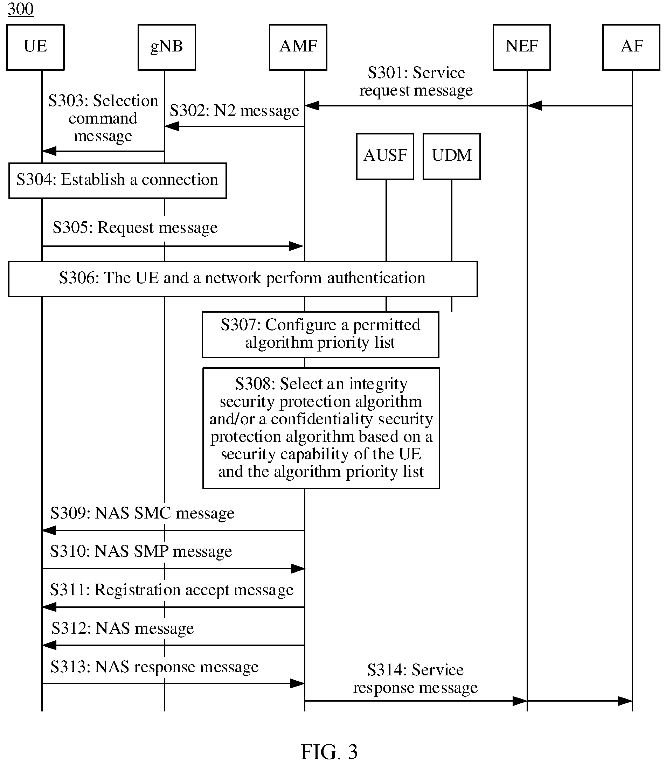

Based on the network architectures in FIG. 1 and FIG. 2, the following briefly describes, with reference to FIG. 3, a service triggering and execution method by using an example in which the terminal device 110 is a UE (or a tag), the core network element 120 is the AMF, the reader is a gNB, and the operation requester 130 is the AF. For a part that is not detailed, refer to an existing protocol.

FIG. 3 is a schematic flowchart of a service triggering and execution method. As shown in FIG. 3, the method 300 includes the following plurality of steps. For a part that is not described in detail, refer to the existing protocol.

S301: The AF sends a service request message to the AMF, and correspondingly, the AMF receives the service request message from the AF.

The service request message may be a service request message, and is used to request to perform an operation #1 on the UE. The service request message may include an operation instruction type (for example, an action or a command) and a UE identifier group (UE ID range). The operation instruction type indicates that the AF currently requests to perform the operation #1 on the UE, including but not limited to an inventory operation, a read operation, a write operation, and a deactivation operation. For explanations of a specific operation, refer to the foregoing related descriptions. Optionally, when the operation instruction type indicates a write operation (or in other words, the operation #1 is a write operation), the service request message further includes data #1 (data1) indicating data to be written into a storage area of the UE. The UE identifier group indicates a group in which the UE is located, and the group may include one or more UEs. Therefore, the AF may request to perform the operation #1 on the one or more UEs. Alternatively, the UE identifier group may be a set of single UE identifiers, or may be a filter (for example, a mask, a possible implementation is a field including a wildcard) for UE matching. For example, when the mask is 123***, an identifier of the UE is a 6-bit identifier that starts with 123. This is not limited in this application.

For example, the AF may send the service request message to the AMF through the NEF, to request to perform the operation #1 on the UE. For example, the AF sends a service request message #1 to the NEF, and the NEF sends a service request message #2 to the AMF. The service request message #1 and the service request message #2 may be the same or different. For example, a source address carried in the service request message #1 is used for the AF, and a destination address indicates the NEF; and a source address carried in the service request message #2 is used for the NEF, and a destination address indicates the AMF.

S302: The AMF sends an N2 message to the gNB, and correspondingly, the gNB receives the N2 message from the AMF.

For example, the N2 message may be an N2 message, and the N2 message includes a random access indication (random access indication) and the mask. The random access indication is used to trigger the gNB to initiate excitation to the UE, so that the UE accesses a network.

S303: The gNB sends a selection command message to the UE, and correspondingly, the UE receives the selection command message from the gNB.

For example, the selection command message includes a UE identifier or a UE identifier group, and is used to trigger a target UE to access the network. For example, when the selection command message includes the mask being 123***, it indicates that the target UE with a 6-bit identifier starting with 123 accesses the network.

S304: The UE establishes a connection to the gNB.

For example, the UE randomly accesses the network, that is, the UE establishes a communication connection to the gNB.

S305: The UE sends a request message to the AMF, and correspondingly, the AMF receives the request message from the UE.

The request message is used to request to obtain a service. The request message may include identification information (for example, a UE ID) of the UE and a security capability of the UE. The security capability of the UE indicates one or more security algorithms supported by the UE, including a confidentiality security algorithm and/or an integrity security algorithm.

For example, the integrity security algorithm includes one or more of the following: an AES integrity security protection algorithm, a SNOW integrity security protection algorithm, a ZUC integrity security protection algorithm, or a null integrity security protection algorithm; and the confidentiality protection algorithm includes one or more of the following: a ZUC confidentiality security protection algorithm, an AES confidentiality security protection algorithm, a SNOW confidentiality security protection algorithm, or a null integrity security protection algorithm. For example, the security capability of the UE indicates that an integrity security algorithm supported by the UE is the SNOW integrity security protection algorithm and the ZUC integrity security protection algorithm, and a confidentiality security algorithm supported by the UE is the ZUC confidentiality security protection algorithm.

Optionally, the UE may send the request message to the AMF through the gNB. For example, the UE sends a request message #1 to the gNB, and then the gNB sends a request message #2 to the AMF. The request message #1 and the request message #2 are used to request to obtain the service from the network. The request message #1 and the request message #2 carry the UE ID and the security algorithm supported by the UE, for example, the SNOW integrity security protection algorithm, the ZUC integrity security protection algorithm, and the ZUC confidentiality security protection algorithm. For ease of understanding and description, an example in which the request message is a registration request (registration request) message is used for description. It should be understood that the registration request message is used to request registration with the network.

S306: The UE and the network perform authentication.

For example, the AMF triggers an authentication procedure for the UE. An authentication method includes but is not limited to a 5G authentication and key agreement (5G Authentication and Key Agreement, 5G-AKA) authentication method and an extensible authentication protocol-authentication and key agreement (Extensible Authentication Protocol, EAP-AKA') authentication method. For example, the AMF sends an authentication request #1 to the AUSF, and the AUSF sends an authentication request #2 to the UDM. The authentication request #1 and the authentication request #2 are used to request to authenticate the UE. The UDM generates an authentication vector and sends an authentication response #1 to the AUSF. The AUSF sends an authentication response #2 to the AMF. The authentication response #1 and the authentication response #2 include the authentication vector, for example, a 5G-AKA authentication vector or an EAP-AKA' authentication vector. The EAP-AKA' authentication vector is used as an example. The AMF sends an EAP request/AKA'-challenge message to the UE by using a NAS message. After completing authenticating the network, the UE sends an EAP-response/AKA'-challenge message to the AMF by using a NAS message. Then, the AMF sends an Nausf_UE Authentication_Authenticate request message carrying the EAP-response/AKA'-challenge message to the AUSF. The AUSF verifies the EAP-response/AKA'-challenge message. If verification succeeds, authentication of the UE is completed, and EAP success is sent to the UE through the AMF, to indicate that authentication succeeds. For a specific implementation of authentication, refer to related descriptions in the existing protocol TS 33.501.

S307: The AMF configures a permitted algorithm priority list.

For example, the configuration may be dynamic configuration (configured) by a network management device or a platform by using signaling or a message, or may be preconfiguration (pre-configured). For example, the configuration may be implemented by pre-storing corresponding code or a corresponding table in the AMF, or may be implemented in another manner that may be used to indicate the algorithm priority list. An implementation of the configuration is not limited in this application. For example, the permitted algorithm priority list configured by the network management device or platform for the AMF includes an integrity security algorithm priority list and/or a confidentiality security algorithm priority list. The configuration may be preconfiguration. Alternatively, the AMF sends a request message to the network management device or platform in step S307 to obtain the algorithm priority list, and then the network management device or platform configures the algorithm priority list for the AMF based on the request message. This is not limited in this application.

For example, algorithm priorities in the integrity security algorithm priority list in descending order are: the AES integrity security protection algorithm, the SNOW integrity security protection algorithm, the ZUC integrity security protection algorithm, and the null integrity security protection algorithm; and algorithm priorities in the confidentiality security algorithm priority list in descending order are: the ZUC confidentiality security protection algorithm, the AES confidentiality security protection algorithm, the SNOW confidentiality security protection algorithm, and the null integrity security protection algorithm.

It should be understood that the foregoing security algorithms included in the integrity security algorithm priority list and/or the confidentiality security algorithm priority list and sorting of the corresponding algorithm priorities are merely examples provided for ease of understanding. This is not limited in this application.

It should be noted that time of performing step S307 is not limited in this application. Step S307 may be performed at any time before step S308, for example, before step S301, or after step S305.

S308: The AMF selects an integrity security protection algorithm and/or a confidentiality security protection algorithm based on the security capability of the UE and the algorithm priority list.

For example, the integrity security protection algorithm and the confidentiality security protection algorithm that are selected by the AMF based on the security capability of the UE carried in step S305 and the algorithm priority list configured by the AMF in S307 are the SNOW integrity security protection algorithm and the ZUC confidentiality security protection algorithm.

It should be understood that after the authentication procedure in step S306, the UE and an AMF side usually generate or obtain a new NAS layer key (for example, K_{AMF}). The NAS layer key (for example, a K_{AMF} sub-key) is activated for use by triggering a NAS SMC procedure, corresponding to the following steps S309 and S310. It should be noted that the NAS SMC procedure is used to notify the UE of the integrity security protection algorithm and the confidentiality security protection algorithm that are selected on the one hand, and on the other hand, is used to activate the NAS layer key.

S309: The AMF sends a NAS SMC message to the UE, and correspondingly, the UE receives the NAS SMC message from the AMF.

For example, the NAS SMC message includes but is not limited to an integrity security protection algorithm identifier and/or a confidentiality security protection algorithm identifier that are/is selected by the AMF in step S308, an ngKSI, a replayed security capability of the UE, and MAC #1. The integrity security protection algorithm identifier identifies the SNOW integrity security protection algorithm selected in step S308. The confidentiality security protection algorithm identifier identifies the ZUC confidentiality security protection algorithm selected in step S308. The ngKSI identifies the NAS layer key K_{AMF}. This is because the UE may store a plurality of NAS security contexts, and the ngKSI identifies a specific NAS security context. The replayed security capability of the UE is used to verify whether the security capability of the UE is tampered with, that is, to prevent a downgrade attack. For example, the AMF performs integrity security protection on the NAS SMC message by using the SNOW integrity security protection algorithm selected by the AMF. After integrity security protection is performed on the NAS SMC message, a calculation result of integrity security protection may be recorded as the MAC #1. The MAC #1 is carried in the NAS SMC message, and is used by the UE to perform integrity verification on the received NAS SMC message.

It should be understood that an input parameter for calculation of the MAC #1 by the AMF includes a bearer identifier, a direction parameter, a counter value (counter), and an information element in the NAS SMC message. The bearer identifier is used to distinguish between different bearers. For example, in a 3GPP connection, the bearer identifier may be "0x01"; and in a non-3GPP connection, the bearer identifier may be "0x02". The direction parameter is used to distinguish whether the NAS SMC message is an uplink message or a downlink message. For example, in the uplink message, a value of the direction parameter is 0; and in the downlink message, a value of the direction parameter is 1. The counter value is used as a freshness parameter to prevent a replay attack (replay attack).

For example, the NAS security context stored in the UE includes one or more of a key identifier, the security capability of the UE, an uplink/downlink NAS count value, a confidentiality security protection key, an integrity security protection key, the selected integrity security protection algorithm identifier, and the selected confidentiality security protection algorithm identifier.

It may be understood that integrity security protection may be ensuring, by using a physical means or a cryptographic method, that the information is not tampered with or modified without authorization in a generation, transmission, or storage process and subsequently. Integrity security protection may be performed on the information by using the cryptographic method in a plurality of manners. For example, a one-way function (for example, a hash function hash) is used, and a symmetric key (integrity protection key) and the message are used as input parameters to generate MAC, to implement integrity security protection on the message. For example, integrity security protection may be performing integrity protection on a to-be-sent message based on a selected integrity security protection algorithm and an integrity security protection key. For example, the integrity protection key may be a NAS integrity key (NAS Integrity Key, Knasint). Knasint is used to perform integrity security protection on the to-be-sent message. For example, Knasint may be a key at a UE granularity. An input key for deriving Knasint is Kamf, and an input parameter includes a constant marked for calculating Knasint and an integrity security protection algorithm identifier. Similarly, confidentiality security protection may be encrypting the to-be-sent message based on a selected confidentiality security protection algorithm and a confidentiality security protection key. For example, the confidentiality security protection key may be Knasenc, and is used to perform confidentiality security protection on the to-be-sent message. For example, Knasenc may be a key at the UE granularity. An input key for deriving Knasenc is Kamf, and an input parameter includes a constant marked for calculating Knasenc and a confidentiality security protection algorithm identifier.

Further, the UE performs integrity verification on the received NAS SMC message. For example, the UE obtains MAC #2 through calculation based on the SNOW integrity security protection algorithm carried in the NAS SMC message. For a specific calculation manner, refer to the foregoing calculation manner of the MAC #1. Then, the UE compares a value of the MAC #1 with a value of the MAC #1 carried in the NAS SMC message. If the value of the MAC #1 is the same as the value of the MAC #1, it may be considered that integrity verification succeeds; or if the value of the MAC #1 is different from the value of the MAC #1, integrity verification fails. When integrity verification succeeds, the UE stores the integrity security protection algorithm and the confidentiality security protection algorithm that are carried in the NAS SMC message as a part of the NAS security context, and performs security protection on a subsequent NAS message (for example, a NAS SMP message in step S310) by using the NAS security context.

S310: The UE sends the NAS SMP message to the AMF, and correspondingly, the AMF receives the NAS SMP message from the UE.

The NAS SMP message includes the MAC #2.

S311: The AMF sends a registration accept message to the UE, and correspondingly, the UE receives the registration accept message from the AMF.

For example, the AMF sends the registration accept message to the UE in response to the NAS SMP message or based on UE information (such as authorization information and configuration information) received from another network element. Optionally, the registration accept message carries information used to update a UE parameter, where the UE parameter may be slice information, closed access group information, or the like. Further, optionally, after updating the UE parameter, the UE may send a registration complete message to the AMF (not shown in the figure).

It should be noted that step S311 may be performed before step S312, or may be performed after step S313. This is not limited in this application.

Further, for the operation instruction type carried in the service request message in step S301, the AMF requests to perform the operation #1 on the UE, and performs the following step S312.

S312: The AMF sends the NAS message to the UE, and correspondingly, the UE receives the NAS message from the AMF.

The NAS message carries the operation instruction type, and indicates to perform the operation #1 on the UE.

It should be understood that according to the foregoing NAS SMC procedure, the NAS message is a NAS message on which integrity security protection is performed. For example, the AMF performs integrity security protection on the NAS message based on the integrity security protection algorithm selected in step S308. Optionally, when the operation instruction type indicates a write operation, the AMF performs confidentiality security protection on the data #1 in the NAS message based on the confidentiality security protection algorithm selected in step S308. Correspondingly, the UE performs integrity verification on the NAS message. When integrity verification of the NAS message succeeds, further optionally, the UE performs the operation #1 when decryption succeeds.

In an example, when the operation instruction type indicates a write operation, the NAS message includes a data ciphertext #1 carried in step S301, and is used to request the UE to write the data #1 into the storage area of the UE. Correspondingly, when integrity verification of the NAS message by the UE succeeds, and decryption of the data ciphertext #1 succeeds, the UE obtains the data #1, and writes the data #1 into the storage area of the UE. For example, the UE may perform decryption calculation or a decryption operation on the data ciphertext #1 based on the NAS confidentiality key (for example, Knasenc) in the NAS security context, to obtain a data plaintext, that is, the data #1.

In another example, when the operation instruction type indicates a read operation, the NAS message is used to request to read data stored or collected by the UE. Correspondingly, when integrity verification of the NAS message by the UE succeeds, the UE adds data #2 stored or collected by the UE to a NAS response message in step S313, and sends the NAS response message to the AMF. It should be noted that integrity security protection and confidentiality security protection are performed on the NAS response message. For example, the UE separately performs integrity security protection and confidentiality security protection on the NAS response message and the carried data #2 by using the integrity security key and the confidentiality security key in the NAS security context.

In still another example, when the operation instruction type indicates a deactivation operation, the operation instruction type indicates that the UE is invalidated or deactivated, which means that inventory or another operation can no longer be performed on the UE. In other words, after the UE is invalidated or deactivated, the AF or the AMF cannot obtain information (for example, the UE ID) about the UE, and cannot perform message exchange with the UE.

In still another example, when the operation instruction type indicates an inventory operation, the operation instruction type indicates to inventory information about the UE, or is used to obtain the identification information of the UE. For example, the UE sends the identification information of the UE to the AMF based on the operation instruction type, where the identification information of the UE may be carried in the NAS response message in step S313. Optionally, the AMF may add, based on the operation instruction type, the UE ID obtained in step S305 to a service response message in step S314, and send the service response message to the AF.

S313: The UE sends the NAS response message to the AMF, and correspondingly, the AMF receives the NAS response message from the UE.

The NAS response message indicates a completion status of the operation #1.

S314: The AMF sends the service response message to the AF, and correspondingly, the AF receives the service response message from the AMF.

The service response message may be a service response message, and indicates the completion status of the operation #1. The service response message includes the UE ID. Optionally, when the operation instruction type indicates a read operation, the service response message further includes the data #2.

It should be noted that the foregoing procedure in which the UE requests a registration service from the AMF is merely an example provided for ease of understanding. This application is also applicable to procedures in which the UE requests a service update, a deregistration service, service discovery, service authorization, service status subscription/status notification, and the like.

In conclusion, the method 300 supports provision of a passive internet of things service, that is, a procedure in which the AF triggers execution of an operation on the UE is described. In this implementation, after the authentication procedure (refer to step S306) and the NAS SMC procedure (refer to steps S309 and S310) are completed, an operation instruction starts to be executed between the UE and the AMF. In other words, steps S312 and S313 are performed after steps S306, S309, and S310 are completed. An overall processing procedure is complex, resulting in excessively high power consumption and an increase in a service obtaining delay of the AF.

In view of this, this application provides a communication method and a communication apparatus, to activate a security context when authentication between a terminal device and a network succeeds, simplifying an overall processing procedure, reducing processing complexity and a delay, and reducing power consumption.

For ease of understanding embodiments of this application, the following points are described.

First, in this application, unless otherwise stated or if there is a logic conflict, terms and/or descriptions in different embodiments are consistent and may be mutually referenced, and technical features in different embodiments may be combined into a new embodiment based on an internal logical relationship thereof.

Second, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" generally indicates an "or" relationship between the associated objects. "At least one of the following items (pieces)" or a similar expression thereof means any combination of these items, including any combination of singular items (pieces) or plural items (pieces). For example, at least one of a, b, and c may indicate a, b, c, a and b, a and c, b and c, or a, b, and c, where each of a, b, and c may be singular or plural.

Third, in this application, "first", "second", and various numerical numbers (for example, #1 and #2) are merely for distinguishing for ease of description, and are not intended to limit the scope of embodiments of this application, for example, are used to distinguish between different messages rather than describe a specific order or sequence. It should be understood that objects described in such a way are interchangeable in an appropriate circumstance, so that a solution other than embodiments of this application can be described.

Fourth, in this application, the terms "include" and "have" and any other variants thereof are intended to cover a non-exclusive inclusion. For example, a process, method, system, product, or device that includes a list of steps or units is not necessarily limited to those expressly listed steps or units, but may include other steps or units that are not expressly listed or inherent to the process, method, product, or device.

Fifth, in this application, "indicating" may include direct indicating and indirect indicating. When a piece of indication information indicates A, the indication information may directly indicate A or indirectly indicate A, but this does not mean that the indication information necessarily carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Sixth, in this application, a "protocol" may be a standard protocol in the communication field, for example, may include a 5G protocol, an NR protocol, and a related protocol used in a future communication system. This is not limited in this application. "Predefinition" may include definition in advance, for example, definition in the protocol. "Preconfiguration" may be implemented by pre-storing corresponding code or a corresponding table in a device, or may be implemented in another manner that may indicate related information. A specific implementation thereof is not limited in this application.

Seventh, in this application, "storage" may mean storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Eighth, in this application, "communication" may also be described as "data transmission", "information transmission", "data processing", or the like. "Transmission" includes "sending" and "receiving".

The following describes in detail the communication method provided in embodiments of this application with reference to the accompanying drawings. For example, the communication method may be applied to the communication system shown in FIG. 1 or FIG. 2.

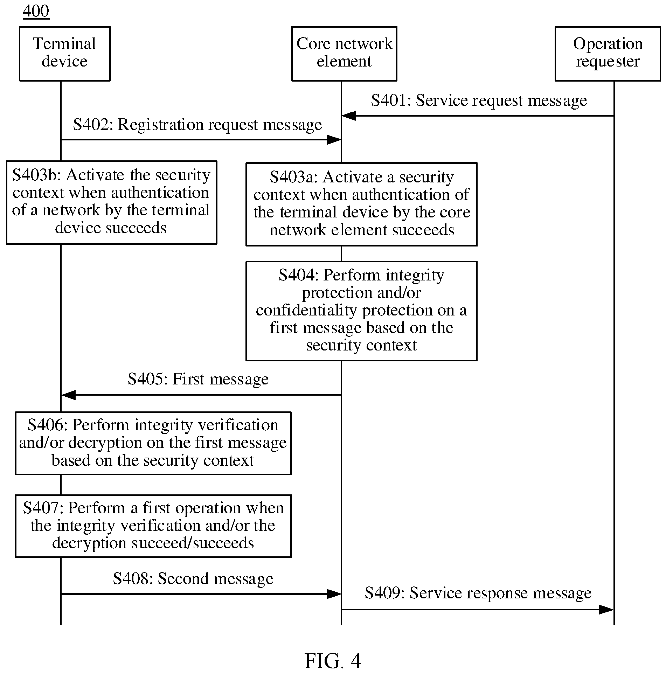

FIG. 4 is a schematic flowchart of a communication method 400 according to an embodiment of this application. As shown in FIG. 4, a terminal device, a core network element, and an operation requester interact as execution bodies. The method includes one or more of the following steps. For a part that is not described in detail, refer to an existing protocol.

S401: The operation requester sends a service request message to the core network element, and correspondingly, the core network element receives the service request message from the operation requester.

The service request message may be a service request message, and is used to request to perform a first operation on the terminal device. The first operation may be one or more of an inventory operation, a read operation, a write operation, a deactivation operation, or another operation.

For example, the service request message includes an identifier of the terminal device, for example, a UE ID. Alternatively, the service request message includes an identifier group (for example, a UE ID range or a UE ID group), where the identifier group includes the UE ID. The identifier group indicates a group in which the terminal device is located, and the group may include one or more terminal devices. Therefore, the operation requester may request a service for the one or more terminal devices.

Optionally, in step S401, the operation requester may alternatively send the service request message to a base station, and then the base station sends the service request message to the core network element, to indicate to perform the first operation on the terminal device.

In this embodiment of this application, the terminal device may be purchased, used, and managed by the operation requester (for example, an AF), that is, the operation requester may know a security capability of the terminal device. Optionally, the operation requester may alternatively obtain the security capability of the terminal device from UDM/UDR.

Optionally, the service request message further includes one or more of an operation instruction type (for example, an action or a command), the security capability of the terminal device, or first data. The operation instruction type indicates the first operation. The security capability of the terminal device indicates one or more integrity security protection algorithms and/or confidentiality security protection algorithms supported by the terminal device. The first data is data to be written into a storage area of the terminal device. For examples of the integrity security protection algorithm and/or the confidentiality security protection algorithm, refer to the related descriptions of the method 300.

For example, when the first operation is an inventory operation, the service request message is used to inventory information about the terminal device, or in other words, is used to obtain identification information of the terminal device, for example, the UE ID.

For example, when the first operation is a read operation, the service request message is used to read data from the storage area of the terminal device or data (for example, second data in the following) collected by the terminal device. Optionally, the service request message carries the security capability of the terminal device, and correspondingly, the core network element may store the security capability of the terminal device.

For example, when the first operation is a write operation, the service request message further includes the first data, and is used to request to write the first data into the storage area of the terminal device. Optionally, the service request message carries the security capability of the terminal device, and correspondingly, the core network element may store the security capability of the terminal device.

For example, when the first operation is a deactivation operation, the service request message is used to invalidate or deactivate the terminal device, that is, inventory or another operation can no longer be performed on the terminal device subsequently. In other words, after the terminal device is invalidated or deactivated, the operation requester cannot obtain the information about the terminal device, and cannot perform message exchange with the terminal device. Optionally, the service request message carries the security capability of the terminal device, and correspondingly, the core network element may store the security capability of the terminal device.

In this embodiment of this application, the security capability of the terminal device and the identifier of the terminal device may be in a one-to-one relationship, or may be in a one-to-many relationship. To be specific, the security capability of the terminal device may be a security capability corresponding to one terminal device, or may be a security capability corresponding to a group of terminal devices, where one or more terminal devices in the group have the same security capability. For example, security capabilities of UEs whose UE IDs are 000000 to 000100 are a first UE security capability, and security capabilities of UEs whose UE IDs are 000101 to 001000 are a second UE security capability.

S402: The terminal device sends a registration request message to the core network element, and correspondingly, the core network element receives the registration request message from the terminal device.

The registration request message may be a registration request message, and is used to request to registration with a network.

Specifically, the registration request message is used to register the terminal device with the network. For example, the registration request message includes the identifier (for example, the UE ID) of the terminal device.

Optionally, the registration request message further includes the security capability of the terminal device. For specific explanations, refer to the related descriptions of step S305.

In an example, the terminal device may send the registration request message to the core network element via the base station.

Optionally, the registration request message herein may be generalized as a "third message", and is used to request to obtain a network service. The third message may be a NAS message, or may be a combination of a message #a sent by the terminal device to the base station and a message #2 sent by the base station to the core network element. This is not limited in this application.

Optionally, an execution sequence of steps S401 and S402 is not specifically limited in this application. In addition, step S401 only needs to be performed before step S405, for example, after step S402 or S403a is performed.

Optionally, before step S402 is performed, the method further includes step S402a.

S402a: The core network element triggers the terminal device to access the network, that is, the terminal device establishes a communication connection to the base station. For a specific implementation, refer to the related descriptions of steps S302 to S304 in the method 300.

Further, to ensure communication security between the terminal device and the network, an authentication procedure is performed between the terminal device and the network. For a specific implementation of the authentication procedure, refer to the related descriptions of step S306 in the method 300. Details are not described herein again.

S403a: The core network element activates a security context when authentication of the terminal device by the core network element succeeds.

It should be noted that timing at which the core network element activates the security context is not specifically limited in this application. For example, the core network element immediately generates and activates the security context when authentication of the terminal device succeeds; the core network element first generates the security context when authentication of the terminal device succeeds, and then activates the security context after receiving the service request message in step S401; or the core network element generates and activates the security context after receiving the service request message in step S401.

S403b: The terminal device activates the security context when authentication of the network by the terminal device succeeds.

It should be noted that timing at which the terminal device activates the security context is not specifically limited in this application. For example, the terminal device immediately generates and activates the security context when authentication of the network succeeds; the terminal device first generates the security context when authentication of the network succeeds, and then activates the security context after receiving a first message in step S405; or the terminal device generates and activates the security context after receiving the first message in step S405.

It should be noted that an execution sequence of steps S403a and S403b is not limited in this application.

Optionally, the authentication procedure may be performed for one or more times. For example, when a type of the terminal device is a passive tag, the terminal device and the core network element perform authentication each time when communicating; or when the type of the terminal device is an active tag or a semi-passive tag, the core network element may perform authentication on the terminal device once at intervals of T1 time.

It should be understood that when authentication succeeds, the subsequent steps S403a and S403b to S409 are performed. If authentication fails, the subsequent steps S403a and S403b to S408 do not need to be performed, and the core network element may perform step S409, that is, the core network element sends a service response message to the operation requester, where the service response message indicates that the first operation fails to be performed. Optionally, the service response message includes a failure cause value indicating that authentication of the terminal device fails.

Optionally, before step S403a is performed, the method may further include steps S403c and S403d, that is, the core network element selects a proper security algorithm based on the security capability of the terminal device. Optionally, step S403c may be performed before the authentication procedure, or may be performed after the authentication procedure. This is not limited in this application.

S403c: The core network element obtains the security capability of the terminal device.

For example, the core network element may obtain the security capability of the terminal device from the terminal device. For example, the security capability of the terminal device is carried in the registration request message in step S402.

For example, the core network element may obtain the security capability of the terminal device from the UDM/UDR. For example, when authentication of the terminal device by the core network element succeeds, the core network element sends a request message to the UDM/UDR, to obtain subscription data of the terminal device, where the subscription data of the terminal device includes the security capability of the terminal device.

For example, the core network element may obtain the security capability of the terminal device from the operation requester. For example, the security capability of the terminal device is carried in the service request message in step S401.

It should be understood that in the latter two implementations, the security capability of the terminal device is transferred through a security-protected interface. This can reduce air interface overheads between the terminal device and the core network element, and avoid an interaction failure that may be caused by malicious tampering of an attacker when the terminal device reports the security capability of the terminal device through an air interface.

Optionally, the core network element may determine, based on the operation instruction type, whether to perform step S403c and/or step S403d.

For example, a trigger condition of step S403c may be: Authentication of the terminal device by the core network element succeeds, and the first operation requested by the operation requester is a read operation, a write operation, or a deactivation operation. In other words, when the core network element determines that authentication of the terminal device fails, and/or the first operation is an inventory operation, step S403c may not be performed.

For another example, when the operation instruction type indicates any one of a read operation, a write operation, or a deactivation operation, step S403d is performed; or when the operation instruction type indicates an inventory operation, step S403d may be skipped.

S403d: The core network element selects an integrity security protection algorithm and/or a confidentiality security protection algorithm based on the security capability of the terminal device and an algorithm priority list.

Optionally, before step S403d is performed, the core network element configures the algorithm priority list. For a specific configuration manner, refer to the related descriptions of step S307 in the method 300. Optionally, step S403d may be performed before step S403a, or may be performed in a process of performing step S403a, that is, when authentication of the terminal device by the core network element succeeds, the core network element selects the integrity security protection algorithm and/or the confidentiality security protection algorithm based on the security capability of the terminal device and the algorithm priority list, to activate the security context.

For example, if the security capability of the terminal device indicates that the terminal device supports one confidentiality security protection algorithm and one integrity security protection algorithm, the security algorithm selected by the core network element is the confidentiality security protection algorithm and the integrity security protection algorithm that are supported by the terminal device. For example, an AES integrity security protection algorithm and an AES confidentiality security protection algorithm, the core network element may determine whether the AES integrity security protection algorithm and the AES confidentiality security protection algorithm are included in the algorithm priority list configured by the core network element, or in other words, the core network element determines whether the core network element allows use of (or whether the core network element supports) the AES integrity security protection algorithm and the AES confidentiality security protection algorithm.

For example, if the security capability of the terminal device indicates that the terminal device supports a plurality of confidentiality security protection algorithms and/or a plurality of integrity security protection algorithms, the core network element may select one confidentiality security protection algorithm and/or one integrity security protection algorithm, and notify the terminal device of the selected confidentiality security protection algorithm and/or the selected integrity security protection algorithm. For example, the core network element may determine whether the algorithm priority list configured by the core network element includes the confidentiality security protection algorithms and/or the integrity security protection algorithms that are supported by the terminal device. If the algorithm priority list includes the confidentiality security protection algorithms and/or the integrity security protection algorithms that are supported by the terminal device, the core network element may preferentially select, from the algorithm priority list, a high-priority confidentiality security protection algorithm and/or a high-priority integrity security protection algorithm that are/is supported by the terminal device, and notify the terminal device of the selected high-priority confidentiality security protection algorithm and/or the selected high-priority integrity security protection algorithm. Optionally, the core network element may add the selected confidentiality security protection algorithm and/or the selected integrity security protection algorithm to the first message in the following step S405 and send the first message to the terminal device, or may send the selected confidentiality security protection algorithm and/or the selected integrity security protection algorithm to the terminal device by using another message. For example, algorithm priorities in an integrity security algorithm priority list configured by the core network element in descending order are: the AES integrity security protection algorithm, a SNOW integrity security protection algorithm, a ZUC integrity security protection algorithm, and a null integrity security protection algorithm; and algorithm priorities in a configured confidentiality security algorithm priority list in descending order are: a ZUC confidentiality security protection algorithm, the AES confidentiality security protection algorithm, a SNOW confidentiality security protection algorithm, and a null integrity security protection algorithm. The integrity security algorithm supported by the terminal device is the SNOW integrity security protection algorithm and the ZUC integrity security protection algorithm, and the confidentiality security algorithm supported by the terminal device is the ZUC confidentiality security protection algorithm. In this case, the security algorithm selected by the core network element is the SNOW integrity security protection algorithm and the ZUC confidentiality security protection algorithm, and the selected security algorithm is notified to the terminal device, to subsequently activate the security context.

According to the foregoing implementation, when the core network element successfully verifies the security algorithm, it indicates that the core network element allows use of (or supports) the security algorithm indicated by the security capability of the terminal device, and the method shown in, for example, steps S403a to S409 continues to be performed. When the core network element fails to verify the security algorithm, steps S403a to S408 do not need to be performed, and the core network element may perform step S409, that is, the core network element sends the service response message to the operation requester, where the service response message indicates that the first operation fails to be performed. Optionally, the service response message includes a failure cause value indicating that the security algorithm supported by the core network element does not match the security capability of the terminal device, that is, the core network element refuses a service request of the operation requester.

Optionally, in step S403a, when authentication of the terminal device by the core network element succeeds, before activating the security context, the core network element determines whether to generate the security context (or understood as determining whether to activate the security context). It should be understood that generation of the security context is correlated with activation of the security context, so that one of generation of the security context and activation of the security context may be selected for determining. For example, when it is determined to generate the security context, activation of the security context also needs to be performed. For example, if it is determined to activate the security context, it indicates that the security context needs to be generated before the security context is activated. Therefore, determining for generation of the security context may be equivalent to determining for activation of the security context. In other words, in this application, determining whether to generate the security context and determining whether to activate the security context may be mutually replaced, or both exist. In other words, the method may further include the following step S403e.

S403e: The core network element determines whether to activate the security context.

In a first example, the core network element determines, based on the operation instruction type of the first operation, whether to activate the security context, which may also be understood as: The core network element determines whether to perform security protection on a message or an information element corresponding to the first operation between the core network element and the terminal device.

For example, the security context includes a context corresponding to confidentiality security protection and/or a context corresponding to integrity security protection, for example, includes one or more of the following: a key identifier, the security capability of the terminal device, an uplink/downlink NAS count value, an integrity security protection algorithm identifier, and a confidentiality security protection algorithm identifier. For specific explanations, refer to the related descriptions of the method 300. Correspondingly, security protection includes confidentiality security protection and/or integrity security protection.

For example, when the operation instruction type indicates an inventory operation, the core network element determines not to activate the security context, that is, determines not to perform security protection on the message or the information element corresponding to the first operation between the core network element and the terminal device. This is because for an inventory operation, the core network element may obtain the identifier of the terminal device from the registration request message according to step S402, and may send the identifier of the terminal device to the operation requester to complete the inventory operation. In other words, the core network element may not interact with the terminal device for a message for an inventory operation, and therefore, does not need to generate and/or activate the security context to perform security protection on the message corresponding to the inventory operation.

For example, when the operation instruction type indicates a read operation, a write operation, or a deactivation operation, the core network element determines to activate the security context, that is, determines to perform security protection on the message or the information element corresponding to the first operation between the core network element and the terminal device. This is because for a read operation, the core network element reads data from the storage area of the terminal device or reads the data collected by the terminal device; for a write operation, the core network element indicates the terminal device to write the first data (from the operation requester) into the storage area of the terminal device; and for a deactivation operation, the core network element performs the deactivation operation on the terminal device, and notifies the terminal device that the terminal device is already or is about to be invalidated, that is, the terminal device cannot perform other operations. Therefore, for a read operation, a write operation, or a deactivation operation, the terminal device performs information exchange with the core network element, and communication security between the terminal device and the core network element may be protected by activating the security context.

Optionally, regardless of the operation instruction type, the core network element in step S403e activates the security context. Further, the core network element may determine, based on the operation type, a type of a security context to be activated, that is, determine, based on the operation instruction type, to perform integrity security protection and/or confidentiality security protection. A specific implementation is described as follows.

Optionally, the method further includes: The core network element determines to activate the context corresponding to confidentiality security protection and/or the context corresponding to integrity security protection, that is, determines to perform integrity security protection and/or confidentiality security protection on the message or the information element corresponding to the first operation between the core network element and the terminal device, that is, determines specific security protection to be performed. It should be understood that the core network element may determine, after determining to activate the security context, to activate the context corresponding to confidentiality security protection and/or the context corresponding to integrity security protection, or may directly determine to activate the context corresponding to confidentiality security protection and/or the context corresponding to integrity security protection, that is, may not determine whether to activate the security context.

Specifically, the core network element determines, based on the operation instruction type, to activate the context corresponding to confidentiality security protection and/or the context corresponding to integrity security protection.

For example, when the operation instruction type indicates an inventory operation, the core network element determines not to activate the context corresponding to integrity security protection and the context corresponding to confidentiality security protection.

For example, when the operation instruction type is a write operation, the core network element determines to activate the context corresponding to integrity security protection and the context corresponding to confidentiality security protection, that is, the core network element determines to activate confidentiality security protection and integrity security protection. Specifically, the security context may include a confidentiality security protection key and an integrity security protection key.

For example, when the operation instruction type is a read operation or a deactivation operation, the core network element determines to activate the context corresponding to integrity security protection, that is, the core network element determines to activate integrity security protection. Specifically, the security context may include an integrity security protection key.

In a second example, the core network element determines, based on the type of the terminal device, whether to activate the security context, which may also be understood as: The core network element determines whether to perform security protection on a message or an information element corresponding to the first operation between the core network element and the terminal device.

For example, the core network element may obtain the type of the terminal device from the UDM/UDR, including an active tag, a semi-passive tag, or a passive tag. For specific explanations, refer to the related descriptions in FIG. 1.

For example, when the type of the terminal device is an active tag or a semi-passive tag, the core network element determines to activate the security context, that is, determines to perform security protection on the message or the information element corresponding to the first operation between the core network element and the terminal device.

For example, when the type of the terminal device is a passive tag, the core network element determines, based on the operation instruction type, whether to activate the security context, that is, determines, based on the operation instruction type, whether to perform security protection on the message or the information element corresponding to the first operation between the core network element and the terminal device. For a specific implementation, refer to the related descriptions of the first example.

Optionally, the method further includes: The core network element determines, based on the type of the terminal device, to activate a context corresponding to confidentiality security protection and/or a context corresponding to integrity security protection.

For example, when the type of the terminal device is an active tag or a semi-passive tag, the core network element determines to activate the context corresponding to integrity security protection and the context corresponding to confidentiality security protection, that is, the core network element determines to activate confidentiality security protection and integrity security protection. Specifically, the security context may include a confidentiality security protection key and an integrity security protection key.

For example, when the type of the terminal device is a passive tag, and the operation instruction type indicates an inventory operation, the core network element determines not to activate the context corresponding to integrity security protection and the context corresponding to confidentiality security protection.

For example, when the type of the terminal device is a passive tag, and the operation instruction type indicates a write operation, the core network element determines to activate the context corresponding to integrity security protection and the context corresponding to confidentiality security protection, that is, the core network element determines to activate confidentiality security protection and integrity security protection. Specifically, the security context may include a confidentiality security protection key and an integrity security protection key.

For example, when the type of the terminal device is a passive tag, and the operation instruction type indicates a read operation or a deactivation operation, the core network element determines to activate the context corresponding to integrity security protection, that is, the core network element determines to activate integrity security protection. Specifically, the security context may include an integrity security protection key.

In this application, the confidentiality security protection key is for confidentiality security protection for communication between the terminal device and the core network element, and the integrity security protection key is for integrity security protection for communication between the terminal device and the core network element. For a derivation process of the integrity security protection key (for example, Knasint) and the confidentiality security protection key (Knasenc), refer to the related descriptions of the method 300.

Optionally, the core network element determines whether to skip a NAS SMC procedure (that is, the NAS SMC procedure is not performed before the security context is activated), which may also be referred to as determining timing of activating the security context, determining how to activate the security context, or the like. The following implementations are included.
(1) The core network element determines, based on a capability of the terminal device, whether to skip the NAS SMC procedure. In this application, an implementation of skipping the NAS SMC procedure and activating the security context may also be referred to as a manner of activating the security context with low power consumption, activating the security context when authentication of the terminal device by the core network element succeeds, or the like.

For example, when the capability of the terminal device indicates that the terminal device supports one confidentiality protection algorithm (for example, the ZUC confidentiality security protection algorithm) and/or one integrity protection algorithm (for example, the SNOW integrity security protection algorithm), the core network element may skip the NAS SMC procedure, that is, activate the security context when authentication of the terminal device by the core network element succeeds. In this case, the terminal device and the core network element can uniquely determine the security algorithm used to activate the security context, without negotiating the security algorithm by using the NAS SMC procedure.

(2) The core network element determines, based on the type of the terminal device, whether to skip the NAS SMC procedure.

For example, the terminal device includes a terminal device of a low power consumption type (for example, an IoT device or a tag) or a terminal device of a non-low power consumption type (which may also be referred to as a common terminal device). Optionally, the terminal device of the low power consumption type may choose to skip the NAS SMC procedure, and the common terminal device may not skip the NAS SMC procedure. The terminal device of the low power consumption type has weak storage and compute capabilities, and skipping the SMC process meets a requirement for low power consumption. In addition, the device of the low power consumption type may support one security algorithm, and does not need to negotiate the security algorithm by using the NAS SMC procedure.

The tag may specifically include an active tag, a semi-passive tag, and a passive tag. The core network element may determine, based on a type of the tag, whether to skip the NAS SMC procedure. For example, when the type of the terminal device is a passive tag, the core network element may choose to skip the NAS SMC procedure, that is, activate the security context when authentication of the terminal device by the core network element succeeds. This is because a terminal device of a passive tag type has weak storage and compute capabilities, and skipping the SMC procedure meets the requirement of the terminal device of the passive tag type for low power consumption. In addition, this type of device has low costs, and may support one integrity security protection algorithm and/or one confidentiality security protection algorithm. Therefore, the terminal device and the core network element can uniquely determine the security algorithm used to activate the security context, without negotiating the security algorithm by using the NAS SMC procedure. In other words, when authentication of the terminal device by the core network element succeeds, the core network element may skip the NAS SMC procedure, and activate, based on the confidentiality protection algorithm and/or the integrity protection algorithm that are/is supported by the terminal device of the passive tag type, the context corresponding to integrity security protection and/or the context corresponding to confidentiality security protection.

(3) The core network element determines, based on a locally configured security algorithm, whether to skip the NAS SMC procedure.

For example, when the security algorithm locally configured by the core network element includes one confidentiality protection algorithm (for example, the ZUC confidentiality security protection algorithm) and/or one integrity protection algorithm (for example, the SNOW integrity security protection algorithm), the terminal device and the core network element can uniquely determine the security algorithm used to activate the security context, without negotiating the security algorithm by using the NAS SMC procedure. In other words, when authentication of the terminal device by the core network element succeeds, the core network element may skip the NAS SMC procedure, and activate, based on the locally configured confidentiality protection algorithm and/or integrity protection algorithm, the context corresponding to integrity security protection and/or the context corresponding to confidentiality security protection.

It should be understood that the implementations provided above are merely examples provided for ease of understanding, and do not constitute any limitation on the technical solutions of this application. The plurality of implementations may be implemented independently, or may be implemented in combination. For example, the following manners are included.

(4) The core network element determines, based on the type of the terminal device and the capability of the terminal device, whether to skip the NAS SMC procedure.

For example, when the type of the terminal device is a semi-passive tag, and the terminal device supports only the SNOW integrity security protection algorithm and the SNOW confidentiality security protection algorithm, the core network element may not perform the NAS SMC procedure. This is because in this case, the terminal device and the core network element can uniquely determine the security algorithm used to activate the security context, without negotiating the security algorithm by using the NAS SMC procedure. Therefore, when authentication of the terminal device by the core network element succeeds, the core network element may activate, based on the SNOW integrity security protection algorithm, the context corresponding to integrity security protection, and activate, based on the SNOW confidentiality security protection algorithm, the context corresponding to confidentiality security protection.

(5) The core network element determines, based on the capability of the terminal device and a security algorithm locally configured by the core network element, whether to skip the NAS SMC procedure.

For example, when both the security algorithm indicated by the capability of the terminal device and the security algorithm locally configured by the core network element are the ZUC integrity security protection algorithm and the SNOW confidentiality security protection algorithm, the core network element may skip the NAS SMC procedure. This is because in this case, the terminal device and the core network element can uniquely determine the security algorithm used to activate the security context, without negotiating the security algorithm by using the NAS SMC procedure. Therefore, the core network element may activate, based on the ZUC integrity security protection algorithm, the context corresponding to integrity security protection, and/or activate, based on the SNOW confidentiality security protection algorithm, the context corresponding to confidentiality security protection.

It should be understood that the combined implementations provided above are merely examples provided for ease of understanding, and do not constitute any limitation on the technical solutions of this application.

Optionally, in step S403b, before activating the security context, the terminal device determines whether to generate the security context (or understood as determining whether to activate the security context). In other words, the method may further include the following step S403f.

S403f: The terminal device determines whether to activate the security context.

For example, the terminal device determines, based on the operation instruction type of the first operation and/or the type of the terminal device, whether to activate the security context, which may also be understood as: The terminal device determines whether to perform security protection on the message or the information element corresponding to the first operation between the terminal device and the core network element. For a specific implementation, refer to the related descriptions on a core network element side in step S403e. Details are not described herein again.

Optionally, regardless of the operation instruction type, the terminal device in step S403f activates the security context. Further, the terminal device may determine, based on the operation type, a type of a security context to be activated, that is, determine, based on the operation instruction type, to perform integrity security protection and/or confidentiality security protection. A specific implementation is described as follows.

Optionally, the method further includes: The terminal device determines, based on the operation instruction type and/or the type of the terminal device, to activate the context corresponding to confidentiality security protection and/or the context corresponding to integrity security protection, that is, determines, based on the operation instruction type and/or the type of the terminal device, whether to perform security protection on the message or the information element corresponding to the first operation between the terminal device and the core network element. For a specific implementation, refer to the related descriptions on the core network element side in step S403e. Details are not described herein again.

Optionally, the terminal device may determine whether to skip the NAS SMC procedure (that is, the NAS SMC procedure is not performed before the security context is activated), which may also be referred to as determining timing of activating the security context, determining how to activate the security context, or the like. The following implementations are included.
(1) The terminal device determines, based on the capability of the terminal device, whether to skip the NAS SMC procedure. In this application, an implementation of skipping the NAS SMC procedure and activating the security context may also be referred to as a manner of activating the security context with low power consumption, activating the security context when authentication of the core network element by the terminal device succeeds, or the like.
(2) The terminal device determines, based on the type of the terminal device, whether to skip the NAS SMC procedure.
(3) The terminal device determines, based on a locally configured security algorithm, whether to skip the NAS SMC procedure.
   It should be understood that for specific implementations of (1) to (3), refer to the related descriptions of the foregoing manners (1) to (3) on the core network element side.
(4) The terminal device determines, based on an EAP-success message and/or an authentication request message (authentication request message) received in the authentication procedure, time of generating and/or activating the security context. In other words, the terminal device generates and/or activates the security context in response to the EAP-success message and/or the authentication request message.

For example, the EAP-success message indicates that authentication of the terminal device by the network succeeds. In other words, if a message received by the terminal device after sending the registration request message is the EAP-success message, it indicates that authentication of the terminal device by the network succeeds. In this case, in response to the EAP-success message, the security context is activated when it is determined that authentication of the network by the terminal device succeeds.

For example, the authentication request message includes an authentication vector of a network side, and the authentication vector is used by the terminal device to perform authentication on the network. The authentication vector is used by the terminal device to perform authentication on the network. In other words, after sending the registration request message, the terminal device receives the authentication request message, performs authentication on the network based on the authentication vector carried in the authentication request message, and activates the security context when authentication of the network by the terminal device succeeds.

(5) The terminal device determines, based on a received registration accept message or the first message, time of generating and/or activating the security context. In other words, the terminal device generates and/or activates the security context in response to the registration accept message.

Optionally, the registration accept message may be the first message, and the registration accept message is used to accept the registration request of the terminal device. In this case, the registration accept message may carry the operation instruction type indicating the terminal device to perform the first operation.

For example, if the message received by the terminal device after sending the registration request message is the registration accept message, it indicates that the network accepts the registration request of the terminal device. In this case, in response to the registration accept message, the terminal device may activate the security context when authentication of the network by the terminal device succeeds.

For example, the terminal device can uniquely determine, based on one confidentiality protection algorithm identifier (for example, the confidentiality security protection algorithm identifier indicates the ZUC confidentiality security protection algorithm) and/or one integrity protection algorithm identifier (for example, the integrity security protection algorithm identifier indicates the SNOW integrity security protection algorithm) that are/is carried in the registration accept message, the security algorithm used to activate the security context, without negotiating the security algorithm by using the NAS SMC procedure. Therefore, an interaction procedure between the terminal device and the core network element can be reduced, and when authentication of the network by the terminal device succeeds, the terminal device activates the confidentiality security key and/or the integrity security key in the security context based on the ZUC confidentiality security protection algorithm and/or the SNOW integrity security protection algorithm.

It should be understood that the implementations provided above are merely examples provided for ease of understanding, and do not constitute any limitation on the technical solutions of this application. The plurality of implementations may be implemented independently, or may be implemented in combination. For example, the following manners are included.

(6) The terminal device determines, based on the type of the terminal device and the capability of the terminal device, whether to skip the NAS SMC procedure.

(7) The terminal device determines, based on the capability of the terminal device and a security algorithm locally configured by the terminal device, whether to skip the NAS SMC procedure.

It should be understood that for specific implementations of (6) and (7), refer to the related descriptions of the foregoing manners (4) and (5) on the core network element side.

(8) The terminal device generates and/or activates the security context based on the capability of the terminal device, a security algorithm locally configured by the terminal device, and an EAP-success message and/or an authentication request message received in the authentication procedure.

For example, when the type of the terminal device is a passive tag, a message received by the terminal device after sending the registration request message is the EAP-success message, and the security algorithm locally configured by the terminal device is the ZUC confidentiality security protection algorithm and/or the SNOW integrity security protection algorithm, it indicates that authentication of the terminal device by the network succeeds, and the terminal device and the core network element can uniquely determine the security algorithm used to activate the security context, without negotiating the security algorithm by using the NAS SMC procedure. Therefore, the NAS SMC procedure may be skipped. In this case, in response to the EAP-success message, the terminal device may activate, based on the ZUC confidentiality security protection algorithm and/or the SNOW integrity security protection algorithm when determining that authentication of the network by the terminal device succeeds, the context corresponding to integrity security protection and/or the context corresponding to confidentiality security protection.

It should be noted that the combined implementation provided above is merely an example provided for ease of understanding, and should not constitute a limitation on the solutions of this application.

S404: The core network element performs integrity protection and/or confidentiality security protection on the first message based on the security context.

For example, the core network element performs integrity protection on the to-be-sent first message based on the integrity security protection algorithm and/or the integrity security protection key Knasint in the security context, and may record a calculation result of performing integrity security protection on the first message as MAC #1, and add the MAC #1 to the first message in step S405. Similarly, the core network element performs confidentiality protection on the first data based on the confidentiality security protection algorithm and/or the confidentiality security protection key Knasenc in the security context, to obtain a first data ciphertext, and adds the first data ciphertext to the first message in step S405. For a specific implementation of performing integrity protection and/or confidentiality security protection, refer to the related descriptions of the method 300.

Optionally, before step S404 is performed, the method further includes step S404a.

S404a: The core network element determines whether to perform integrity security protection and/or confidentiality security protection on the first message. In other words, based on the core network element determining to activate the security context in step S403e, the core network element may further determine whether to perform security protection and/or a type of protection (integrity security protection and/or confidentiality security protection) to be performed on the first message corresponding to the first operation between the core network element and the terminal device, or determine to activate the context corresponding to integrity security protection and/or the context corresponding to confidentiality security protection.

For example, the core network element determines, based on the operation instruction type, whether to perform integrity security protection and/or confidentiality security protection on the first message.

For example, when the operation instruction type indicates an inventory operation, the core network element determines not to perform integrity security protection on the first message, that is, does not need to generate and/or activate the context corresponding to integrity security protection.

For example, when the operation instruction type indicates a read operation, a write operation, or a deactivation operation, the core network element determines to perform integrity security protection on the first message, that is, generates and/or activates the context corresponding to integrity security protection.

A calculation result of performing integrity security protection by the core network element on the first message is recorded as the MAC #1, and is carried in the first message and sent to the terminal device, for the terminal device to perform integrity verification on the first message.

For example, when the operation instruction type indicates an inventory operation, a read operation, or a deactivation operation, the core network element determines not to perform confidentiality security protection on the first message, that is, does not need to generate and/or activate the context corresponding to confidentiality security protection.

For example, when the operation instruction type indicates a write operation, the core network element determines to perform confidentiality security protection on the first data carried in the service request message in step S401, to obtain the first data ciphertext, that is, generates and/or activates the context corresponding to confidentiality security protection, where the first data ciphertext is carried in the first message.

It should be noted that integrity security protection and confidentiality security protection of the first message may be implemented independently, or may be implemented in combination. For example, when the operation instruction type indicates an inventory operation, the core network element may perform no integrity security protection and no confidentiality security protection on the first message; when the operation instruction type indicates a read operation, the core network element may perform integrity security protection and no confidentiality security protection on the first message; when the operation instruction type indicates a write operation, the core network element may perform integrity security protection and no confidentiality security protection on the first message; or when the operation instruction type indicates a write operation, the core network element may perform integrity security protection on the first message, and perform confidentiality security protection on the first data.

Optionally, the core network element may alternatively perform, based on determining of whether to activate the security context in step S403e, corresponding security protection (integrity security protection and/or confidentiality security protection) on the first message based on the security context. In other words, in the foregoing example, the determining step in which the core network element determines whether to perform integrity security protection and/or confidentiality security protection on the first message may not be performed, and a determining result of step S403e is still used. For example, in step S403e, if determining to activate the security context, the core network element may determine in step S404a to perform corresponding integrity security protection and/or confidentiality security protection on the first message; or if determining not to activate the security context, the core network element determines in step S406a not to perform integrity security protection and/or confidentiality security protection on the first message.

S405: The core network element sends the first message to the terminal device, and correspondingly, the terminal device receives the first message from the core network element.

For example, the core network element may send the first message to the terminal device via the base station.

Optionally, the first message may be the registration accept message in response to step S402. In other words, when determining that authentication of the terminal device succeeds, the core network element skips the NAS SMC procedure, and sends the registration accept message on which security protection is performed to the terminal device. This reduces a quantity of interactions between the terminal device and the core network element, reduces processing complexity of an entire procedure, and lowers processing delay. Optionally, the registration accept message may carry the operation instruction type of the first operation, indicates that the network side accepts the registration request of the terminal device, and indicates the terminal device to perform the first operation. For example, when the operation instruction type indicates a read operation, a write operation, or a deactivation operation, the registration accept message further includes the MAC #1. When the operation instruction type indicates a write operation, the registration accept message further includes the first data ciphertext. Optionally, the operation instruction type of the first operation may not be carried in the registration accept message. In this case, the operation instruction type and the registration accept message may be sent simultaneously or separately. This is not limited in this application.

Optionally, the operation instruction type may be sent in plaintext, and is used by the terminal device to determine the first operation.

It should be noted that an execution sequence of steps S405 and S403b is not limited in this application. To be specific, the terminal device may first activate the security context, and then receive the first message from the core network element; or may first receive the first message from the core network element, and then activate the security context. In other words, the timing at which the terminal device activates the security context is not specifically limited in this application.

Optionally, the core network element may further send the registration accept message to the terminal device, that is, the first message is not the registration accept message. In this case, security protection may be performed on the registration accept message based on the security context, or security protection may not be performed on the registration accept message. This is not limited in this application.

S406: The terminal device performs integrity verification and/or decryption on the first message based on the security context.

For example, the terminal device obtains MAC #2 through calculation based on the integrity security protection algorithm in the security context. For a specific calculation manner, refer to the calculation manner of the MAC #1. Further, the terminal device compares the MAC #1 carried in the first message with the MAC #2. If the MAC #1 and the MAC #2 are the same, it may be considered that integrity verification succeeds; or if the MAC #1 and the MAC #2 are different, integrity verification fails.

For example, if the terminal device performs decryption calculation or a decryption operation on the first data ciphertext in the first message based on the confidentiality security protection algorithm and/or the confidentiality security protection key (for example, Knasenc) in the security context, to obtain the first data, decryption succeeds; or if the first data is not obtained, decryption fails. It should be understood that this implementation corresponds to a write operation.

Optionally, if the terminal device fails to perform integrity verification and/or decryption in step S406, the terminal device refuses to perform the first operation. In this case, a second message in the following step S408 indicates that the first operation fails to be performed. Optionally, the second message carries a failure cause value indicating that integrity verification of the first message fails and/or decryption of the first data ciphertext fails. Further, the core network element sends the service response message in step S409, to indicate that the first operation fails to be performed. Optionally, the service response message carries a failure cause value indicating that integrity verification of the first message fails and/or decryption of the first data ciphertext fails.

Optionally, before step S406 is performed, the method further includes step S406a.

S406a: The terminal device determines whether to perform integrity verification and/or decryption on the first message. In other words, based on the terminal device determining to activate the security context in step S403f, the terminal device may further determine whether to perform de-security protection (integrity verification and/or decryption) and/or a type of de-security protection to be performed on the first message corresponding to the first operation between the terminal device and the core network element, or determine to activate the context corresponding to integrity security protection and/or the context corresponding to confidentiality security protection.

For example, the terminal device determines, based on the operation instruction type, whether to perform integrity verification and/or decryption on the first message.

For example, when the operation instruction type indicates an inventory operation, the terminal device determines not to perform integrity verification on the first message, that is, does not need to generate and/or activate the context corresponding to integrity security protection.

For example, when the operation instruction type indicates a read operation, a deactivation operation, or a write operation, the terminal device determines to perform integrity verification on the first message, that is, generates and/or activates the context corresponding to integrity security protection.

For example, when the operation instruction type indicates an inventory operation, a read operation, or a deactivation operation, the terminal device determines not to perform decryption on the first message, that is, does not need to generate and/or activate the context corresponding to confidentiality security protection.

For example, when the operation instruction type indicates a write operation, the terminal device determines to perform decryption on the first data ciphertext carried in the first message, to obtain the first data, that is, generates and/or activates the context corresponding to confidentiality security protection.

It should be noted that integrity verification and decryption of the first message may be implemented independently, or may be implemented in combination. For example, when the operation instruction type indicates an inventory operation, the terminal device may perform no integrity verification and no decryption on the first message; when the operation instruction type indicates a read operation, the terminal device may perform integrity verification and no decryption on the first message; when the operation instruction type indicates a deactivation operation, the terminal device may perform integrity verification and no decryption on the first message; or when the operation instruction type indicates a write operation, the terminal device may perform integrity verification on the first message, and perform decryption on the first data ciphertext.

Optionally, the terminal device may alternatively perform, based on determining of whether to activate the security context in step S403f, corresponding de-security protection on the first message based on the security context. In other words, in the foregoing example, the determining step in which the terminal device determines, based on the operation instruction type, whether to perform integrity verification and/or decryption on the first message may not be performed, and a determining result of step S403f is still used. For example, in step S403f, if determining to activate the security context, the terminal device may determine in step S406a to perform integrity verification and/or decryption on the first message; or if determining not to activate the security context, the terminal device determines in step S406a not to perform integrity verification and/or decryption on the first message.

S407: The terminal device performs the first operation when the integrity verification succeeds and/or the decryption succeeds.

For example, when the integrity verification succeeds and/or the decryption succeeds, the terminal device performs the first operation based on the operation instruction type.

For example, when the first operation is a read operation, the terminal device reports the data in the storage area of the terminal device or the data collected by the terminal device.

For example, when the first operation is a write operation, the terminal device writes the first data obtained through decryption in step S406 into the storage area of the terminal device.

For example, when the first operation is a deactivation operation, the terminal device determines that the terminal device is invalidated or deactivated.

For example, when the first operation is an inventory operation, the terminal device may report the identifier of the terminal device.

S408: The terminal device sends the second message to the core network element, and correspondingly, the core network element receives the second message from the terminal device.

The second message indicates an execution status of the first operation.

Optionally, before step S408 is performed, the method further includes step S408a.

S408a: The terminal device performs integrity security protection and/or confidentiality security protection on the second message based on the security context.

For example, the terminal device performs integrity protection on the second message based on the integrity security protection algorithm and/or the integrity security protection key Knasint in the security context, and may record a calculation result of performing integrity security protection on the second message as the MAC #2, and add the MAC #2 to the second message in step S408. Similarly, the terminal device performs confidentiality protection on the second data based on the confidentiality security protection algorithm and/or the confidentiality security protection key Knasenc in the security context, to obtain a second data ciphertext, and adds the second data ciphertext to the second message in step S408. The second data is the data in the storage area of the terminal device or the data collected by the terminal device. For a specific implementation of performing integrity protection and/or confidentiality security protection, refer to the related descriptions of the method 300.

Optionally, when the first message in step S405 is the registration accept message, the second message may be a registration complete message. In this case, the registration complete message may carry the MAC #2 and/or the second data ciphertext.

Optionally, before step S408a is performed, the method further includes step S408b.

S408b: The terminal device determines whether to perform integrity security protection and/or confidentiality security protection on the second message. In other words, based on the terminal device determining to activate the security context in step S403f, the terminal device may further determine whether to perform security protection and/or a type of protection (integrity security protection and/or confidentiality security protection) to be performed on the second message corresponding to the first operation between the terminal device and the core network element, or determine to activate the context corresponding to integrity security protection and/or the context corresponding to confidentiality security protection.

In an example, the terminal device determines, based on the operation instruction type, whether to perform integrity security protection and/or confidentiality security protection on the second message.

For example, when the operation instruction type indicates an inventory operation, the terminal device determines not to perform integrity security protection on the second message, that is, does not need to generate and/or activate the context corresponding to integrity security protection.

For example, when the operation instruction type indicates a read operation, a write operation, or a deactivation operation, the terminal device determines to perform integrity security protection on the second message, that is, generates and/or activates the context corresponding to integrity security protection.

For example, when the operation instruction type indicates an inventory operation, a write operation, or a deactivation operation, the terminal device determines not to perform confidentiality security protection on the second message, that is, does not need to generate and/or activate the context corresponding to confidentiality security protection.

For example, when the operation instruction type indicates a read operation, the terminal device determines to perform confidentiality security protection on the second data to obtain the second data ciphertext, that is, generates and/or activates the context corresponding to confidentiality security protection, where the second data is the data read from the storage area of the terminal device or the data collected by the terminal device.

It should be noted that integrity security protection and confidentiality security protection of the second message may be implemented independently, or may be implemented in combination. For example, when the operation instruction type indicates an inventory operation, the terminal device may perform no integrity security protection and no confidentiality security protection on the second message; when the operation instruction type indicates a read operation, the terminal device may perform integrity security protection and no confidentiality security protection on the second message; when the operation instruction type indicates a write operation, the terminal device may perform integrity security protection and no confidentiality security protection on the second message; or when the operation instruction type indicates a write operation, the terminal device may perform integrity security protection on the second message, and perform confidentiality security protection on the second data.

Optionally, the terminal device may further determine, based on determining of whether to activate the security context in step S403f, whether to perform integrity security protection and/or confidentiality security protection on the second message, or further determine, based on determining of whether to perform integrity verification and/or decryption on the first message in step S406a, whether to perform integrity security protection and/or confidentiality security protection on the second message. In other words, in the foregoing example, the determining step in which the terminal device determines, based on the operation instruction type, whether to perform integrity security protection and/or confidentiality security protection on the second message may not be performed, and a determining result of step S403f or S406a is still used. For example, if the terminal device determines to generate and/or activate the security context in step S403f, or if the terminal device determines to perform integrity verification and/or decryption on the first message in step S406a, the terminal device determines in step S408b to perform integrity security protection and/or confidentiality security protection on the second message; or if the terminal device determines not to generate and/or activate the security context, or if the terminal device determines not to perform integrity verification and/or decryption on the first message, the terminal device determines in step S408b not to perform integrity security protection and/or confidentiality security protection on the second message.

Optionally, after step S408 is performed, the method further includes steps S408c and S408d.

S408c: The core network element determines whether to perform integrity verification and/or decryption on the second message. In other words, based on the core network element determining to activate the security context in step S403e, the core network element may further determine whether to perform de-security protection (integrity verification and/or decryption) and/or a type of de-security protection to be performed on the second message corresponding to the first operation between the core network element and the terminal device, or determine to activate the context corresponding to integrity security protection and/or the context corresponding to confidentiality security protection.

In an example, the core network element determines, based on the operation instruction type, whether to perform integrity verification and/or decryption on the second message.

For example, when the operation instruction type indicates an inventory operation, the core network element determines not to perform integrity verification on the second message, that is, does not need to generate and/or activate the context corresponding to integrity security protection.

For example, when the operation instruction type indicates a read operation, a deactivation operation, or a write operation, the core network element determines to perform integrity verification on the second message, that is, generates and/or activates the context corresponding to integrity security protection.

For example, when the operation instruction type indicates a read operation, the core network element determines to perform decryption on the second data ciphertext carried in the second message, to obtain the second data, that is, generates and/or activates the context corresponding to confidentiality security protection.

For example, when the operation instruction type indicates a write operation, a deactivation operation, or an inventory operation, the core network element determines not to perform decryption on the second message, that is, does not need to generate and/or activate the context corresponding to confidentiality security protection.

It should be noted that integrity verification and decryption of the second message may be implemented independently, or may be implemented in combination. For example, when the operation instruction type indicates an inventory operation, the core network element may perform no integrity verification and no decryption on the second message; when the operation instruction type indicates a write operation, the core network element may perform integrity verification and no decryption on the second message; when the operation instruction type indicates a deactivation operation, the core network element may perform integrity verification and no decryption on the second message; or when the operation instruction type indicates a read operation, the core network element may perform integrity verification on the second message, and perform decryption on the second data ciphertext.

Optionally, the core network element may further determine, based on determining of whether to activate the security context in step S403e, whether to perform integrity verification and/or decryption on the second message, or further determine, based on determining of whether to perform integrity security protection and/or confidentiality security protection on the first message in step S404a, whether to perform integrity verification and/or decryption on the second message. In other words, in the foregoing example, the determining step in which the core network element determines, based on the operation instruction type, whether to perform integrity verification and/or decryption on the second message may not be performed, and a determining result of step S403e or S404a is still used. For example, if the core network element determines to generate and/or activate the security context in step S403e, or if the core network element determines to perform integrity security protection and/or confidentiality security protection on the first message in step S404a, the core network element determines in step S408c to perform integrity verification and/or decryption on the second message; or if the core network element determines not to generate and/or activate the security context, or if the core network element determines not to perform integrity security protection and/or confidentiality security protection on the first message, the core network element determines in step S408c not to perform integrity verification and/or decryption on the second message.

S408d: The core network element performs integrity verification and/or decryption on the second message based on the security context.

For example, the core network element obtains the MAC #1 through calculation based on the integrity security protection algorithm in the security context, and compares the MAC #1 carried in the second message with the MAC #2. If the MAC #1 and the MAC #2 are the same, it may be considered that integrity verification succeeds; or if the MAC #1 and the MAC #2 are different, integrity verification fails.

For example, when the operation instruction type indicates a write operation, if the core network element performs decryption calculation or a decryption operation on the second data ciphertext in the second message based on the confidentiality security protection algorithm and/or the confidentiality security protection key (for example, Knasenc) in the security context, to obtain the second data, decryption succeeds; or if the second data is not obtained, decryption fails.

Optionally, if the core network element fails to perform integrity verification and/or decryption in step S408d, the service response message in the following step S409 indicates that the first operation fails to be performed. Optionally, the service response message carries a failure cause value indicating that integrity verification of the second message fails and/or decryption of the second data ciphertext fails.

S409: The core network element sends the service response message to the operation requester, and correspondingly, the operation requester receives the service response message from the core network element.

The service response message may be a service response message, and indicates the execution status of the first operation.

In a first example, when the following condition #1 is satisfied, the service response message indicates that the first operation is successfully performed. In this case, the service response message includes the identifier of the terminal device. Optionally, the service response message further includes the second data.

For example, the condition #1 includes: Authentication in the foregoing steps S403a and S403b succeeds, the supported security algorithm matches the security capability of the terminal device, integrity verification and/or decryption of the first message succeed/succeeds, and integrity verification and/or decryption of the second message succeed/succeeds.

According to this implementation, step S409 may further include: The core network element sends the service response message to the operation requester based on the operation instruction type of the first operation.

For example, when the operation instruction type indicates an inventory operation, a write operation, or a deactivation operation, the service response message includes the identifier of the terminal device.

For example, when the operation instruction type indicates a read operation, the service response message includes the identifier of the terminal device and the second data.

In a second example, when any one or more of the following conditions are satisfied, the service response message indicates that the first operation fails to be performed. In this case, the service response message includes the identifier of the terminal device. Optionally, the service response message further includes a failure cause value indicating any one or more of the following.
(1) Authentication in step S403a and/or step S403b fails.
(2) The core network element fails to verify the security algorithm in step S403d, or the security algorithm supported by the core network element does not match the security capability of the terminal device.
(3) Integrity verification and/or decryption of the first message in step S406 fail/fails.
(4) Integrity verification and/or decryption of the second message in step S408c fail/fails.

Optionally, the method further includes steps S410 and S411.

S410: The terminal device determines whether to delete the security context.

S411: The core network element determines whether to delete the security context.

The following uses an implementation in which the core network element determines whether to delete the security context as an example for description. For an implementation on a terminal device side, refer to related descriptions on the core network element side. Details are not described herein again.

In an example, the core network element determines, based on the type of the terminal device, whether to delete the security context, that is, whether to store the security context.

For example, when the type of the terminal device is an active tag or a semi-passive tag, the core network element determines not to delete the security context, that is, the core network element stores the security context for subsequent secure information exchange.

For example, when the type of the terminal device is a passive tag, the core network element determines to delete the security context. The terminal device of the passive tag type has weaker storage and compute capabilities than a terminal device of a semi-passive tag type or an active tag type, and therefore, may not store the security context, to reduce storage and computational overheads. In addition, when the terminal device of the passive tag type subsequently requests to perform, for example, an inventory operation, the security context is not required for security protection, and therefore, the security context does not need to be stored. However, the terminal device of the semi-passive tag type or the active tag type may store the security context. When the terminal device of the semi-passive tag type or the active tag type subsequently requests to perform, for example, a read operation, a write operation, or a deactivation operation, the security context may be used to protect information communication security, and the security context does not need to be activated again. This can reduce the computational overheads and reduce the processing delay while ensuring the communication security.

It should be noted that timing at which the terminal device and the core network element delete the security context is not specifically limited in this application. Optionally, the terminal device may delete the security context at any moment after generating the second message. For example, the terminal device starts a timer after sending the second message, and deletes the security context after the timer expires.

Optionally, the core network element may delete the security context at any moment after performing integrity verification and/or decryption on the second message, for example, delete the security context after sending the service response message. Alternatively, the core network element starts a timer after sending the first message to the terminal device, and deletes the security context if not receiving the second message from the terminal device after the timer expires.

Optionally, in this application, a tag management function related to the core network element may be implemented on a tag management function (tag management function, TMF). The TMF may be an independent network element, or may be integrated with the base station (for example, the RAN) or the core network element (for example, the AMF).

For example, when the TMF is independently deployed, functions such as management, authentication, and registration of the terminal device (for example, the tag) may be implemented on the TMF, that is, actions of the core network element in the foregoing embodiment may be performed by the TMF. Optionally, corresponding messages may be forwarded by the AMF. Alternatively, the foregoing method is performed by the TMF and the AMF in cooperation. For example, the service request message in S401 is received and sent by the TMF to the AMF. The registration request message in S402 is received and sent by the AMF to the TMF. S403 and 404 are performed by the TMF. The first message in S405 is generated by the TMF and sent to the terminal device via the AMF. The second message in S408 is sent to the TMF via the AMF. The service response message in S409 is sent by the TMF.

For another example, when the TMF is integrated with the AMF, functions such as management, authentication, and registration of the terminal device (for example, the tag), activation of the security context, and security protection of messages or information elements may be implemented on an integrated network element. This is not limited in this application.

According to the solution provided in this application, the security context is activated to ensure secure communication between the terminal device and the core network element, and the NAS SMC procedure is omitted to reduce a quantity of information exchanges between the terminal device and the core network element, reduce the processing complexity of the entire service procedure, reduce the processing delay, reduce the power consumption, and further enable the operation requester to effectively and quickly obtain the service.

Logic of determining whether to generate and/or activate the security context and whether to delete the security context is added, to reduce computational and storage overheads of the terminal device and the core network element, avoid occupation of a limited storage resource of the terminal device, reduce power consumption of the terminal device, ensure that the network can provide services for more terminal devices, avoid network congestion, and the like. Especially, for a tag-type terminal device, energy is usually obtained from radio or an environment, and a storage capability of the terminal device is limited. Consequently, the terminal device may not be able to store a security context, affecting secure information exchange, and problems such as a power consumption increase caused by occupation of a limited storage resource of the terminal device may be caused. In addition, air interface overheads between the terminal device and the core network element are reduced, for example, an interaction failure that may be caused by malicious tampering of an attacker when the terminal device reports the security capability of the terminal device to the core network element through an air interface is avoided, so that network security can be ensured.

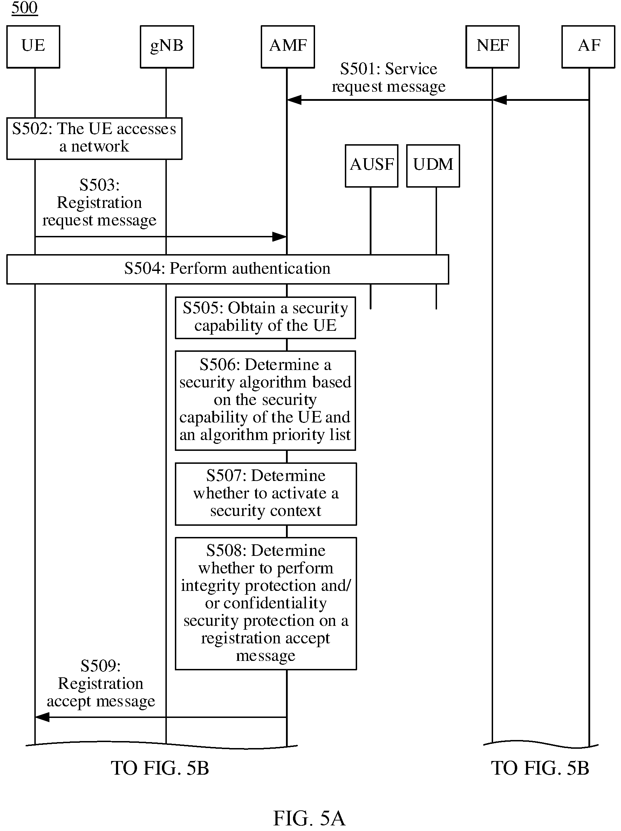

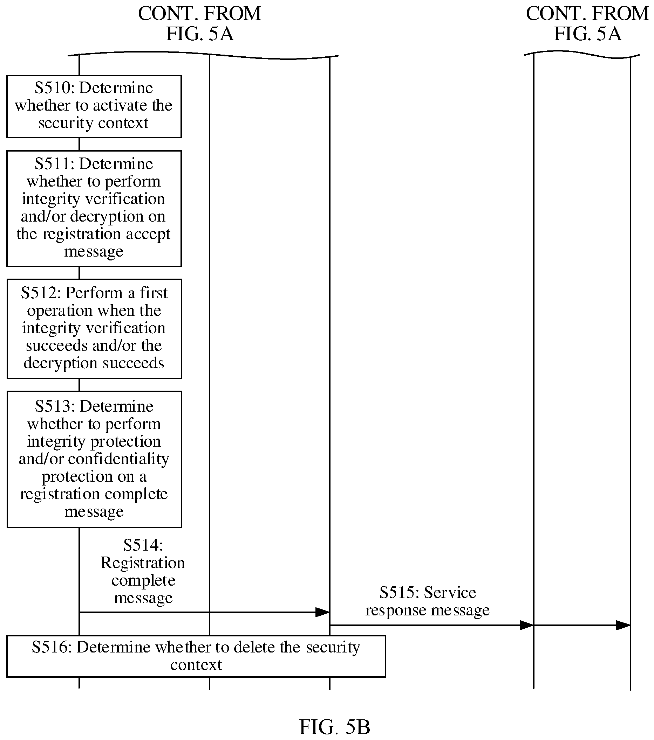

FIG. 5A and FIG. 5B are schematic flowcharts of a communication method 500 according to an embodiment of this application. A UE (or a tag) serving as a terminal device, an AMF serving as a core network element, and an AF serving as an operation requester interact as execution bodies. The method may be considered as further details of the method 400. It should be understood that the embodiment shown in FIG. 5A and FIG. 5B and the embodiment shown in FIG. 4 may be coupled to each other and may be mutually referenced. Therefore, related descriptions in the method 400 are also applicable to this implementation, and both may have a same or similar technical means. For content that has been described in the embodiment shown in FIG. 4, details are not described again. Considering that a tag-type UE has cost and performance constraints, this implementation is applicable to a scenario in which the UE supports one confidentiality security protection algorithm and/or one integrity security protection algorithm or the AMF adds a selected security algorithm to the registration accept message in step S509 and notifies the UE of the selected security algorithm. In this implementation, a NAS SMC procedure is omitted to reduce an interaction procedure between the UE and the AMF, reduce processing complexity of an entire procedure, and lowers processing delay. As shown in FIG. 5A and FIG. 5B, the method includes the following plurality of steps. For a part that is not described in detail, refer to an existing protocol.

S501: The AF sends a service request message to the AMF, and correspondingly, the AMF receives the service request message from the AF.

For a parameter included in the service request message, explanations of the parameter, and a specific implementation, refer to the related descriptions of step S401 in the method 400.

S502: The UE accesses a network.

For a specific implementation, refer to the related descriptions of steps S302 to 304 in the method 300.

S503: The UE sends a registration request message to the AMF, and correspondingly, the AMF receives the registration request message from the UE.

For a parameter included in the registration request message, explanations of the parameter, and a specific implementation, refer to the related descriptions of step S402 in the method 400. In this case, the registration request message may not carry a security capability of the UE.

S504: Perform authentication.

For a specific implementation of authentication, refer to the related descriptions of step S306 in the method 300.

It should be understood that when authentication of the UE succeeds, the following steps S506 to S517 continue to be performed. When authentication of the UE fails, steps S506 to S514, S516, and S517 are skipped, and step S515 is performed. In this case, a service response message indicates that a first operation fails to be performed, or in other words, the AMF refuses a service request of the AF. Optionally, the service response message may carry a failure cause value indicating that authentication of the UE fails.

S505: The AMF obtains the security capability of the UE.

For a specific implementation, refer to the related descriptions of step S403c in the method 400.

S506: The AMF determines a security algorithm based on the security capability of the UE and an algorithm priority list.

For content included in the security algorithm, explanations of the content, and a specific implementation, refer to the related descriptions of step S403d in the method 400.

Optionally, when the service request message is used to request to perform a read operation, a write operation, or a deactivation operation on the UE, steps S504 to S506 are performed; or when the service request message is used to request to perform an inventory operation on the UE, steps S504 to S506 may not be performed.

S507: The AMF determines whether to activate a security context.

For example, the AMF determines, based on an operation instruction type, whether to generate the security context. For a specific implementation, refer to the related descriptions of step S403e in the method 400.

It should be understood that in this implementation, content of the security context can be simplified, reducing storage and computational overheads on a network side.

Optionally, when authentication of the UE by the AMF succeeds, the AMF may determine whether to skip the NAS SMC procedure, and determine timing of activating the security context or how to activate the security context. For a specific implementation, refer to the related descriptions of step S403e.

S508: The AMF determines whether to perform integrity protection and/or confidentiality security protection on a registration accept message.

For example, the AMF determines, based on the operation instruction type, whether to perform integrity protection and/or confidentiality security protection on the registration accept message. For a specific implementation, refer to the related descriptions of step S404a in the method 400.

Further, when determining to perform integrity protection and/or confidentiality security protection on the registration accept message, the AMF performs integrity protection and/or confidentiality security protection on the registration accept message based on the security context. For a specific implementation, refer to the related descriptions of step S404 in the method 400.

S509: The AMF sends the registration accept message to the UE, and correspondingly, the UE receives the registration accept message from the AMF.

For content included in the registration accept message, explanations of the content, and a specific implementation, refer to the related descriptions of step S405 in the method 400.

S510: The UE determines whether to activate the security context.

For example, the UE may determine, based on the operation instruction type in the registration accept message in step S509, whether to activate the security context. For a specific implementation, refer to the related descriptions of step S403f.

It should be understood that in this implementation, the content of the security context can be simplified, reducing storage and computational overheads on a UE side.

Optionally, when authentication of the core network element by the UE succeeds, the UE may determine whether to skip the NAS SMC procedure, and determine timing of activating the security context or how to activate the security context. For a specific implementation, refer to the related descriptions of step S403f.

S511: The UE determines whether to perform integrity verification and/or decryption on the registration accept message.

For example, the UE determines, based on the operation instruction type, whether to perform integrity verification and/or decryption on a first message. For a specific implementation, refer to the related descriptions of step S406a in the method 400.

Further, when determining to perform integrity verification and/or decryption on the registration accept message, the UE performs integrity verification and/or decryption on the registration accept message based on an integrity security protection algorithm and/or a confidentiality security protection algorithm in the security context. For a specific implementation, refer to the related descriptions of step S406 in the method 400.

S512: The UE performs the first operation when the integrity verification succeeds and/or the decryption succeeds.

For example, when integrity verification succeeds and/or decryption succeeds, the UE performs the first operation based on the operation instruction type. For a specific implementation, refer to the related descriptions of step S407 in the method 400.

S513: The UE determines whether to perform integrity protection and/or confidentiality protection on a registration complete message.

For example, the UE determines, based on the operation instruction type, whether to perform integrity protection and/or confidentiality protection on the registration complete message. For a specific implementation, refer to the related descriptions of step S408b in the method 400.

Further, when determining to perform integrity protection and/or confidentiality protection on the registration complete message, the UE performs integrity security protection and/or confidentiality security protection on the registration complete message based on the integrity security protection algorithm and/or the confidentiality security protection algorithm in the security context. For a specific implementation, refer to the related descriptions of step S408a in the method 400.

S514: The UE sends the registration complete message to the AMF, and correspondingly, the AMF receives the registration complete message from the UE.

For content included in the registration accept message, explanations of the content, and a specific implementation, refer to the related descriptions of step S408 in the method 400.

Optionally, the AMF determines whether to perform integrity verification and/or decryption on the registration complete message. For a specific implementation, refer to the related descriptions of step S408c in the method 400.

Further, optionally, the AMF performs integrity verification and/or decryption on the registration complete message based on the security context. For a specific implementation, refer to the related descriptions of step S408d in the method 400.

S515: The AMF sends the service response message to the AF, and correspondingly, the AF receives the service response message from the AMF.

For content included in the service response message, explanations of the content, and a specific implementation, refer to the related descriptions of step S409 in the method 400.

S516: The UE and the AMF determine whether to delete the security context.

For a specific implementation, refer to the related descriptions of step S410 in the method 400.

According to the solution provided in this application, the UE and the AMF activate the security context to ensure secure communication between the UE and the AMF; and omit the NAS SMC procedure and add the operation instruction type of the first instruction to the registration accept message, to reduce a quantity of interactions between the UE and the AMF, reduce the processing complexity, reduce the delay, and effectively provide a service for the AF. Logic of determining whether to generate and activate the security context and whether to delete the security context is added, to reduce computational and storage overheads of the UE and the AMF, avoid occupation of a limited storage resource of the UE, reduce power consumption of the UE, ensure that a network side provides services for more UEs, avoid network congestion, and the like. In addition, air interface overheads between the UE and the AMF are reduced, for example, an interaction failure that may be caused by malicious tampering of an attacker when the UE reports the security capability of the UE to the AMF through an air interface is avoided, so that network security is ensured.

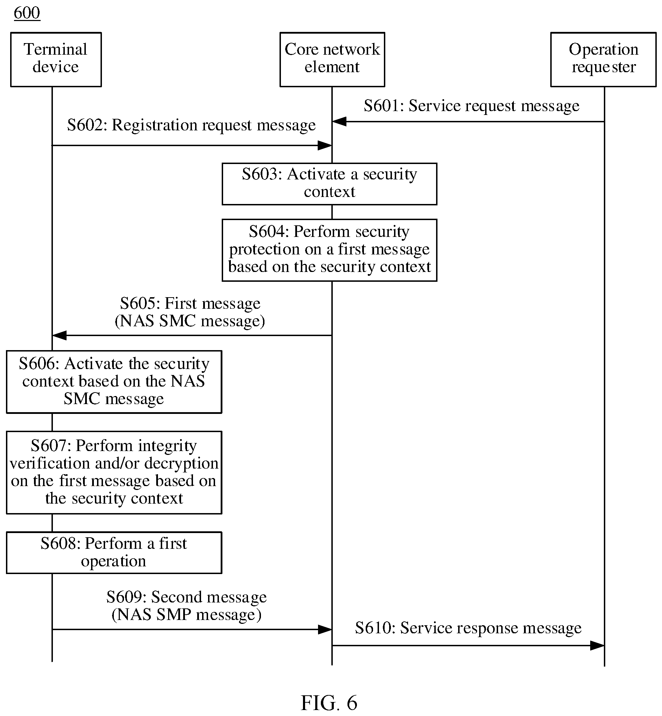

FIG. 6 is a schematic flowchart of a communication method 600 according to an embodiment of this application. As shown in FIG. 6, a terminal device, a core network element, and an operation requester interact as execution bodies. The method includes the following plurality of steps. For a part that is not described in detail, refer to the descriptions in the foregoing embodiments.

S601: The operation requester sends a service request message to the core network element, and correspondingly, the core network element receives the service request message from the operation requester.

S602: The terminal device sends a registration request message to the core network element, and correspondingly, the core network element receives the registration request message from the terminal device.

For content included in the service request message and the registration request message in steps S601 and S602, explanations of the content, and specific implementations, refer to the related descriptions of steps S401 and S402 in the method 400.

S603: The core network element activates a security context.

The security context is used to protect secure communication between the terminal device and the core network element.

In a first example, the core network element activates the security context based on an operation instruction type of a first operation and/or a type of the terminal device. Specifically, the core network element may determine, based on the operation instruction type of the first operation and/or the type of the terminal device, whether to activate the security context.

For example, when the operation instruction type indicates an inventory operation, the core network element does not activate the security context; or when the operation instruction type indicates a read operation, a write operation, or a deactivation operation, the core network element activates the security context.

In a second example, the core network element activates the security context based on an operation instruction type of a first operation and/or a type of the terminal device. Specifically, the core network element may determine, based on the operation instruction type of the first operation and/or the type of the terminal device, whether to activate the security context.

For example, when the type of the terminal device is an active tag or a semi-passive tag, the core network element activates the security context; or when the type of the terminal device is a passive tag, the core network element activates the security context based on the operation instruction type of the first operation. For a specific implementation, refer to the related descriptions of the first example.

Optionally, regardless of the operation instruction type, the core network element activates the security context in step S603. Further, the core network element may determine, based on the operation type, a type of a security context to be activated, that is, determine, based on the operation instruction type, to perform integrity security protection and/or confidentiality security protection. A specific implementation is described as follows.

Optionally, that the core network element activates the security context based on the operation instruction type of the first operation and/or the type of the terminal device includes: The core network element activates, based on the operation instruction type of the first operation and/or the type of the terminal device, a security context corresponding to integrity security protection and/or a security context corresponding to confidentiality security protection. In other words, the core network element may determine, based on the operation instruction type of the first operation and/or the type of the terminal device, which security context is to be activated, that is, determine to enable integrity security protection and/or confidentiality security protection.

In a first example, the core network element activates, based on the operation instruction type of the first operation, the security context corresponding to integrity security protection and/or the security context corresponding to confidentiality security protection.

For example, when the operation instruction type indicates an inventory operation, a read operation, or a deactivation operation, the terminal device activates the security context corresponding to integrity security protection; or when the operation instruction type indicates a write operation, the terminal device activates the security context corresponding to integrity security protection and the security context corresponding to confidentiality security protection. For a specific implementation, refer to the related descriptions of step S403e in the method 400.

In a second example, the core network element activates, based on the type of the terminal device, the security context corresponding to integrity security protection and/or the security context corresponding to confidentiality security protection.

For example, when the type of the terminal device is an active tag or a semi-passive tag, the core network element activates the security context corresponding to integrity security protection and the security context corresponding to confidentiality security protection; when the type of the terminal device is a passive tag, and the operation instruction type indicates an inventory operation, a read operation, or a deactivation operation, the core network element activates the security context corresponding to integrity security protection; or when the type of the terminal device is a passive tag, and the operation instruction type indicates a write operation, the core network element activates the security context corresponding to integrity security protection and the security context corresponding to confidentiality security protection. For a specific implementation, refer to the related descriptions of step S403e in the method 400.

Optionally, the method further includes: performing an authentication procedure between the terminal device and the network. For example, before the core network element activates the security context, the method further includes: The network performs authentication on the terminal device. For example, the core network element activates the security context when authentication of the terminal device by the network succeeds.

Optionally, before the core network activates the security context, the method may further include: The core network element obtains a security capability of the terminal device, and selects an integrity security protection algorithm and/or a confidentiality security protection algorithm based on the security capability of the terminal device and an algorithm priority list. It should be understood that the security capability of the terminal device is used to determine a security algorithm in the security context. Optionally, the core network element may obtain the security capability of the terminal device from the operation requester, the terminal device, or a unified data management network element. For a specific implementation, refer to the related descriptions of steps S403c and S403d in the method 400.

S604: The core network element performs security protection on a first message based on the security context, where the first message is a NAS SMC message, that is, the NAS SMC message is a message on which security protection is performed. The security protection includes integrity security protection and/or confidentiality security protection. For a specific implementation, refer to the related descriptions of step S404 in the method 400.

It should be noted that the first message in this implementation may be used to activate the security context, and is used to negotiate the security algorithm with the terminal device, and/or indicates to perform the first operation on the terminal device.

Optionally, based on the type of the terminal device, capability information of the terminal device, and/or the like, the core network element determines to indicate, by using the NAS SMC message, to perform the first operation on the terminal device, determines to add, to the NAS SMC message, the operation instruction type indicating the first operation, or determines to use a low power consumption processing procedure.

Further, the core network element may determine whether to indicate, by using the NAS SMC message, to perform the first operation on the terminal device, or determine whether to add, to the NAS SMC message, the operation instruction type indicating the first operation, that is, determine whether to use the low power consumption processing procedure. This specifically includes the following implementations.
(1) The core network element determines, based on the type of the terminal device, whether to indicate, by using the NAS SMC message, to perform the first operation on the terminal device.

For example, for a terminal device (for example, an IoT device or a tag) of a low power consumption type, it is determined to indicate, by using the NAS SMC message, to perform the first operation on the terminal device; and for a terminal device of a non-low power consumption type (which may also be referred to as a common terminal device), it is determined not to indicate, by using the NAS SMC message, to perform the first operation on the terminal device.

The tag may specifically include an active tag, a semi-passive tag, and/or a passive tag. The core network element may determine, based on a type of the tag, whether to indicate, by using the NAS SMC message, to perform the first operation on the terminal device.

For example, the tag is used as an example. When the type of the terminal device is a passive tag, the core network element may indicate, by using the NAS SMC message, to perform the first operation on the terminal device.

(2) The core network element determines, based on the capability information of the terminal device, whether to indicate, by using the NAS SMC message, to perform the first operation on the terminal device.

Optionally, the core network element may obtain the capability information of the terminal device from the UDM/UDR/PCF/UE. The capability information of the terminal device may indicate whether the terminal device supports parsing of the NAS SMC message for obtaining an indication of performing the first operation, or indicate whether the terminal device has a capability of parsing the NAS SMC message to obtain an indication of performing the first operation, or in other words, indicate whether the terminal device can obtain an information element, for example, the operation instruction type of the first operation, carried in the NAS SMC message.

For example, when the capability information of the terminal device indicates that the terminal device has the capability of parsing the information element carried in the NAS SMC message, the core network element may indicate, by using the NAS SMC message, the terminal device to perform the first operation, that is, perform service execution in the NAS SMC procedure. This reduces a quantity of signaling interactions between the core network element and the terminal device while ensuring communication security between them, simplifies the procedure, and reduces the processing delay.

Optionally, before the core network element performs security protection on the first message based on the security context, the method further includes: The core network element determines whether to perform security protection on the first message.

In an example, the core network element determines, based on the operation instruction type of the first operation, whether to perform security protection on the first message.

For example, when the operation instruction type indicates an inventory operation, the core network element determines not to perform integrity security protection on the first message; or when the operation instruction type indicates a read operation, a write operation, or a deactivation operation, the core network element determines to perform integrity security protection on the first message. For a specific implementation, refer to the related descriptions of step S404a in the method 400.

For example, when the operation instruction type indicates an inventory operation, a read operation, or a deactivation operation, the core network element determines not to perform confidentiality security protection on the first message; or when the operation instruction type indicates a write operation, the core network element determines to perform confidentiality security protection on first data to obtain a first data ciphertext, where the first data is data to be written into a storage area of the terminal device, and the first data ciphertext is carried in the first message. For a specific implementation, refer to the related descriptions of step S404a in the method 400.

Optionally, a calculation result of performing integrity security protection by the core network element on the first message is recorded as MAC #1, and is carried in the first message and sent to the terminal device, for the terminal device to perform integrity verification on the first message.

S605: The core network element sends the first message on which security protection is performed to the terminal device, and correspondingly, the terminal device receives the first message from the core network element, where the first message is a NAS SMC message.

It should be understood that the NAS SMC message is a security-protected message.

Optionally, the NAS SMC message may carry the operation instruction type indicating the first operation. For specific explanations of the operation instruction type, refer to the related descriptions of the method 400. Optionally, the operation instruction type may be sent in plaintext.

Optionally, based on the core network element determining whether to perform integrity security protection on the first message in step S604, the core network element may further determine whether to add the MAC #1 to the first message. For example, when the operation instruction type indicates a read operation, a write operation, or a deactivation operation, the NAS SMC message may further include the MAC #1, so that the terminal device performs integrity verification on the NAS SMC message to determine whether the NAS SMC message is maliciously tampered with in a transmission process; or when the operation instruction type indicates an inventory operation, the NAS SMC message does not include the MAC #1.

Optionally, the terminal device may determine, based on the type of the terminal device, whether to add the MAC #1 to the NAS SMC message. For example, if the type of the terminal device is an active tag or a semi-passive tag, the NAS SMC message may carry the MAC #1; or if the type of the terminal device is a passive tag, the NAS SMC message may not carry the MAC #1.

Optionally, based on the core network element determining whether to perform confidentiality security protection on the first message in step S604, the core network element may further determine whether to add the first data ciphertext to the first message. For example, when the operation instruction type indicates a write operation, the NAS SMC message may further include the first data ciphertext, and indicates write into the storage area of the terminal device.

Optionally, the NAS SMC message may carry the security algorithm selected by the core network element. Optionally, if the terminal device supports only one integrity security protection algorithm and/or one confidentiality security protection algorithm, it is determined that the NAS SMC message may not carry the security algorithm selected by the core network element. This is not limited in this application.

S606: The terminal device activates the security context based on the NAS SMC message.

In a first example, the terminal device activates the security context based on the operation instruction type of the first operation. Specifically, the terminal device may determine, based on the operation instruction type of the first operation and/or the type of the terminal device, whether to activate the security context.

For example, when the operation instruction type indicates a read operation, a write operation, or a deactivation operation, the terminal device determines to activate the security context. Optionally, when the operation instruction type indicates an inventory operation, the terminal device may not activate the security context. For a specific implementation, refer to the related descriptions of step S403f in the method 400.

Optionally, that the terminal device activates the security context based on the operation instruction type of the first operation includes: The terminal device activates, based on the operation instruction type of the first operation, the context corresponding to integrity security protection and/or the context corresponding to confidentiality security protection.

For example, when the operation instruction type indicates an inventory operation, a read operation, or a deactivation operation, the terminal device activates the security context corresponding to integrity security protection; or when the operation instruction type indicates a write operation, the terminal device activates the security context corresponding to integrity security protection and the security context corresponding to confidentiality security protection. For a specific implementation, refer to the related descriptions of step S403f in the method 400.

In a second example, the terminal device activates the security context based on the type of the terminal device. Specifically, the terminal device may determine, based on the type of the terminal device, whether to activate the security context.

For example, when the type of the terminal device is an active tag or a semi-passive tag, the terminal device activates the security context; or when the type of the terminal device is a passive tag, the terminal device activates the security context based on the operation instruction type of the first operation. For a specific implementation, refer to the related descriptions of the first example.

Optionally, that the terminal device activates the security context based on the type of the terminal device includes: The terminal device activates, based on the type of the terminal device, the context corresponding to integrity security protection and/or the context corresponding to confidentiality security protection.

For example, when the type of the terminal device is an active tag or a semi-passive tag, the terminal device activates the security context corresponding to integrity security protection and the security context corresponding to confidentiality security protection; when the type of the terminal device is a passive tag, and the operation instruction type of the first operation indicates an inventory operation, a read operation, or a deactivation operation, the terminal device activates the security context corresponding to integrity security protection; or when the type of the terminal device is a passive tag, and the operation instruction type of the first operation indicates a write operation, the terminal device activates the security context corresponding to integrity security protection and the security context corresponding to confidentiality security protection. For a specific implementation, refer to the related descriptions of step S403f in the method 400.

Optionally, before the terminal device activates the security context, the method further includes: The terminal device performs authentication on the network. For example, the terminal device activates the security context when authentication of the network by the terminal device succeeds.

S607: The terminal device performs integrity verification and/or decryption on the first message based on the security context. For a specific implementation, refer to the related descriptions of step S406 in the method 400.

Optionally, before the terminal device performs integrity verification and/or decryption on the first message based on the security context, the method further includes: The terminal device determines whether to perform integrity verification and/or decryption on the first message.

In an example, the terminal device determines, based on the operation instruction type of the first operation, whether to perform integrity verification and/or decryption on the first message.

For example, when the operation instruction type indicates an inventory operation, the terminal device determines not to perform integrity verification on the first message; or when the operation instruction type indicates a read operation, a write operation, or a deactivation operation, the terminal device determines to perform integrity verification on the first message. For a specific implementation, refer to the related descriptions of step S406a in the method 400.

For example, when the operation instruction type indicates an inventory operation, a read operation, or a deactivation operation, the terminal device determines not to perform decryption on the first message; or when the operation instruction type indicates a write operation, the terminal device determines to perform decryption on the first data ciphertext carried in the first message, to obtain first data, where the first data is data to be written into the storage area of the terminal device. For a specific implementation, refer to the related descriptions of step S406a in the method 400.

S608: The terminal device performs the first operation after the integrity verification and/or the decryption.

For example, when integrity verification and/or decryption succeed/succeeds, the terminal device performs the first operation. For a specific implementation, refer to the related descriptions of step S407 in the method 400. That the terminal device performs the first operation may be obtaining, by receiving the NAS SMC message, the indication of performing the first operation on the terminal device from the core network element, or may be parsing, by the terminal device, the information element in the NAS SMC message to obtain the instruction type of the first operation, and performing the first operation when the integrity verification and/or the decryption succeed/succeeds.

S609: The terminal device sends a second message to the core network element, and correspondingly, the core network element receives the second message from the terminal device, where the second message is a NAS SMP message.

Optionally, before the terminal device sends the second message to the core network element, the method further includes: The terminal device determines whether to perform security protection on the second message, where the security protection includes integrity security protection and/or confidentiality security protection, and the second message indicates whether the first operation is successfully performed.

In an example, the terminal device determines, based on the operation instruction type of the first operation, whether to perform security protection on the second message.

For example, when the operation instruction type indicates an inventory operation, the terminal device determines not to perform integrity security protection on the second message; or when the operation instruction type indicates a read operation, a write operation, or a deactivation operation, the terminal device determines to perform integrity security protection on the second message. For a specific implementation, refer to the related descriptions of step S408b in the method 400.

For example, when the operation instruction type indicates an inventory operation, a write operation, or a deactivation operation, the terminal device determines not to perform confidentiality security protection on the second message; or when the operation instruction type indicates a read operation, the terminal device determines to perform confidentiality security protection on second data to obtain a second data ciphertext, where the second data is data in the storage area of the terminal device or data collected by the terminal device, and the second data ciphertext is carried in the second message. For a specific implementation, refer to the related descriptions of step S408b in the method 400.

Optionally, after the core network element receives the second message from the terminal device, the method further includes: The core network element determines whether to perform integrity verification and/or decryption on the second message.

In an example, the core network element determines, based on the operation instruction type of the first operation, whether to perform integrity verification and/or decryption on the second message.

For example, when the operation instruction type indicates an inventory operation, the core network element determines not to perform integrity verification on the second message; or when the operation instruction type indicates a read operation, a write operation, or a deactivation operation, the core network element determines to perform integrity verification on the second message. For a specific implementation, refer to the related descriptions of step S408c in the method 400.

For example, when the operation instruction type indicates a read operation, the core network element determines to perform decryption on the second data ciphertext carried in the second message, to obtain the second data, where the second data is the data in the storage area of the terminal device or the data collected by the terminal device; or when the operation instruction type indicates an inventory operation, a write operation, or a deactivation operation, the core network element determines not to perform decryption on the second message. For a specific implementation, refer to the related descriptions of step S408c in the method 400.

Optionally, based on the core network element determining to perform integrity verification and/or decryption on the second message, the core network element performs integrity verification and/or decryption on the second message based on the security context. For a specific implementation, refer to the related descriptions of step S408d in the method 400.

Optionally, the method further includes: The terminal device and/or the core network element determine/determines whether to delete the security context. For example, the terminal device and/or the core network element determine/determines, based on the type of the terminal device, whether to delete the security context. For a specific implementation, refer to the related descriptions of steps S410 and S411 in the method 400.

S610: The core network element sends a service response message to the operation requester, and correspondingly, the operation requester receives the service response message from the core network element. For a specific implementation, refer to the related descriptions of step S409 in the method 400.

Optionally, in this application, a tag management function related to the core network element may be implemented on a TMF network element. The TMF may be an independent network element, or may be integrated with a base station (for example, a RAN) or a core network element (for example, an AMF).

For example, when the TMF is independently deployed, functions such as management, authentication, and registration of the terminal device (for example, the tag) may be implemented on the TMF, that is, actions of the core network element in the foregoing embodiment may be performed by the TMF. Optionally, corresponding messages may be forwarded by the AMF. Alternatively, the foregoing method is performed by the TMF and the AMF in cooperation. For example, the service request message in S601 is received and sent by the TMF to the AMF. The registration request message in S602 is received and sent by the AMF to the TMF. S603 and 604 are performed by the TMF. The first message in S605 is generated by the TMF and sent to the terminal device via the AMF. The second message in S609 is sent to the TMF via the AMF. The service response message in S610 is sent by the TMF.

For another example, when the TMF is integrated with the AMF, functions such as management, authentication, and registration of the terminal device (for example, the tag), activation of the security context, and security protection of messages or information elements may be implemented on an integrated network element. This is not limited in this application.

According to the solution provided in this application, the NAS SMC message indicates to perform the first operation on the terminal device, that is, the NAS SMC procedure is for service execution. This reduces a quantity of information exchanges between the terminal device and the core network element while ensuring secure communication between them. Compared with the conventional technology in which the terminal device and a core network element sequentially perform an authentication procedure, trigger the NAS SMC procedure, and then execute a service procedure, this implementation allows the first operation to be performed while the network communication security is ensured. It simplifies the entire service procedure, lowers processing delay, and reduces power consumption. Logic of determining whether to generate and/or activate the security context and whether to delete the security context is added, to reduce computational and storage overheads of the terminal device and the core network element, avoid occupation of a limited storage resource of the terminal device, reduce power consumption of the terminal device, ensure that the network can provide services for more terminal devices, avoid network congestion, and the like. In addition, air interface overheads between the terminal device and the core network element are reduced, for example, an interaction failure that may be caused by malicious tampering of an attacker when the terminal device reports the security capability of the terminal device to the core network element through an air interface is avoided, so that network security can be ensured.

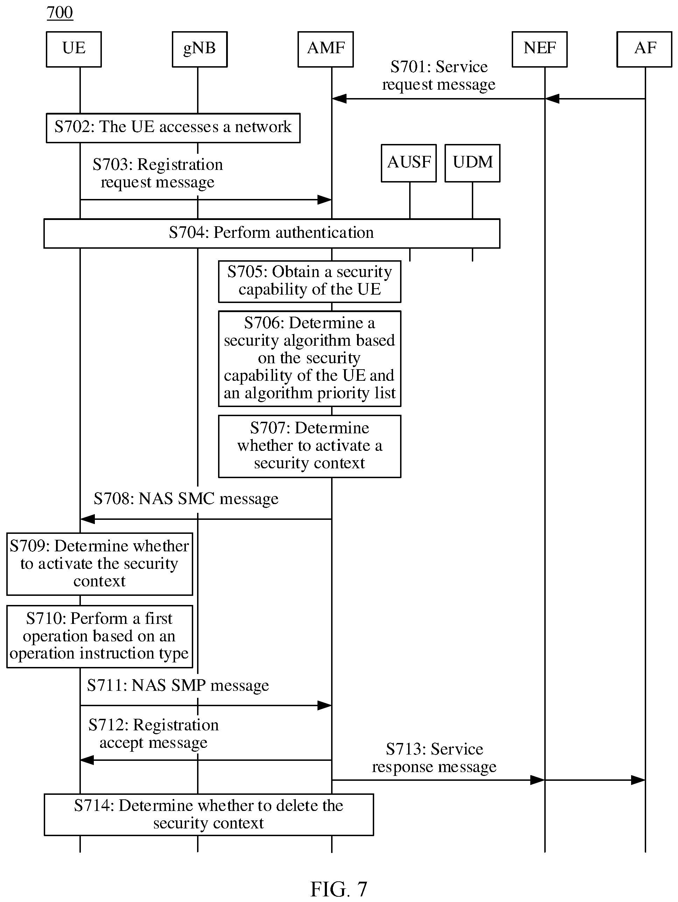

FIG. 7 is a schematic flowchart of a communication method 700 according to an embodiment of this application. A UE (or a tag) serving as a terminal device, an AMF serving as a core network element, and an AF serving as an operation requester interact as execution bodies. The method may be considered as further details of the method 600. It should be understood that the embodiment shown in FIG. 7 and the embodiment shown in FIG. 6 may be coupled to each other and may be mutually referenced. Therefore, related descriptions in the method 600 are also applicable to this implementation, and both may have a same or similar technical means. For content that has been described in the embodiment shown in FIG. 6, details are not described again. In this implementation, an operation instruction type is transferred during execution of a NAS SMC procedure, to reduce a quantity of interactions between the UE and the AMF, reduce processing complexity of an entire procedure, and lower processing delay. As shown in FIG. 7, the method includes the following plurality of steps. For a part that is not described in detail, refer to an existing protocol.

S701: The AF sends a service request message to the AMF, and correspondingly, the AMF receives the service request message from the AF.

S702: The UE accesses a network.

S703: The UE sends a registration request message to the AMF, and correspondingly, the AMF receives the registration request message from the UE.

S704: Perform authentication.

S705: The AMF obtains a security capability of the UE.

Optionally, step S705 may be performed before step S704, or may be performed after step S704. This is not limited in this application.

S706: The AMF determines a security algorithm based on the security capability of the UE and an algorithm priority list.

S707: The AMF determines whether to activate a security context.

For specific implementations of steps S701 to S707, refer to the related descriptions of steps S501 to S507 in the method 500.

S708: The AMF sends a NAS SMC message to the UE, and correspondingly, the UE receives the NAS SMC message from the AMF.

For content of the NAS SMC message, explanations of the content, and a specific implementation, refer to the related descriptions of step S605 in the method 600.

S709: The UE determines whether to activate the security context.

For a specific implementation, refer to the related descriptions of step S606 in the method 600.

S710: The UE performs a first operation based on an operation instruction type.

For example, when integrity verification and/or decryption succeed/succeeds, the UE performs the first operation based on the operation instruction type. For a specific implementation, refer to the related descriptions of steps S607 and S608.

S711: The UE sends a NAS SMP message to the AMF, and correspondingly, the AMF receives the NAS SMP message from the UE.

For content of the NAS SMP message, explanations of the content, and a specific implementation, refer to the related descriptions of step S609 in the method 600.

S712: The AMF sends a registration accept message to the UE, and correspondingly, the UE receives the registration accept message from the AMF.

The registration accept message indicates that a registration request of the UE is accepted. Optionally, the registration accept message includes the operation instruction type. It should be noted that when the operation instruction type indicates an inventory operation, the AMF does not perform steps S708 to S711. In this case, the operation instruction type is carried in the registration accept message. This is because integrity security protection and/or confidentiality security protection may not be performed for the inventory operation, and therefore the NAS SMC procedure does not need to be performed. In this case, steps S705 to S707 may either not be performed. In other words, after performing step S704, the AMF may perform step S713 when determining that authentication of the UE succeeds, with a UE ID carried in a service response message.

Optionally, the AMF determines whether to perform integrity verification and/or decryption on a registration complete message. For a specific implementation, refer to the related descriptions of step S408c in the method 400.

Further, optionally, the AMF performs integrity verification and/or decryption on the registration complete message based on the security context. For a specific implementation, refer to the related descriptions of step S408d in the method 400.

S713: The AMF sends the service response message to the AF, and correspondingly, the AF receives the service response message from the UE.

For a specific implementation, refer to the related descriptions of step S409 in the method 400.

S714: The UE and the AMF determine whether to delete the security context.

For a specific implementation, refer to the related descriptions of the method 600.

According to the solution provided in this application, the security context is activated to ensure secure communication between the UE and the AMF, and service execution is performed in the NAS SMC procedure to reduce a quantity of information exchanges between the UE and the AMF, reduce the processing complexity of the entire service procedure, reduce the processing delay, and enable the AF to effectively and quickly obtain a service. Logic of determining whether to generate and/or activate the security context and whether to delete the security context is added, to reduce computational and storage overheads of the UE and the AMF, avoid occupation of a limited storage resource of the UE, reduce power consumption of the UE, ensure that the network can provide services for more terminal devices, avoid network congestion, and the like. In addition, air interface overheads between the UE and the AMF are reduced, for example, an interaction failure that may be caused by malicious tampering of an attacker when the UE reports the security capability of the UE to the AMF through an air interface is avoided, so that network security is ensured.

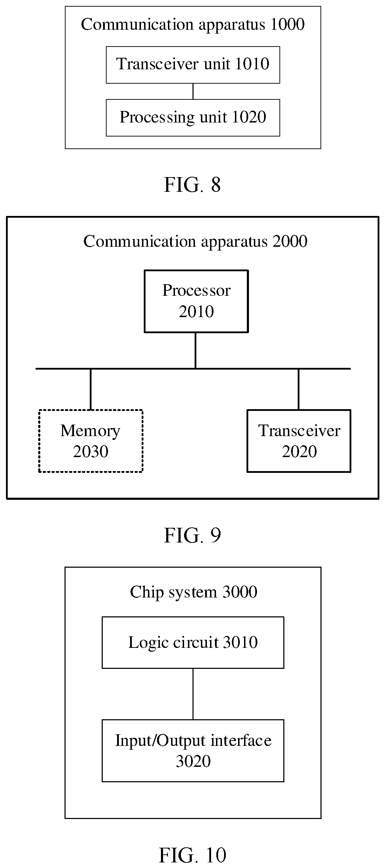

The foregoing describes in detail embodiments on a communication method side of this application with reference to FIG. 1 to FIG. 7. The following describes in detail embodiments on a communication apparatus side of this application with reference to FIG. 8 to FIG. 10. It should be understood that descriptions of the apparatus embodiments correspond to the descriptions of the method embodiments, and therefore for a part that is not described in detail, refer to the foregoing method embodiments.

FIG. 8 is a diagram of a structure of a communication apparatus 1000 according to an embodiment of this application. As shown in FIG. 8, the apparatus 1000 may include a transceiver unit 1010 and a processing unit 1020. The transceiver unit 1010 may communicate with the outside. The processing unit 1020 is configured to process data. The transceiver unit 1010 may also be referred to as a communication interface or a transceiver unit.

In a possible design, the apparatus 1000 may implement steps or procedures performed by the terminal device in the foregoing method embodiments. The processing unit 1020 is configured to perform a processing-related operation of the terminal device in the foregoing method embodiments. The transceiver unit 1010 is configured to perform a receiving/sendingrelated operation of the terminal device in the foregoing method embodiments.

In another possible design, the apparatus 1000 may implement steps or procedures performed by the core network element in the foregoing method embodiments. The transceiver unit 1010 is configured to perform a receiving/sending-related operation of the network device in the foregoing method embodiments. The processing unit 1020 is configured to perform a processing-related operation of the network device in the foregoing method embodiments.

In still another possible design, the apparatus 1000 may implement steps or procedures performed by the operation requester in the foregoing method embodiments. The transceiver unit 1010 is configured to perform a receiving/sending-related operation of the operation requester in the foregoing method embodiments. The processing unit 1020 is configured to perform a processing-related operation of the operation requester in the foregoing method embodiments.

It should be understood that the apparatus 1000 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described functions. In an optional example, a person skilled in the art can understand that the apparatus 1000 may be specifically a transmit end in the foregoing embodiments, and may be configured to perform procedures and/or steps corresponding to the transmit end in the foregoing method embodiments; or the apparatus 1000 may be specifically a receive end in the foregoing embodiments, and may be configured to perform procedures and/or steps corresponding to the receive end in the foregoing method embodiments. To avoid repetition, details are not described herein again.

The apparatus 1000 in the foregoing solutions has a function of implementing the corresponding steps performed by the transmit end in the foregoing methods. Alternatively, the apparatus 1000 in the foregoing solutions has a function of implementing the corresponding steps performed by the receive end in the foregoing methods. The functions may be implemented by hardware, or may be implemented by hardware executing corresponding software. The hardware or the software includes one or more modules corresponding to the foregoing functions. For example, the transceiver unit may alternatively be a transceiver (for example, a sending unit in the transceiver unit may alternatively be a transmitter, and a receiving unit in the transceiver unit may alternatively be a receiver), and another unit, for example, the processing unit, may alternatively be a processor, to separately perform receiving-sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the communication apparatus may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 9 is a diagram of a structure of a communication apparatus 2000 according to an embodiment of this application. As shown in FIG. 9, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030, the processor 2010, and the transceiver 2020 communicate with each other through the internal connection path. The memory 2030 is configured to store the instructions. The processor 2010 may execute the instructions stored in the memory 2030.

In a possible implementation, the apparatus 2000 is configured to implement procedures and steps corresponding to the terminal device in the foregoing method embodiments.

In another possible implementation, the apparatus 2000 is configured to implement procedures and steps corresponding to the core network element in the foregoing method embodiments.

In still another possible implementation, the apparatus 2000 is configured to implement procedures and steps corresponding to the operation requester in the foregoing method embodiments.

It should be understood that the apparatus 2000 may be specifically a transmit end or a receive end in the foregoing embodiments, or may be a chip or a chip system. Correspondingly, the transceiver 2020 may be a transceiver circuit of the chip. This is not limited herein. Specifically, the apparatus 2000 may be configured to perform steps and/or procedures corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform the steps and/or procedures in the foregoing method embodiments corresponding to the transmit end or the receive end.

In an implementation process, the steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory of the systems and methods described in this specification includes but is not limited to these and any other proper type of memory.

FIG. 10 is a diagram of a structure of a chip system 3000 according to an embodiment of this application. As shown in FIG. 10, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by the terminal device in the foregoing method embodiments.

In another solution, the chip system 3000 is configured to implement operations performed by the core network element in the foregoing method embodiments.

In a solution, the chip system 3000 is configured to implement operations performed by the operation requester in the foregoing method embodiments.

An embodiment of this application further provides a computer-readable storage medium. The computer-readable storage medium stores computer instructions for implementing a method performed by a device in the foregoing method embodiments.

An embodiment of this application further provides a computer program product, including instructions. When the instructions are executed by a computer, a method performed by a device in the foregoing method embodiments is implemented.

An embodiment of this application further provides a communication system, including, for example, one or more of the foregoing terminal device or network device.

For explanations and beneficial effects of related content of any one of the apparatuses provided above, refer to the corresponding method embodiments provided above. Details are not described herein again.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending a registration request message, wherein the registration request message is used to request registration with a network, and the registration request message comprises an identifier of a terminal device;
activating a security context when authentication of the network by the terminal device succeeds, wherein the security context is used to protect secure communication between the terminal device and a network element;
performing integrity verification on a first message from the network element based on the security context, wherein the first message is used to request to perform a first operation on the terminal device; and
performing the first operation when the integrity verification succeeds.

2. The method according to claim 1, wherein activating the security context comprises:
skipping a NAS SMC procedure based on a capability of the terminal device and/or a type of the terminal device, and activating the security context.

3. The method according to claim 2, wherein skipping the NAS SMC procedure based on the type of the terminal device, and activating the security context comprises:
skipping the NAS SMC procedure when the type of the terminal device is a passive tag, and activating the security context.

4. The method according to claim 2 or 3, wherein skipping the NAS SMC procedure based on the capability of the terminal device, and activating the security context comprises:
skipping the NAS SMC procedure when the capability of the terminal device indicates that the terminal device supports one confidentiality protection algorithm and/or one integrity protection algorithm, and activating the security context.

5. The method according to any one of claims 1 to 4, wherein activating the security context comprises:
activating the security context in response to an EAP-success message and/or an authentication request message received by the terminal device in an authentication procedure.

6. The method according to any one of claims 1 to 5, wherein activating the security context comprises:
activating the security context based on a locally configured security algorithm, wherein the security algorithm comprises one integrity security algorithm and/or one confidentiality security algorithm.

7. The method according to any one of claims 1 to 6, wherein activating the security context comprises:
activating the security context based on a received registration accept message, wherein the registration accept message is used to accept a registration request of the terminal device.

8. The method according to claim 7, wherein activating the security context based on the received registration accept message comprises:
activating the security context in response to the registration accept message received by the terminal device; and/or
activating the security context based on a security algorithm indicated by a security algorithm identifier carried in the registration accept message, wherein the security algorithm comprises an integrity security algorithm and/or a confidentiality security algorithm.

9. The method according to any one of claims 1 to 8, wherein activating the security context comprises:
activating the security context based on an operation instruction type of the first operation.

10. The method according to claim 9, wherein activating the security context based on the operation instruction type of the first operation comprises one or more of the following:
activating the security context when the operation instruction type indicates a read operation;
activating the security context when the operation instruction type indicates a write operation; and
activating the security context when the operation instruction type indicates a deactivation operation.

11. The method according to any one of claims 1 to 10, wherein the method further comprises:
determining, based on the operation instruction type of the first operation, whether to perform decryption on the first message.

12. The method according to claim 11, wherein determining, based on the operation instruction type, whether to perform decryption on the first message comprises one or more of the following:
when the operation instruction type indicates an inventory operation, determining not to perform decryption on the first message;
when the operation instruction type indicates a read operation, determining not to perform decryption on the first message;
when the operation instruction type indicates a deactivation operation, determining not to perform decryption on the first message; and
when the operation instruction type indicates a write operation, determining to perform decryption on a first data ciphertext carried in the first message, wherein the first data ciphertext is obtained by encrypting first data, and the first data is data to be written into a storage area of the terminal device.

13. The method according to any one of claims 1 to 12, wherein the method further comprises:
determining, based on the operation instruction type of the first operation, whether to perform security protection on a second message, wherein the security protection comprises integrity security protection and/or confidentiality security protection, and the second message indicates whether the first operation is successfully performed; and
sending the second message to the network element.

14. The method according to claim 13, wherein determining, based on the operation instruction type, whether to perform security protection on the second message comprises one or more of the following:
when the operation instruction type indicates an inventory operation, determining not to perform integrity security protection on the second message;
when the operation instruction type indicates a read operation, determining to perform integrity security protection on the second message;
when the operation instruction type indicates a write operation, determining to perform integrity security protection on the second message; and
when the operation instruction type indicates a deactivation operation, determining to perform integrity security protection on the second message.

15. The method according to claim 13 or 14, wherein determining, based on the operation instruction type, whether to perform security protection on the second message comprises one or more of the following:
when the operation instruction type indicates an inventory operation, determining not to perform confidentiality security protection on the second message;
when the operation instruction type indicates a read operation, determining to perform confidentiality security protection on second data to obtain a second data ciphertext, wherein the second data is data in the storage area of the terminal device or data collected by the terminal device, and the second data ciphertext is carried in the second message;
when the operation instruction type indicates a write operation, determining not to perform confidentiality security protection on the second message; and
when the operation instruction type indicates a deactivation operation, determining not to perform confidentiality security protection on the second message.

16. The method according to any one of claims 1 to 15, wherein the method further comprises:
determining, based on the type of the terminal device, whether to delete the security context, specifically comprising one or more of the following:
when the type of the terminal device is an active tag or a semi-passive tag, determining not to delete the security context; and
when the type of the terminal device is a passive tag, determining to delete the security context.

17. The method according to any one of claims 13 to 16, wherein
the first message is the registration accept message, and the second message is a registration complete message.

18. A communication method, comprising:
receiving a registration request message from a terminal device, wherein the registration request message is used to request registration with a network, and the registration request message comprises an identifier of the terminal device;
activating a security context when authentication of the terminal device succeeds, wherein the security context is used to protect secure communication between the terminal device and a network element;
performing integrity security protection on a first message based on the security context, wherein the first message is used to request to perform a first operation on the terminal device; and
sending the first message to the terminal device.

19. The method according to claim 18, wherein a security capability of the terminal device is used to determine a security algorithm in the security context, and the method further comprises:
obtaining the security capability of the terminal device from an operation requester;
obtaining the security capability of the terminal device from the terminal device; or
obtaining the security capability of the terminal device from a unified data management network element.

20. The method according to claim 18 or 19, wherein activating the security context comprises:
skipping a NAS SMC procedure based on a capability of the terminal device and/or a type of the terminal device, and activating the security context.

21. The method according to claim 20, wherein skipping the NAS SMC procedure based on the type of the terminal device, and activating the security context comprises:
skipping the NAS SMC procedure when the type of the terminal device is a passive tag, and activating the security context.

22. The method according to claim 20 or 21, wherein skipping the NAS SMC procedure based on the capability of the terminal device, and activating the security context comprises:
skipping the NAS SMC procedure when the capability of the terminal device indicates that the terminal device supports one confidentiality protection algorithm and/or one integrity protection algorithm, and activating the security context.

23. The method according to any one of claims 18 to 22, wherein activating the security context comprises:
activating the security context based on a locally configured security algorithm, wherein the security algorithm comprises one integrity security algorithm and/or one confidentiality security algorithm.

24. The method according to any one of claims 20 to 23, wherein activating the security context comprises:
activating the security context based on an operation instruction type of the first operation.

25. The method according to claim 24, wherein activating the security context based on the operation instruction type of the first operation comprises one or more of the following:
activating the security context when the operation instruction type indicates a read operation;
activating the security context when the operation instruction type indicates a write operation; and
activating the security context when the operation instruction type indicates a deactivation operation.

26. The method according to any one of claims 18 to 25, wherein the method further comprises:
determining, based on the operation instruction type of the first operation, whether to perform confidentiality security protection on the first message.

27. The method according to claim 26, wherein determining, based on the operation instruction type of the first operation, whether to perform confidentiality security protection on the first message comprises one or more of the following:
when the operation instruction type indicates an inventory operation, determining not to perform confidentiality security protection on the first message;
when the operation instruction type indicates a read operation, determining not to perform confidentiality security protection on the first message;
when the operation instruction type indicates a deactivation operation, determining not to perform confidentiality security protection on the first message; and
when the operation instruction type indicates a write operation, determining to perform confidentiality security protection on first data to obtain a first data ciphertext, wherein the first data is data to be written into a storage area of the terminal device, and the first message comprises the first data ciphertext.

28. The method according to any one of claims 18 to 27, wherein the method further comprises:
receiving a second message from the terminal device, wherein the second message indicates whether the first operation is successfully performed; and
determining, based on the operation instruction type of the first operation, whether to perform integrity verification and/or decryption on the second message.

29. The method according to claim 28, wherein determining, based on the operation instruction type of the first operation, whether to perform integrity verification on the second message comprises one or more of the following:
when the operation instruction type indicates a read operation, determining to perform integrity verification on the second message;
when the operation instruction type indicates a write operation, determining to perform integrity verification on the second message;
when the operation instruction type indicates a deactivation operation, determining to perform integrity verification on the second message; and
when the operation instruction type indicates an inventory operation, determining not to perform integrity verification on the second message.

30. The method according to claim 28 or 29, wherein determining, based on the operation instruction type of the first operation, whether to perform decryption on the second message comprises one or more of the following:
when the operation instruction type indicates a read operation, determining to perform decryption on a second data ciphertext carried in the second message, to obtain second data, wherein the second data is data in the storage area of the terminal device or data collected by the terminal device;
when the operation instruction type indicates a write operation, determining not to perform decryption on the second message;
when the operation instruction type indicates a deactivation operation, determining not to perform decryption on the second message; and
when the operation instruction type indicates an inventory operation, determining not to perform decryption on the second message.

31. The method according to any one of claims 18 to 30, wherein the method further comprises:
determining, based on the type of the terminal device, whether to delete the security context, specifically comprising one or more of the following:
when the type of the terminal device is an active tag or a semi-passive tag, determining not to delete the security context; and
when the type of the terminal device is a passive tag, determining to delete the security context.

32. The method according to any one of claims 18 to 31, wherein the method further comprises:
receiving a service request message from the operation requester, wherein the service request message is used to request to perform the first operation on the terminal device; and
sending a service response message to the operation requester based on the operation instruction type of the first operation, comprising one or more of the following:
when the operation instruction type indicates an inventory operation, the service response message comprises the identifier of the terminal device;
when the operation instruction type indicates a read operation, the service response message comprises the identifier of the terminal device and the second data, wherein the second data is data read from the storage area of the terminal device or collected by the terminal device;
when the operation instruction type indicates a write operation, the service response message comprises the identifier of the terminal device; and
when the operation instruction type indicates a deactivation operation, the service response message comprises the identifier of the terminal device.

33. A communication method, comprising:
sending a service request message to a network element, wherein the service request message is used to request to perform a first operation on a terminal device, and the service request message comprises a security capability of the terminal device; and
receiving a service response message from the network element, wherein the service response message indicates whether the first operation is successfully performed.

34. The method according to claim 33, wherein the service request message further comprises one or more of an identifier of the terminal device, an operation instruction type, or first data, wherein
the operation instruction type indicates the first operation, the security capability of the terminal device indicates one or more integrity security protection algorithms and/or confidentiality security protection algorithms supported by the terminal device, and the first data is data to be written into a storage area of the terminal device.

35. The method according to claim 34, wherein
when the operation instruction type indicates an inventory operation, the service response message comprises the identifier of the terminal device;
when the operation instruction type indicates a read operation, the service response message comprises the identifier of the terminal device and second data, wherein the second data is data read from the storage area of the terminal device or collected by the terminal device;
when the operation instruction type indicates a write operation, the service response message comprises the identifier of the terminal device; or
when the operation instruction type indicates a deactivation operation, the service response message comprises the identifier of the terminal device.

36. The method according to any one of claims 33 to 35, wherein
when authentication of the terminal device by the network element fails, the service response message indicates that the first operation fails to be performed.

37. A communication method, comprising:
sending a registration request message, wherein the registration request message is used to request registration with a network, and the registration request message comprises an identifier of a terminal device;
receiving a first message from a network element, wherein the first message is used to request to perform a first operation on the terminal device; and
determining, based on an operation instruction type of the first operation, whether to activate a security context, wherein the security context is used to protect secure communication between the terminal device and the network element.

38. The method according to claim 37, wherein the method further comprises:
when it is determined to activate the security context, performing integrity verification and/or decryption on the first message based on the security context; and
when integrity verification and/or decryption succeed/succeeds, performing the first operation based on the operation instruction type.

39. The method according to claim 37 or 38, wherein the method further comprises:
when it is determined not to activate the security context, performing no integrity verification and/or no decryption on the first message; and
performing the first operation based on the operation instruction type, or discarding, by the terminal device, the first message.

40. The method according to any one of claims 37 to 39, wherein the method further comprises:
after the security context is activated, determining whether to perform integrity verification and/or decryption on the first message.

41. The method according to claim 40, wherein determining whether to perform integrity verification and/or decryption on the first message comprises:
determining, based on the operation instruction type of the first operation, whether to perform integrity verification and/or decryption on the first message.

42. The method according to claim 41, wherein determining, based on the operation instruction type of the first operation, whether to perform integrity verification on the first message comprises one or more of the following:
when the operation instruction type is an inventory operation, determining not to perform integrity verification on the first message;
when the operation instruction type is a read operation, determining to perform integrity verification on the first message;
when the operation instruction type is a write operation, determining to perform integrity verification on the first message; and
when the operation instruction type is a deactivation operation, determining to perform integrity verification on the first message.

43. The method according to claim 41 or 42, wherein determining, based on the operation instruction type of the first operation, whether to perform decryption on the first message comprises one or more of the following:
when the operation instruction type is an inventory operation, determining not to perform decryption on the first message;
when the operation instruction type is a read operation, determining not to perform decryption on the first message;
when the operation instruction type is a write operation, determining to perform decryption on a first data ciphertext carried in the first message, to obtain first data, wherein the first data is data to be written into a storage area of the terminal device; and
when the operation instruction type is a deactivation operation, determining not to perform decryption on the first message.

44. The method according to any one of claims 37 to 43, wherein determining, based on the operation instruction type of the first operation, whether to activate the security context comprises:
determining, based on the operation instruction type, to activate a security context corresponding to integrity security protection and/or a security context corresponding to confidentiality security protection.

45. The method according to any one of claims 37 to 44, wherein the method further comprises:
sending a second message to the network element, wherein the second message indicates whether the first operation is successfully performed, wherein
when the operation instruction type is a read operation, the second message comprises a second data ciphertext, the second data ciphertext is obtained by encrypting second data, and the second data is data read from the storage area of the terminal device or collected by the terminal device.

46. The method according to claim 45, wherein before sending the second message to the network element, the method further comprises:
determining, based on the operation instruction type, whether to perform security protection on the second message, wherein the security protection comprises confidentiality security protection and/or integrity security protection.

47. The method according to claim 46, wherein determining, based on the operation instruction type, whether to perform security protection on the second message comprises one or more of the following:
when the operation instruction type is an inventory operation, determining not to perform integrity security protection on the second message;
when the operation instruction type is a read operation, determining to perform integrity security protection on the second message;
when the operation instruction type is a write operation, determining to perform integrity security protection on the second message; and
when the operation instruction type is a deactivation operation, determining to perform integrity security protection on the second message.

48. The method according to claim 46 or 47, wherein determining, based on the operation instruction type, whether to perform security protection on the second message comprises one or more of the following:
when the operation instruction type is an inventory operation, determining not to perform confidentiality security protection on the second message;
when the operation instruction type is a read operation, determining to perform confidentiality security protection on the second message;
when the operation instruction type is a write operation, determining not to perform confidentiality security protection on the second message; and
when the operation instruction type is a deactivation operation, determining not to perform confidentiality security protection on the second message.

49. A communication method, comprising:
receiving a registration request message from a terminal device, wherein the registration request message is used to request registration with a network, and the registration request message comprises an identifier of the terminal device;
determining, based on an operation instruction type of a first operation, whether to activate a security context, wherein the security context is used to protect secure communication between the terminal device and a network element; and
when it is determined to activate the security context, performing security protection on a to-be-sent first message based on the security context, wherein the first message is used to request to perform the first operation on the terminal device; and sending the first message to the terminal device; or
when it is determined not to activate the security context, sending the first message to the terminal device.

50. The method according to claim 49, wherein the method further comprises:
receiving a service request message from an operation requester, wherein the service request message is used to request to perform the first operation on the terminal device; and
sending a service response message to the operation requester, wherein the service response message indicates whether the first operation is successfully performed.

51. The method according to claim 49 or 50, wherein the method further comprises:
after the security context is activated, determining whether to perform security protection on the first message.

52. The method according to any one of claims 49 to 51, wherein determining, based on the operation instruction type of the first operation, whether to activate the security context comprises:
determining, based on the operation instruction type, to activate a security context corresponding to integrity security protection and/or a security context corresponding to confidentiality security protection.

53. The method according to any one of claims 49 to 52, wherein a security capability of the terminal device is used to determine a security algorithm in the security context, and the method further comprises:
obtaining the security capability of the terminal device from the operation requester;
obtaining the security capability of the terminal device from the terminal device; or
obtaining the security capability of the terminal device from a unified data management network element.

54. The method according to any one of claims 51 to 53, wherein determining whether to perform security protection on the first message comprises:
determining, based on the operation instruction type of the first operation, whether to perform security protection on the first message.

55. The method according to claim 54, wherein determining, based on the operation instruction type of the first operation, whether to perform security protection on the first message comprises one or more of the following:
when the operation instruction type is an inventory operation, determining not to perform integrity security protection on the first message;
when the operation instruction type is a read operation, determining to perform integrity security protection on the first message;
when the operation instruction type is a write operation, determining to perform integrity security protection on the first message; and
when the operation instruction type is a deactivation operation, determining to perform integrity security protection on the first message.

56. The method according to claim 54 or 55, wherein determining, based on the operation instruction type of the first operation, whether to perform security protection on the first message comprises one or more of the following:
when the operation instruction type is an inventory operation, determining not to perform confidentiality security protection on the first message;
when the operation instruction type is a read operation, determining not to perform confidentiality security protection on the first message;
when the operation instruction type is a write operation, determining to perform confidentiality security protection on first data to obtain a first data ciphertext, wherein the first data ciphertext is carried in the first message, and the first data is data to be written into a storage area of the terminal device; and
when the operation instruction type is a deactivation operation, determining not to perform confidentiality security protection on the first message.

57. The method according to any one of claims 49 to 56, wherein before sending the first message to the terminal device, the method further comprises:
determining, based on a type of the terminal device, whether to send the first message to the terminal device; and
when the type of the terminal device is a tag type, determining to send the first message to the terminal device.

58. The method according to any one of claims 49 to 57, wherein before sending the first message to the terminal device, the method further comprises:
determining, based on a service type corresponding to the first operation, whether to send the first message to the terminal device; and
when the service type corresponding to the first operation is a tag service, determining to send the first message to the terminal device.

59. The method according to any one of claims 50 to 58, wherein before sending the service response message to the operation requester, the method further comprises:
receiving a second message from the terminal device, wherein the second message indicates whether the first operation is successfully performed, wherein
when the operation instruction type is a read operation, the second message comprises a second data ciphertext, the second data ciphertext is obtained by encrypting second data, and the second data is data read from the storage area of the terminal device or collected by the terminal device.

60. The method according to claim 59, wherein the method further comprises:
determining, based on the operation instruction type, whether to perform integrity verification and/or decryption on the second message.

61. The method according to claim 60, wherein determining, based on the operation instruction type, whether to perform integrity verification and/or decryption on the second message specifically comprises one or more of the following:
when the operation instruction type is an inventory operation, determining not to perform integrity verification on the second message;
when the operation instruction type is a read operation, determining to perform integrity verification on the second message;
when the operation instruction type is a write operation, determining to perform integrity verification on the second message; and
when the operation instruction type is a deactivation operation, determining to perform integrity verification on the second message.

62. The method according to claim 60 or 61, wherein determining, based on the operation instruction type, whether to perform integrity verification and/or decryption on the second message specifically comprises one or more of the following:
when the operation instruction type is a read operation, determining to perform decryption on the second data ciphertext to obtain the second data; and
when the operation instruction type is an inventory operation, a write operation, or a deactivation operation, determining not to perform decryption on the second message.

63. The method according to any one of claims 50 to 62, wherein sending the service response message to the operation requester comprises:
sending the service response message to the operation requester based on the operation instruction type, specifically comprising one or more of the following:
when the operation instruction type indicates an inventory operation, and integrity verification of the second message succeeds, the service response message indicates that the first operation is successfully performed, and the service response message comprises the identifier of the terminal device;
when the operation instruction type indicates a read operation, and integrity verification of the second message succeeds, the service response message indicates that the first operation is successfully performed, and the service response message comprises the identifier of the terminal device and the second data, wherein the second data is obtained by performing decryption on the second data ciphertext, and the second data is the data read from the storage area of the terminal device or collected by the terminal device;
when the operation instruction type indicates a write operation, and integrity verification of the second message succeeds, the service response message indicates that the first operation is successfully performed, and the service response message comprises the identifier of the terminal device; and
when the operation instruction type indicates a deactivation operation, and integrity verification of the second message succeeds, the service response message indicates that the first operation is successfully performed, and the service response message comprises the identifier of the terminal device.

64. The method according to any one of claims 50 to 63, wherein sending the service response message to the operation requester comprises:
sending the service response message to the operation requester based on the operation instruction type, specifically comprising one or more of the following:
when the operation instruction type indicates a read operation, and integrity verification of the second message fails and/or decryption of the second message fails, the service response message indicates that the first operation fails to be performed;
when the operation instruction type indicates a write operation, and integrity verification of the second message fails, the service response message indicates that the first operation fails to be performed;
when the operation instruction type indicates a deactivation operation, and integrity verification of the second message fails, the service response message indicates that the first operation fails to be performed; and
when the operation instruction type indicates an inventory operation, and integrity verification of the second message fails, the service response message indicates that the first operation fails to be performed.

65. The method according to any one of claims 50 to 64, wherein the method further comprises:
when authentication of the terminal device fails, the service response message indicates that the first operation fails to be performed.

66. The method according to any one of claims 37 to 35, wherein determining, based on the operation instruction type of the first operation, whether to activate the security context comprises one or more of the following:
when the operation instruction type indicates an inventory operation, determining not to activate the security context;
when the operation instruction type indicates a read operation, determining to activate the security context;
when the operation instruction type indicates a write operation, determining to activate the security context; and
when the operation instruction type indicates a deactivation operation, determining to activate the security context.

67. The method according to any one of claims 37 to 66, wherein the method further comprises:
determining, based on the type of the terminal device, whether to delete the security context, specifically comprising one or more of the following:
when the type of the terminal device is an active tag or a semi-passive tag, determining not to delete the security context; and
when the type of the terminal device is a passive tag, determining to delete the security context.

68. The method according to any one of claims 37 to 67, wherein the first message is a registration accept message, and the second message is a registration complete message; or the first message is a NAS SMC message, and the second message is a NAS SMP message.

69. A communication method, comprising:
sending a registration request message to a network element, wherein the registration request message is used to request registration with a network, and the registration request message comprises an identifier of a terminal device;
receiving a first message from the network element, wherein the first message indicates to perform a first operation on the terminal device, and the first message is a NAS SMC message;
activating a security context based on the NAS SMC message, wherein the security context is used to protect secure communication between the terminal device and the network element;
performing integrity verification and/or decryption on the first message from the network element based on the security context; and
performing the first operation after the integrity verification and/or the decryption.

70. The method according to claim 69, wherein before performing integrity verification and/or decryption on the first message from the network element based on the security context, the method further comprises:
determining, based on an operation instruction type of the first operation, whether to perform integrity verification and/or decryption on the first message.

71. The method according to claim 70, wherein determining, based on the operation instruction type of the first operation, whether to perform integrity verification on the first message comprises one or more of the following:
when the operation instruction type indicates an inventory operation, determining not to perform integrity verification on the first message;
when the operation instruction type indicates a read operation, determining to perform integrity verification on the first message;
when the operation instruction type indicates a deactivation operation, determining to perform integrity verification on the first message; and
when the operation instruction type indicates a write operation, determining to perform integrity verification on the first message.

72. The method according to claim 70 or 71, wherein determining, based on the operation instruction type of the first operation, whether to perform decryption on the first message comprises one or more of the following:
when the operation instruction type indicates an inventory operation, determining not to perform decryption on the first message;
when the operation instruction type indicates a read operation, determining not to perform decryption on the first message;
when the operation instruction type indicates a deactivation operation, determining not to perform decryption on the first message; and
when the operation instruction type indicates a write operation, determining to perform decryption on a first data ciphertext carried in the first message, to obtain first data, wherein the first data is data to be written into a storage area of the terminal device.

73. The method according to any one of claims 69 to 72, wherein the method further comprises:
determining, based on the operation instruction type of the first operation, whether to perform security protection on a second message, wherein the security protection comprises integrity security protection and/or confidentiality security protection, the second message indicates whether the first operation is successfully performed, and the second message is a NAS SMP message; and
sending, by the terminal device, the second message to the network element.

74. The method according to claim 73, wherein determining, based on the operation instruction type, whether to perform security protection on the second message comprises one or more of the following:
when the operation instruction type indicates an inventory operation, determining not to perform integrity security protection on the second message;
when the operation instruction type indicates a read operation, determining to perform integrity security protection on the second message;
when the operation instruction type indicates a write operation, determining to perform integrity security protection on the second message; and
when the operation instruction type indicates a deactivation operation, determining to perform integrity security protection on the second message.

75. The method according to claim 73 or 74, wherein determining, based on the operation instruction type, whether to perform security protection on the second message comprises one or more of the following:
when the operation instruction type indicates an inventory operation, determining not to perform confidentiality security protection on the second message;
when the operation instruction type indicates a read operation, determining to perform confidentiality security protection on second data to obtain a second data ciphertext, wherein the second data is data in the storage area of the terminal device or data collected by the terminal device, and the second data ciphertext is carried in the second message;
when the operation instruction type indicates a write operation, determining not to perform confidentiality security protection on the second message; and
when the operation instruction type indicates a deactivation operation, determining not to perform confidentiality security protection on the second message.

76. A communication method, comprising:
receiving a registration request message from a terminal device, wherein the registration request message is used to request registration with a network, and the registration request message comprises an identifier of the terminal device;
activating a security context, wherein the security context is used to protect secure communication between the terminal device and a network element;
performing security protection on a first message based on the security context, wherein the security protection comprises integrity security protection and/or confidentiality security protection, the first message indicates to perform a first operation on the terminal device, and the first message is a NAS SMC message; and
sending the first message on which security protection is performed to the terminal device.

77. The method according to claim 76, wherein a security capability of the terminal device is used to determine a security algorithm in the security context, and the method further comprises:
obtaining the security capability of the terminal device from an operation requester;
obtaining the security capability of the terminal device from the terminal device; or
obtaining the security capability of the terminal device from a unified data management network element.

78. The method according to claim 76 or 77, wherein before performing security protection on the first message based on the security context, the method further comprises:
determining, based on an operation instruction type of the first operation, whether to perform security protection on the first message.

79. The method according to claim 78, wherein determining, based on the operation instruction type of the first operation, whether to perform security protection on the first message comprises one or more of the following:
when the operation instruction type indicates an inventory operation, determining not to perform integrity security protection on the first message;
when the operation instruction type indicates a read operation, determining to perform integrity security protection on the first message;
when the operation instruction type indicates a deactivation operation, determining to perform integrity security protection on the first message; and
when the operation instruction type indicates a write operation, determining to perform integrity security protection on the first message.

80. The method according to claim 78 or 79, wherein determining, based on the operation instruction type of the first operation, whether to perform security protection on the first message comprises one or more of the following:
when the operation instruction type indicates an inventory operation, determining not to perform confidentiality security protection on the first message;
when the operation instruction type indicates a read operation, determining not to perform confidentiality security protection on the first message;
when the operation instruction type indicates a deactivation operation, determining not to perform confidentiality security protection on the first message; and
when the operation instruction type indicates a write operation, determining to perform confidentiality security protection on first data to obtain a first data ciphertext, wherein the first data is data to be written into a storage area of the terminal device, and the first data ciphertext is carried in the first message.

81. The method according to any one of claims 76 to 80, wherein the method further comprises:
receiving a second message from the terminal device, wherein the second message indicates whether the first operation is successfully performed, and the second message is a NAS SMP message.

82. The method according to claim 81, wherein the method further comprises:
determining, based on the operation instruction type of the first operation, whether to perform integrity verification and/or decryption on the second message.

83. The method according to claim 82, wherein determining, based on the operation instruction type of the first operation, whether to perform integrity verification on the second message comprises one or more of the following:
when the operation instruction type indicates an inventory operation, determining not to perform integrity verification on the second message;
when the operation instruction type indicates a read operation, determining to perform integrity verification on the second message;
when the operation instruction type indicates a deactivation operation, determining to perform integrity verification on the second message; and
when the operation instruction type indicates a write operation, determining to perform integrity verification on the second message.

84. The method according to claim 82 or 83, wherein determining, based on the operation instruction type of the first operation, whether to perform decryption on the second message comprises one or more of the following:
when the operation instruction type indicates a read operation, determining to perform decryption on a second data ciphertext carried in the second message, to obtain second data, wherein the second data is data in the storage area of the terminal device or data collected by the terminal device;
when the operation instruction type indicates a write operation, determining not to perform decryption on the second message;
when the operation instruction type indicates a deactivation operation, determining not to perform decryption on the second message; and
when the operation instruction type indicates an inventory operation, determining not to perform decryption on the second message.

85. The method according to any one of claims 76 to 84, wherein the method further comprises:
receiving a service request message from the operation requester, wherein the service request message is used to request to perform the first operation on the terminal device; and
sending a service response message to the operation requester based on the operation instruction type of the first operation, comprising one or more of the following:
when the operation instruction type indicates an inventory operation, the service response message comprises the identifier of the terminal device;
when the operation instruction type indicates a read operation, the service response message comprises the identifier of the terminal device and the second data, wherein the second data is data read from the storage area of the terminal device or collected by the terminal device;
when the operation instruction type indicates a write operation, the service response message comprises the identifier of the terminal device; and
when the operation instruction type indicates a deactivation operation, the service response message comprises the identifier of the terminal device.

86. The method according to any one of claims 69 to 85, wherein activating the security context based on the NAS SMC message comprises:
activating the security context based on the operation instruction type of the first operation.

87. The method according to claim 86, wherein before activating the security context based on the operation instruction type of the first operation, the method further comprises:
determining, based on the operation instruction type of the first operation, whether to activate the security context.

88. The method according to claim 87, wherein determining, based on the operation instruction type of the first operation, whether to activate the security context comprises:
when the operation instruction type indicates an inventory operation, determining not to activate the security context;
when the operation instruction type indicates a read operation, determining to activate the security context;
when the operation instruction type indicates a write operation, determining to activate the security context; and
when the operation instruction type indicates a deactivation operation, determining to activate the security context.

89. The method according to any one of claims 86 to 88, wherein activating the security context based on the operation instruction type of the first operation comprises:
when the operation instruction type indicates an inventory operation, a read operation, or a deactivation operation, activating a security context corresponding to integrity security protection; or
when the operation instruction type indicates a write operation, activating the security context corresponding to integrity security protection and a security context corresponding to confidentiality security protection.

90. The method according to any one of claims 69 to 89, wherein the method further comprises:
activating the security context based on a type of the terminal device.

91. The method according to claim 90, wherein before activating the security context based on the type of the terminal device, the method further comprises:
determining, based on the type of the terminal device, whether to activate the security context.

92. The method according to claim 91, wherein determining, based on the type of the terminal device, whether to activate the security context comprises:
when the type of the terminal device is an active tag or a semi-passive tag, determining to activate the security context; or
when the type of the terminal device is a passive tag, activating the security context based on the operation instruction type of the first operation.

93. The method according to any one of claims 90 to 92, wherein activating the security context based on the type of the terminal device comprises:
when the type of the terminal device is an active tag or a semi-passive tag, activating the security context corresponding to integrity security protection and the security context corresponding to confidentiality security protection;
when the type of the terminal device is a passive tag, and the operation instruction type of the first operation indicates an inventory operation, a read operation, or a deactivation operation, activating the security context corresponding to integrity security protection; or
when the type of the terminal device is a passive tag, and the operation instruction type of the first operation indicates a write operation, activating the security context corresponding to integrity security protection and the security context corresponding to confidentiality security protection.

94. The method according to any one of claims 69 to 93, wherein the method further comprises:
determining, based on the type of the terminal device, whether to delete the security context, specifically comprising one or more of the following:
when the type of the terminal device is an active tag or a semi-passive tag, determining not to delete the security context; and
when the type of the terminal device is a passive tag, determining to delete the security context.

95. A communication system, comprising a network element and an operation requester, wherein the network element is configured to perform the method according to any one of claims 18 to 32, and the operation requester is configured to perform the method according to any one of claims 33 to 36.

96. The communication system according to claim 95, wherein the communication system further comprises a terminal device, and the terminal device is configured to perform the method according to any one of claims 1 to 17.

97. A communication system, comprising a network element, wherein the network element is configured to perform the method according to any one of claims 49 to 68.

98. The communication system according to claim 97, wherein the communication system further comprises a terminal device, and the terminal device is configured to perform the method according to any one of claims 37 to 48 and 66 to 68.

99. A communication system, comprising a network element, wherein the network element is configured to perform the method according to any one of claims 76 to 95.

100. The communication system according to claim 99, wherein the communication system further comprises a terminal device, and the terminal device is configured to perform the method according to any one of claims 69 to 75 and 86 to 94.

101. A communication apparatus, comprising one or more function modules, wherein the one or more function modules are configured to perform the method according to any one of claims 1 to 17, 37 to 48, 66 to 68, 69 to 75, and 86 to 94, the one or more function modules are configured to perform the method according to any one of claims 18 to 32, 49 to 68, and 76 to 95, or the one or more function modules are configured to perform the method according to any one of claims 33 to 36.

102. A communication apparatus, comprising a processor, configured to execute a computer program stored in a memory, so that the apparatus performs the method according to any one of claims 1 to 17, 37 to 48, 66 to 68, 69 to 75, and 86 to 94, the apparatus performs the method according to any one of claims 18 to 32, 49 to 68, and 76 to 95, or the apparatus performs the method according to any one of claims 33 to 36.

103. A computer-readable storage medium, wherein the computer-readable storage medium stores a computer program or instructions, and when the computer program or the instructions are run, the method according to any one of claims 1 to 94 is implemented.

104. A computer program product, wherein when the computer program product runs, the method according to any one of claims 1 to 94 is implemented.
